# EUROPEAN PATENT SPECIFICATION

(11) **EP 4 320 080 B1**
(45) Date of publication and mention of the grant of the patent: **18.11.2026**
(21) Application number: 22783729.1
(22) Date of filing: 06.04.2022
(51) Int. Cl.: C02F 1/58, C02F 1/68, C08K 5/17, C08K 5/20, C08L 35/06, C08F 8/32

(54) **COMPOSITIONS AND METHODS FOR REMOVING BORON FROM AQUEOUS SOLUTIONS**
ZUSAMMENSETZUNGEN UND VERFAHREN ZUR ENTFERNUNG VON BOR AUS WÄSSRIGEN LÖSUNGEN
COMPOSITIONS ET PROCÉDÉS D'ÉLIMINATION DU BORE DE SOLUTIONS AQUEUSES

(30) Priority: 06.04.2021 US 202163171553 P
(43) Date of publication of application: 14.02.2024
(73) Proprietor: Carbonet Nanotechnologies Inc., Vancouver BC V6A 0H9 (CA)
(72) Inventor: CARLSON, Michael, Vancouver, British Columbia V6A 0H9 (CA); HAZIN, Khatera, Vancouver, British Columbia V6A 0H9 (CA); PERRY, Mitchell, Vancouver, British Columbia V6A 0H9 (CA); GREENWOOD, Catherine, Vancouver, British Columbia V6A 0H9 (CA); SAMIMI GHARAIE, Sadaf, Vancouver, British Columbia V6A 0H9 (CA); BLONSKA, Kalina, Vancouver, British Columbia V6A 0H9 (CA); SUN, David, Vancouver, British Columbia V6A 0H9 (CA)
(74) Representative: Abel & Imray LLP
(86) International application number: PCT/CA2022/050523
(87) International publication number: WO 2022/213193

(56) References cited:
- CA-A1- 2 262 119
- US-A- 5 977 275
- US-A1- 2003 158 330
- US-A1- 2010 294 722
- US-A1- 2010 294 722
- US-B2- 8 357 300
- YOSHIMURA K ET AL: "COMPLEXATION OF BORIC ACID WITH THE N-METHYL-D-GLUCAMINE GROUP IN SOLUTION AND IN CROSSLINKED POLYMER", JOURNAL OF THE CHEMICAL SOCIETY. FARADAY TRANSACTIONS, ROYAL SOCIETY OF CHEMISTRY, CAMBRIDGE, GB, vol. 94, no. 5, 7 March 1998 (1998-03-07), pages 683 - 689, XP000738284, ISSN: 0956-5000, DOI: 10.1039/A707790D

## Description

### TECHNICAL FIELD

This invention relates to the field of water treatment and in particular to the removal of boron from aqueous solution.

### BACKGROUND

Boron compounds have been detected in natural water at concentration levels of 0.3-100 mg/L (Bonilla-Petriciolet, A., et al. (2017) Adsorption Processes for Water Treatment and Purification. Springer). Excessive concentrations of boron are damaging and even lethal to plants (Bonilla-Petriciolet, A., et al. (2017) Adsorption Processes for Water Treatment and Purification. Springer). Therefore, boron concentration in water and wastewater is regulated in many countries (Bonilla-Petriciolet, A., et al. (2017) Adsorption Processes for Water Treatment and Purification. Springer).

When dissolved in water, boron can form multiple species which complicate its removal. At pH <9, boron exists primarily as boric acid [B(OH)₃]. At pH >9, boron primarily exists as the borate anion [B(OH)₄]⁻ (Bonilla-Petriciolet, A., et al. (2017) Adsorption Processes for Water Treatment and Purification. Springer). Boric acid and the borate anion are highly soluble and difficult to precipitate as metal salts from solution. Furthermore, due to boric acid's low degree of polarity and small size, it has a tendency to permeate reverse osmosis membranes and is poorly separated from aqueous solutions by anion exchange resins (Bonilla-Petriciolet, A., et al. (2017) Adsorption Processes for Water Treatment and Purification. Springer). To combat these challenges in separation in membrane processes, solution pH is generally raised to shift composition of boron species in solution to the borate form, which can then be removed in an additional membrane separation step after other dissolved constituents which are sensitive to elevated pH have been removed (2-PASS RO) (Imbernón-Mulero, A. et al. (2022) 'Boron Removal from Desalinated Seawater for Irrigation with an On-Farm Reverse Osmosis System in Southeastern Spain', Agronomy, p. 611. doi: 1 0.3390/agronomy12030611). An additional strategy is to utilize ion exchange resins (IX) which specifically remove boron. Boron specific ion exchange resins generally contain a cis-diol functional group affixed to a porous substrate. Boron is able to covalently bind with the cis-diol groups of the resin at narrow pH ranges, and can be eluted from the resins upon acidification. While capable of selective removal of boron, solid media ion exchange resins suffer from very low loading capacities (0.1-10 mg Boron/g resin), and carry a high operating cost due to the regeneration of the resin (Ezechi, E.H., Isa, M.H. and Kutty, S.R.B. (2012) 'Boron in Produced Water: Challenges and Improvements: A Comprehensive Review', Journal of Applied Sciences, pp. 402-415. doi:10.3923/jas.2012.402.415). The low loading capacities and high regeneration costs of boron specific ion exchange resins make them very useful for removal of low quantities of boron from solution at low flow rates. However, as flow rates or boron loading rates increase the amount of resin and frequency of cleaning make boron specific resins uneconomical. Processes combining reverse osmosis, followed by ion exchange process have also been proposed (RO-IX) (Imbernón-Mulero, A. et al. (2022) 'Boron Removal from Desalinated Seawater for Irrigation with an On-Farm Reverse Osmosis System in Southeastern Spain', Agronomy, p. 611. doi:10.3390/agronomy12030611). In an RO-IX process the bulk of boron (50-70%) is removed during the filtration step, followed by a polishing step with a specific boron ion exchange resin. The advantage of this process is that a second RO unit is not required, decreasing engineering CAPEX and system complexity. A major downside to an RO-IX process is that an ion exchange resin capacity decreases with boron concentration in solution. As a result, high volumes of water still require excessively large media beds and frequent regeneration cycles. The end result is a high OPEX cost, although the total treatment cost can still be less than a 2-PASS RO system.

The above methods (2-PASS RO, IX, RO-IX) are potential solutions for removal of boron from water when boron is present at levels from 1-10 ppm. However, as boron concentrations increase above this level the operating costs and efficacy of these systems become challenging to operate. Elevated boron concentrations (above 10 ppm), are often encountered when concentrated saline solutions, particularly from ground water, leachates or evaporative processes, must be treated. In these cases, 2 PASS-RO, RO-IX, and IX methods are unable to economically remove the boron present in solution. One growing industrial application for the removal of boron that is not effectively treated by membranes or ion exchange resins is in the preparation of commercial brines. Examples of brine production impacted by boron contamination include lithium brines, magnesium brines, and potassium brines. During the concentration process, water is removed from solution by evaporation and contaminating ions by precipitation. However, boron will remain in solution and concentrate along with the commercially relevant salt during evaporation. To remove the concentrated boron, which can range from 50 ppm up to 5000 ppm, a liquid-liquid organic phase extraction process must be utilized. IX processes are far too expensive due to the low loading capacities, and membrane processes are unable to effectively separate the boron ions from the target salt.

In general, two main approaches have been studied for removal of boron by enhanced ultrafiltration: micellar enhanced and polymer enhanced. In polymer enhanced filtration, large water soluble polymers covalently bind borate ions in solution, and the resulting complex is filtered (Yürüm, A. et al. (2013) 'High performance ligands for the removal of aqueous boron species by continuous polymer enhanced ultrafiltration', Desalination, pp. 33-39. doi:10.1016/j.desal.2013.04.020). In micellar enhanced ultrafiltration, surfactants containing boron binding headgroups are utilized to form large macromolecular assemblies containing bound boron (US Patent No. 8,357,300), which are unable to pass through the membrane pores. While both of these approaches have shown boron removal rates in excess of 90%, two significant barriers to their commercial adoption are fouling and attrition. Addition of large organic molecules to ultrafiltration is known to lead to pronounced decreases in membrane flux due to membrane fouling and concentration polarization (Schwarze, M. (2017) 'Micellar-enhanced ultrafiltration (MEUF) - state of the art', Environmental Science: Water Research & Technology, pp. 598-624. doi:10.1039/c6ew00324a). In particular, cake layer formation or irreversible fouling of the membranes can be extremely limiting and make the process uneconomical due to effective flux rates of <1 L/m²h and filter replacement costs. Large polymers and large surfactant aggregates are particularly susceptible to membrane fouling. Attrition of the binding component through the membrane is a significant issue for micellar enhanced ultrafiltration; micelle formation is governed by surfactant solubility and a critical micelle concentration (CMC) of surfactant being present in solution. Above the CMC surfactants will form micelles, but a significant amount of monomeric surfactant still exists in solution (Schwarze, M. (2017) 'Micellar-enhanced ultrafiltration (MEUF) - state of the art', Environmental Science: Water Research & Technology, pp. 598-624. doi:10.1039/c6ew00324a).These monomeric surfactants are able to permeate the membrane pore, leading to boron leakage and a constant loss of surfactant. Surfactant micelles are in an equilibrium with the surfactant monomer in solution, therefore as monomer concentrations decrease, micelle concentration will decrease to maintain a constant concentration of monomeric surfactant. As a result, a supplemental amount of surfactant must be constantly injected into the process, leading to high chemical costs. In summary, enhanced ultrafiltration requires a solute complexing agent that has 1) low fouling characteristics at high concentrations, and 2) low attrition rates (Schwarze, M. (2017) 'Micellar-enhanced ultrafiltration (MEUF) - state of the art', Environmental Science: Water Research & Technology, pp. 598-624. doi:10.1039/c6ew00324a).

U.S. Pat. No. 8,357,300, describe a method for reducing a boron concentration in a boron-containing aqueous liquid involves administering micelle(s) for selective boron adsorption to the boron-containing aqueous liquid to produce boron-bonded micelle(s), wherein the micelle(s) comprise a reaction product of an N-substituted-glucamine and a glycidyl ether; passing the micelle-containing aqueous liquid through a membrane to separate the boron-bonded micelle(s) from the aqueous liquid; and recovering a permeate having a reduced boron concentration from the membrane. A material capable of selectively adsorbing boron from a boron-containing aqueous liquid contains at least one micelle having a hydrophobic tail and a head comprising a hydrophilic functional group having formula (I): R1-O-A (I) R1 represents a hydrocarbon group selected from the group consisting of substituted and unsubstituted aromatic, linear aliphatic, and branched aliphatic hydrocarbon groups and mixtures thereof, and A contains hydroxyl and amine groups.

### SUMMARY

This invention is based, at least in part, on the elucidation of compositions of particular polymers and surfactants that are suitable for use in removing boron from aqueous solutions. More particularly, the use of the compositions in existing infrastructure and equipment for treating aqueous solutions.

The present invention is directed, at least in part, to enhanced ultrafiltration methods. In enhanced ultrafiltration methods, boron is complexed with a soluble organic molecule of high molecular weight, allowing for separation of the boron in an ultrafiltration process with a pore size cut off below the molecular weight of the complexing molecule. In contrast to conventional IX resins, enhanced ultrafiltration has the benefits of being entirely liquid based, meaning there are no resin beds to maintain and boron binding speed and capacity is not limited by solid-liquid diffusion kinetics. Relative to RO processes, enhanced ultrafiltration can be run at significantly lower pressures, the membranes are cheaper to replace and more robust, and higher boron rejection rates can be achieved at near neutral pH.

The present invention is directed, at least in part, to the formation of NanoNets^{™}; soluble, self-assembling complexes of surfactant and amphiphilic block co-polymers. The self-assembly of NanoNets^{™} is primarily governed by hydrophobic balance of the polymer chain and target surfactant, length of the polymer chain, size of the polymer only micelle, size of the surfactant only aggregate, and alkyl chain length of the surfactant monomers. In comparison to other surfactant-polymer complexes targeted at water treatment, NanoNet^{™} self-assembly is guided by association of the hydrophobic components of the surfactant and block-copolymer; this leaves the hydrophilic groups of the surfactant and polymer available for complexation of dissolved constituents in the bulk water phase. NanoNet^{™} formation occurs at surfactant concentrations far below the CMC of pure surfactant micelles, making them excellent candidates for attrition free enhanced ultrafiltration due to low or functionally non-existent concentrations of free monomer. Furthermore, in contrast to small micelles, NanoNets^{™} can be formed with large apparent diameters (10-100 nM), while maintaining full solubility and high homogeneity. The ability to formulate NanoNets^{™} at low aggregation concentrations and large molecular weights makes them suitable for the high flux, low fouling and low attrition rates required for economical enhanced ultrafiltration.

This invention is based, at least in part, on development of boron removal from aqueous environments based on the integration of boron binding chemistry with conventional ultrafiltration system. Compositions of the present invention may be separated out by conventional ultrafiltration membrane.

Compositions are described herein with various alkyl chain lengths to optimize filtration performance of the compositions. Brine stable surfactant scaffolds are provided and support higher boron binding, filterability, and aid in reducing attrition rates of compositions described herein. Compositions described herein have a polymer scaffold that sequesters free surfactant monomers into larger overall particles, minimizing attrition through the ultrafiltration membrane. The compositions described herein may provide for better boron binding capacity, high flux in cross-flow ultrafiltration system, high stability in media with various salinities and pH, faster binding kinetics than solid phase ion exchange resins and minimal chemical attrition (often about 0.1-0.3%).

The attrition rate of the chemical during filtration may be further improved by stacking membrane filters in a batch mode. Binding isotherms may be used to improve boron binding in a batch mode with stacked filters of 2, 3, 4, 5, 6, 7, 8, 9, or 10 filters. With these modifications, the attrition of compositions of the present invention may become negligible. Further modifications may be applied to the filtration system by including a solid-liquid separation step in the regeneration protocol, followed by a polishing filtration step to reduce loss of compositions of the present invention during regeneration. The membrane pore size of each filter and inventive composition micelle size may be optimized to achieve improved flux across the membrane, and by extension an improved concentration factor. Minimal waste streams (often about 10%) may be provided when compared with waste streams generated by ion exchange resins (often about 30%).

Further, decreased acid consumption of inventive compositions, as well as recaptured and re-cycled unused inventive compositions during a regeneration process are also provided. Additionally, the waste stream may be neutralized with a caustic agent to generate a non-hazardous waste (non-acidic). Hence, inventive composition waste may be disposed of as non-hazardous waste and favours economics in comparison to the waste from ion-exchange resins, which is acidic and hazardous waste.

In illustrative embodiments of the present invention there is provided a composition comprising: (a) compound of formula (I): 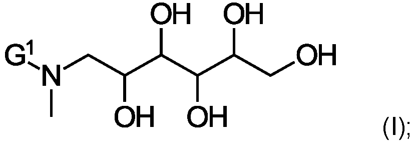 and (b) a compound of formula (II): 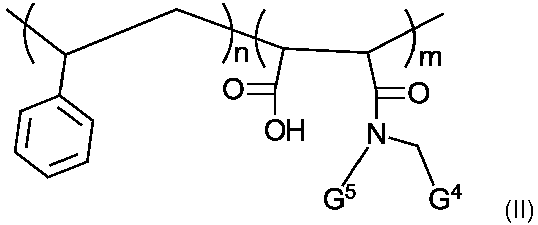 wherein G¹ is: 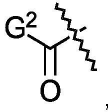 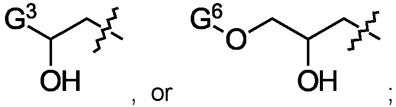 G², G³, and G⁶ are each independently a straight, saturated, unsubstituted C₅ to C₂₀ alkyl; a branched, saturated, unsubstituted C₅ to C₂₀ alkyl; a straight, saturated, substituted C₅ to C₂₀ alkyl; a branched, saturated, substituted C₅ to C₂₀ alkyl; a straight, unsaturated, unsubstituted C₅ to C₂₀ alkyl; a branched, unsaturated, unsubstituted C₅ to C₂₀ alkyl; a straight, unsaturated, substituted C₅ to C₂₀ alkyl; or a branched, unsaturated, substituted C₅ to C₂₀ alkyl; G⁴ is 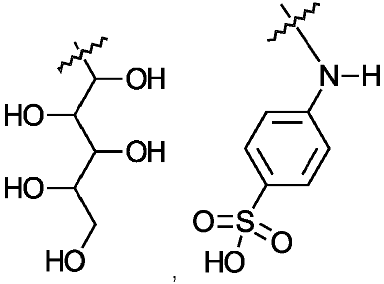 , or 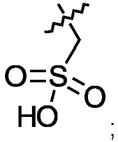 G⁵ is H, or a straight, saturated, unsubstituted C₁ to C₆ alkyl; and n+m is in the range of from 20 to 600 and the ratio of n:m is in the range of from 1:1 to 3:1.

In illustrative embodiments of the present invention, there is provided a composition comprising: (a) compound of formula (I): 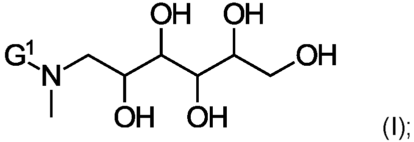 and (b) a compound of formula (II): 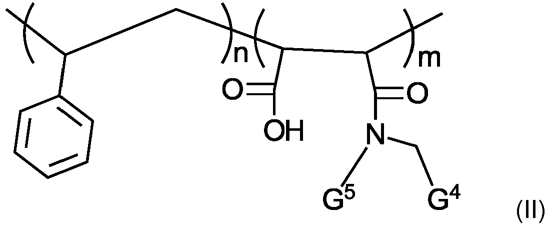 wherein G¹ is: 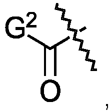 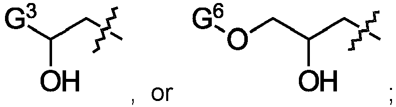 G², G³, and G⁶ are each independently a straight, saturated, unsubstituted C₅ to C₂₀ alkyl; a branched, saturated, unsubstituted C₅ to C₂₀ alkyl; a straight, saturated, substituted C₅ to C₂₀ alkyl; a branched, saturated, substituted C₅ to C₂₀ alkyl; a straight, unsaturated, unsubstituted C₅ to C₂₀ alkyl; a branched, unsaturated, unsubstituted C₅ to C₂₀ alkyl; a straight, unsaturated, substituted C₅ to C₂₀ alkyl; or a branched, unsaturated, substituted C₅ to C₂₀ alkyl; G⁴ is 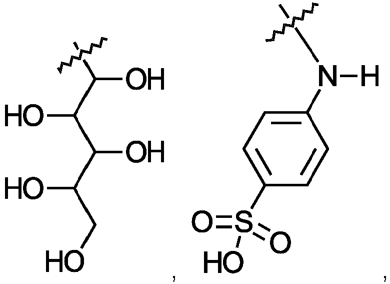 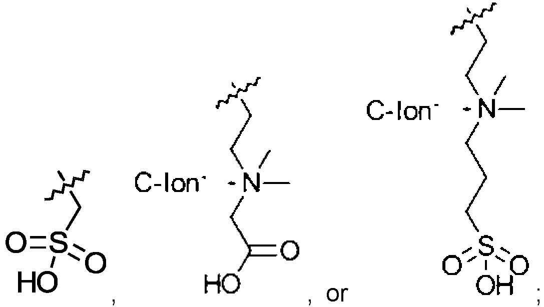 G⁵ is H, a straight, saturated, unsubstituted C₁ to C₆ alkyl, or 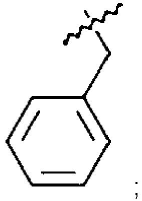 and n+m is in the range of from 20 to 600 and the ratio of n:m is in the range of from 1:1 to 3:1.

In illustrative embodiments, there is provided a composition described herein, wherein G⁵ is H, a straight, saturated, unsubstituted C₁ to C₆ alkyl.

In illustrative embodiments, there is provided a composition described herein, wherein G⁴ is

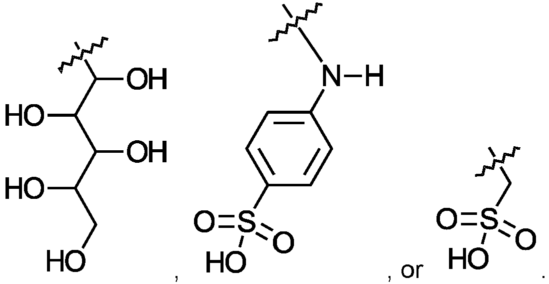

In illustrative embodiments, there is provided a composition described herein, wherein G¹ is

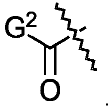

In illustrative embodiments, there is provided a composition described herein, wherein G² is a C₅ to C₂₀ straight, saturated, unsubstituted alkyl; or a C₅ to C₂₀ straight, unsaturated, unsubstituted alkyl.

In illustrative embodiments, there is provided a composition described herein, wherein G² is a C₈ to C₁₈ straight, saturated, unsubstituted alkyl; or a C₈ to C₁₈ straight, unsaturated, unsubstituted alkyl.

In illustrative embodiments, there is provided a composition described herein, wherein G² is a C₉ to C₁₂ straight, saturated, unsubstituted alkyl; or a C₉ to C₁₂ straight, unsaturated, unsubstituted alkyl.

In illustrative embodiments, there is provided a composition described herein, wherein G² is a C₉ straight, saturated, unsubstituted alkyl; or a C₉ straight, unsaturated, unsubstituted alkyl.

In illustrative embodiments, there is provided a composition described herein, wherein G² is a C₁₂ straight, saturated, unsubstituted alkyl; or a C₁₂ straight, unsaturated, unsubstituted alkyl.

In illustrative embodiments, there is provided a composition described herein, wherein G¹ is

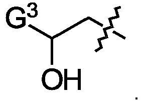

In illustrative embodiments, there is provided a composition described herein, wherein G³ is a C₅ to C₂₀ straight, saturated, unsubstituted alkyl; or a C₅ to C₂₀ straight, unsaturated, unsubstituted alkyl.

In illustrative embodiments, there is provided a composition described herein, wherein G³ is a C₈ to C₁₈ straight, saturated, unsubstituted alkyl; or a C₈ to C₁₈ straight, unsaturated, unsubstituted alkyl.

In illustrative embodiments, there is provided a composition described herein, wherein G³ is a C₉ to C₁₂ straight, saturated, unsubstituted alkyl; or a C₉ to C₁₂ straight, unsaturated, unsubstituted alkyl.

In illustrative embodiments, there is provided a composition described herein, wherein G³ is a C₉ straight, saturated, unsubstituted alkyl; or a C₉ straight, unsaturated, unsubstituted alkyl.

In illustrative embodiments, there is provided a composition described herein, wherein G³ is a C₁₂ straight, saturated, unsubstituted alkyl; or a C₁₂ straight, unsaturated, unsubstituted alkyl.

In illustrative embodiments, there is provided a composition described herein, wherein G¹ is

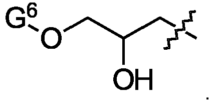

In illustrative embodiments, there is provided a composition described herein, wherein G⁶ is a C₅ to C₂₀ straight, saturated, unsubstituted alkyl; or a C₅ to C₂₀ straight, unsaturated, unsubstituted alkyl.

In illustrative embodiments, there is provided a composition described herein, wherein G⁶ is a C₈ to C₁₈ straight, saturated, unsubstituted alkyl; or a C₈ to C₁₈ straight, unsaturated, unsubstituted alkyl.

In illustrative embodiments, there is provided a composition described herein, wherein G⁶ is a C₉ to C₁₂ straight, saturated, unsubstituted alkyl; or a C₉ to C₁₆ straight, unsaturated, unsubstituted alkyl.

In illustrative embodiments, there is provided a composition described herein, wherein G⁶ is a C₁₆ straight, saturated, unsubstituted alkyl; or a C₁₆ straight, unsaturated, unsubstituted alkyl.

In illustrative embodiments, there is provided a composition described herein, wherein G⁶ is a C₁₂ straight, saturated, unsubstituted alkyl; or a C₁₂ straight, unsaturated, unsubstituted alkyl.

In illustrative embodiments, there is provided a composition described herein, wherein G⁴ is

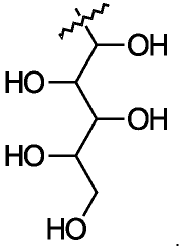

In illustrative embodiments, there is provided a composition described herein, wherein G⁴ is

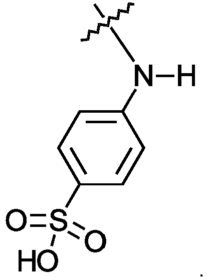

In illustrative embodiments, there is provided a composition described herein, wherein G⁴ is

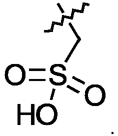

In illustrative embodiments, there is provided a composition described herein, wherein G⁴ is

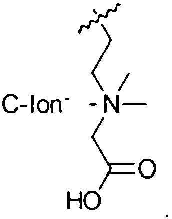

In illustrative embodiments, there is provided a composition described herein, wherein G⁴ is

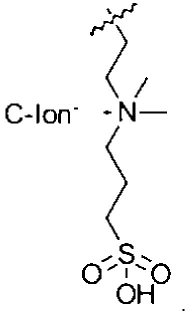

In illustrative embodiments, there is provided a composition described herein, wherein the counter ion is a halogen.

In illustrative embodiments, there is provided a composition described herein, wherein the counter ion is chloride.

In illustrative embodiments, there is provided a composition described herein, wherein G⁵ is H.

In illustrative embodiments, there is provided a composition described herein, wherein G⁵ is a straight, saturated, unsubstituted C₁ to C₆ alkyl.

In illustrative embodiments, there is provided a composition described herein, wherein G⁵ is CH₃.

In illustrative embodiments, there is provided a composition described herein, wherein G⁵ is

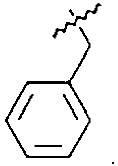

In illustrative embodiments, there is provided a composition described herein, wherein n+m is in the range of from 100 to 600.

In illustrative embodiments, there is provided a composition described herein, wherein n+m is in the range of from 200 to 600.

In illustrative embodiments, there is provided a composition described herein, wherein n+m is in the range of from 300 to 600.

In illustrative embodiments, there is provided a composition described herein, wherein the ratio of n:m is 1:1.

In illustrative embodiments, there is provided a composition described herein, wherein the ratio of n:m is 2:1.

In illustrative embodiments, there is provided a composition described herein, wherein the ratio of n:m is 3:1.

In illustrative embodiments, there is provided a composition described herein, wherein the wt% ratio of the compound of formula (I):the compound of formula (II) is in the range of 0.5:1 to 2:1.

In illustrative embodiments, there is provided a composition described herein, wherein the wt% ratio of the compound of formula (I):the compound of formula (II) is 0.5:1.

In illustrative embodiments, there is provided a composition described herein, wherein the wt% ratio of the compound of formula (I):the compound of formula (II) is 1:1.

In illustrative embodiments, there is provided a composition described herein, wherein the wt% ratio of the compound of formula (I):the compound of formula (II) is 2:1.

In illustrative embodiments, there is provided a composition comprising: a) 6-((2-hydroxydodecyl)(methyl)amino)hexane-1,2,3,4,5-pentaol; and b) Poly(styrene)-*co*-(4-oxo-4-((2-sulfoethyl)amino)but-2-enoic acid, in a wt% ratio of 1.5:1.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention,

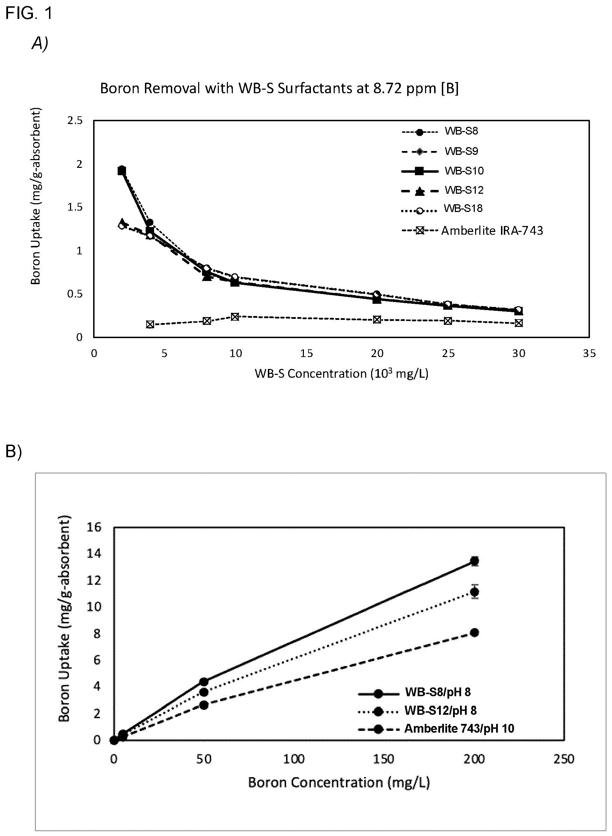

Figure 1: *Boron uptake capacity of boron binding WB-S surfactants.* A) Boron binding capacity of WB-S 8 (black circle, dashed line), WB-S 9 (black diamond, dashed line), WB-S 10 (black square, solid line), WB-S 12 (black triangle, dashed line), WB-S 18 (clear circle, dashed line), and Amberlite^{™} 743 (clear square, dashed line). Boron removal from an 8.72 ppm solution of boron was measured with increasing concentrations of the binding media at pH 8 and pH 10 after incubation for 2 hours and 24 hours for the WB-S surfactants and Amberlite^{™}-743 resin, respectively. B) Boron binding capacity of a fixed concentration of binding media with increasing concentrations of boron. Boron removal from solutions after incubation WB-S surfactant (WB-S 9, WB-S 12, pH 8 for 2 hours) or Amberlite^{™}-743 resin (pH 10 for 24 hours), respectively.

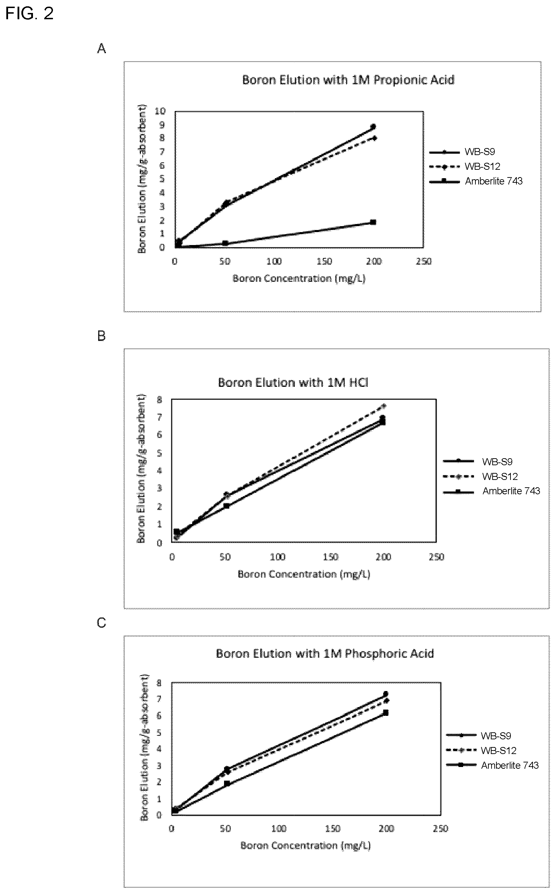

Figure 2: Effect of acid composition on boron elution from binding media. A). Boron elution of boron binding WB-S surfactants upon acidification with inorganic and organic acids at varying boron concentrations of 8.7 ppm, 52 ppm, and 200 ppm. A) Boron elution of WB-S 9 (black circle, solid line), WB-S 12 (black circle, dashed line), and Amberlite^{™} 743 (black square, solid line) with 1 M propionic acid. B) Boron elution of WB-S 9 (black circle, solid line), WB-S 12 (black circle, dashed line), and Amberlite^{™} 743 (black square, solid line) with 1 M hydrochloric acid (HCL). C) Boron elution of WB-S 9 (black circle, solid line), WB-S 12 (black circle, dashed line), and Amberlite^{™} 743 (black square, solid line) with 1 M phosphoric acid.
Figure 3: Boron uptake of WB-S 9 and Amberlite^{™} IRA-743 from 8.72 ppm Boron solution at varying pH from a solution containing 8.72 ppm total boron.
Figure 4: Effect of salinity on boron binding capacity of WB-S surfactants. Boron binding capacity of WB-S 9, WB-S 12, and Amberlite^{™}-743 in solutions of 8.72, 50, and 200 ppm total boron supplemented with A) 25 ppm Ca²⁺, B) 50 ppm Ca²⁺, C) 5,000 ppm Ca²⁺ D) 5,000 ppm NaCl, E) 25,000 ppm NaCl, and F) 100,000 ppm NaCl.
Figure 5: Effect of salt on SMA130_{NMG}-WB-S12 stability. SMA130_{NMG}-WB-S12 formulations were diluted into saline solution (1.4% NaCl and 0.03% CaCl₂), heated to 90 °C for 30 min, then cooled to 4 °C and the absorbance measured at 540nm. Increases in turbidity were indicative of precipitation and aggregation in the saline solution.
Figure 6: Effect of NanoNet^{™} formation on filterability and solubility of surfactant. A) Relative flux of solutions containing 0, 10, 50, 100, 500, 1000, 5000, and 10,000 ppm WB-S12 surfactant (black squares), SMA130_{NMG} (grey triangles), or SMA130_{NMG}-WB-S12 (black circles) through 5 kDa MWCO PES membrane at an applied pressure of 9.5 psi. B) Same as in A, with 10 kDa MWCO PES membrane, C) Same as in A, with 50 kDa MWCO PES membrane, D) Same as in A, with 100 kDa MWCO PES membrane.

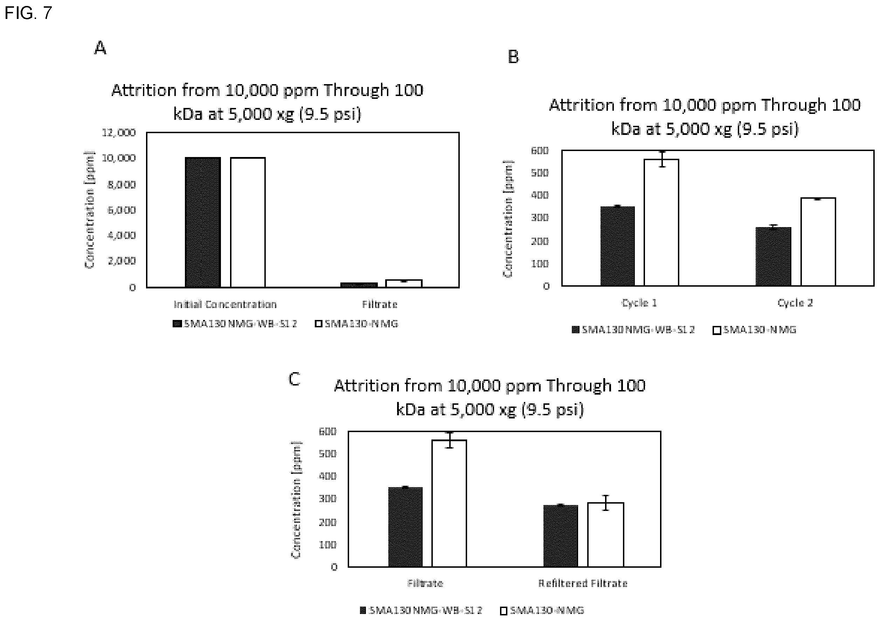

Figure 7: Boron binding scaffold permeation through ultrafiltration membranes. A) Concentration of SMA130_{NMG}-WB-S12 . (black bar) and SMA130_{NMG} (grey bar) in retentate and permeate after 1 filtration cycle through 100 kDa MWCO, PES membrane. B) Concentration of SMA130_{NMG}-WB-S12 (black bar) and SMA130_{NMG} (grey bar) in permeate after 2 filtration cycles. C). Concentration of SMA130_{NMG}-WB-S12 (black bar) and SMA130_{NMG} (grey bar) of permeate after 1 filtration cycle as depicted in B, and after re-filtration of permeate through additional filtration cycle, termed refiltered filtrate.
Figure 8: Time dependence of boron removal for WB-S surfactants compared to solid phase resin. Boron binding resins (WB-S surfactants and Amberlite^{™} resin), were incubated solution containing 8.72 ppm total boron at a solution pH 8. At the indicated time points aliquots were removed by filtration and the boron uptake calculated from removal of the solution.
Figure 9: Graph showing regeneration of 10,000 ppm WB-S12 and binding cycles with 52 ppm boron.
Figure 10: Boron binding isotherms of boron binding surfactants. Top panel: Boron binding capacity of a weak base, boron binding surfactant (WB-S12), a strong-base surfactant (SB-S12), and ion exchange resin Amberlite^{™} 743 at varying concentrations of boron. Boron binding was performed at pH 8 in 50mM Tris-HCl buffer utilizing a concentration of 10,000 ppm surfactant and 20,000 ppm Amberlite^{™} resin. Bottom panel, same as in top panel, but binding was assayed in synthetic brine 1 at pH 5. For the chemical make-up of synthetic brine 1, refer to Table 1.

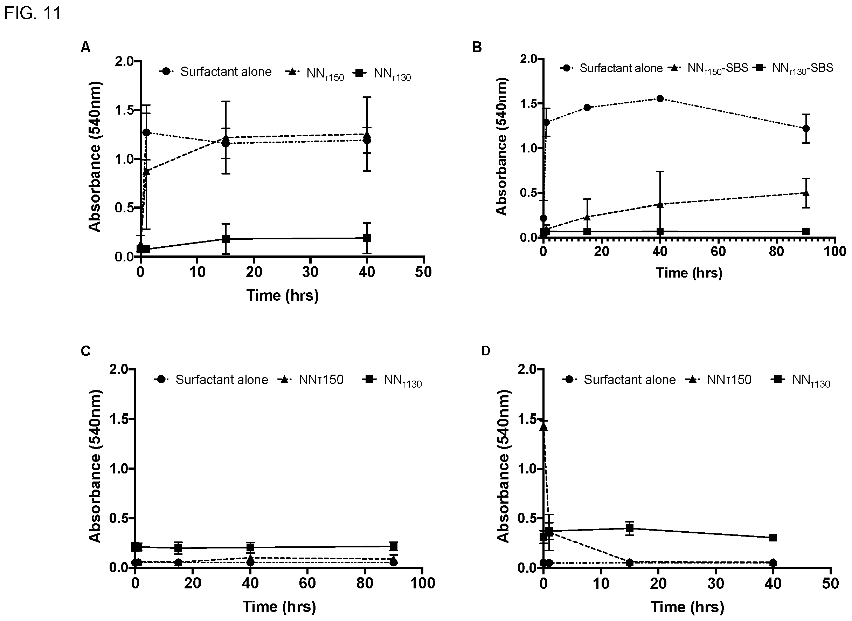

Figure 11: Effect of polymer complexation on solution stability of SB-S12 boron binding surfactant. A) Solution stability of 10,000 ppm SB-S12 (black circles, dashed line), a complex of SB-S12 and SMA130_{T} with a ratio of 1:1 wt% (SMA130_{T}-SB-S12, black squares, dashed line), and a complex of SB-S12 and SMA150_{T} with a ratio of 1:1 wt% (SMA150_{T}-SB-S12, black triangles, solid line) in saline brine at pH 5. B) Stability of solutions of complexes of SMA150_{T} or SMA130_{T} with SB-S12 with a ratio of 2:1 wt% (black circles, dashed line) at pH 8 (SMA150_{T}-SB-S12, black triangles, solid line; SMA130_{T}-SB-S12, black squares, dashed line, respectively). C) Same as in A, except addition of hydrochloric acid (HCl) to bring pH down to pH 2. D) Same as in B, except addition of HCl to bring pH down to pH 2.
Figure 12: Effect of polymer complexation with boron-binding surfactant on observed flux values during enhanced ultrafiltration. A) Attrition of WB-S12 into the permeate after filtration through a 100 kDa MWCO PES filter. Subsequent cycles indicate the measured attrition in the permeate after resuspending the permeate in 1 starting volume of buffered solution (50mM Tris-HCl, pH 8) and refiltering. B) Same as in A, but measured attrition of SMA130_{NMG}.
Figure 13: Boron binding isotherms with boron binding surfactant, SB-S12, and boron binding SMA150_{T}-SB-S12 complex at various time points. A) Aqueous solutions containing 9 ppm total boron, 10,000 ppm SB-S12 (black squares, dashed line), a 20,000 ppm complex of SB-S12 and SMA150_{T} (SMA150_{T}-SB-S12 , 1:1, black triangles, solid line), and 20,000 ppm Amberlite^{™}-743 (black circles, dashed lines). B) Same as in A, except 200 ppm total boron. Binding tests were performed with PES filter with 30 kDa MWCO. The boron binding tests were performed at pH 8.
Figure 14: Effect of complexation with SMA150_{T} on regeneration of boron binding surfactant, SB-S12 through a PES filter with 5 kDa MWCO. A) Regeneration cycles of aqueous solutions containing 10,000 ppm SB-S12 at pH 8. B) Regeneration cycles of a complex of SB-S12 and SMA150_{T} (SMA150_{T}-SB-S12, 1:1) with 5 min regeneration time at pH 8. C) Regeneration cycles of Amberlite^{™} resin at pH 8, and D) Regeneration cycles of Amberlite^{™} resin at pH 10 and 17 hour contact time.

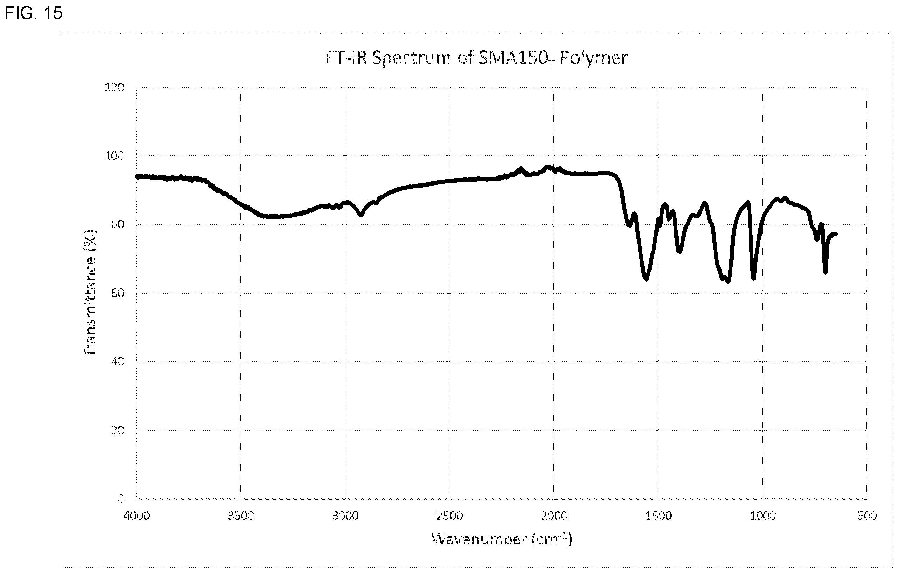

Figure 15. FT-IR spectrum of SMA150_{T} polymer.

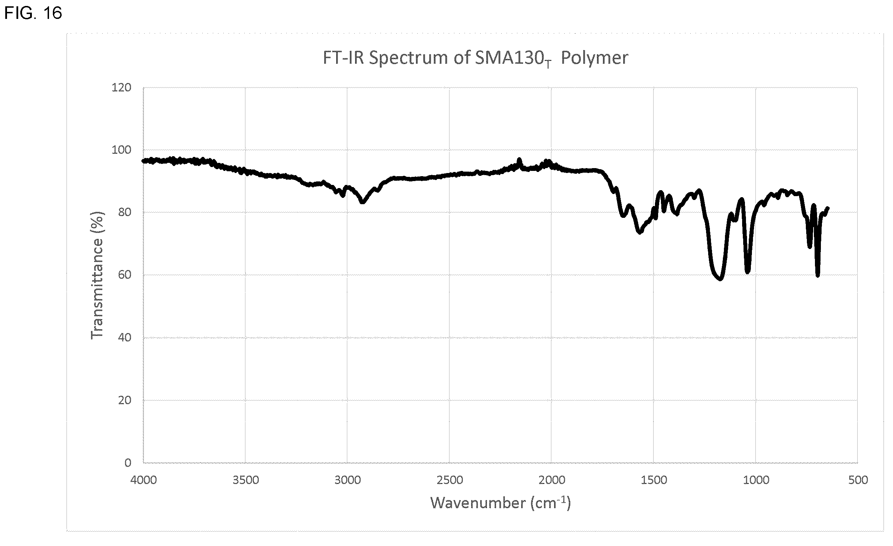

Figure 16. FT-IR spectrum of SMA130_{T} polymer.

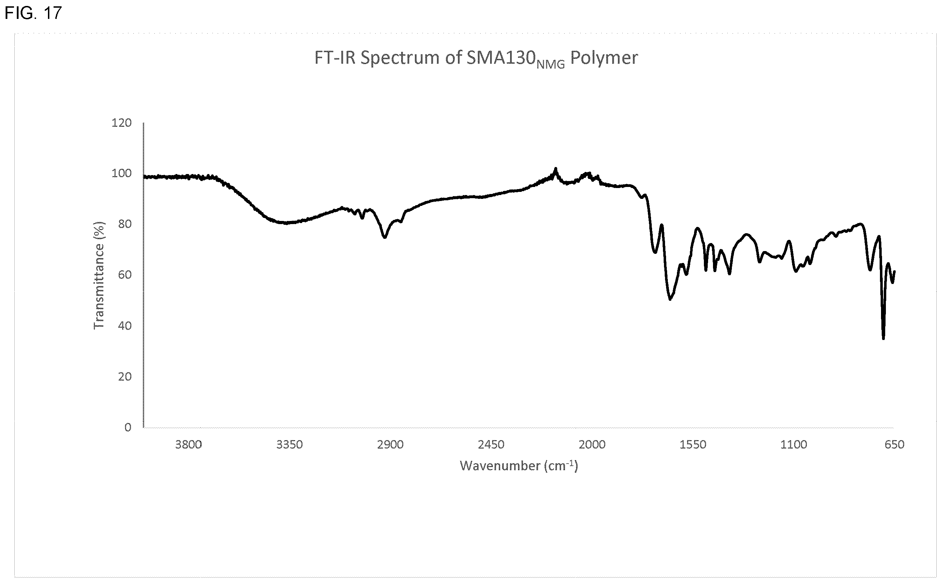

Figure 17. FT-IR spectrum of SMA130_{NMG} polymer.

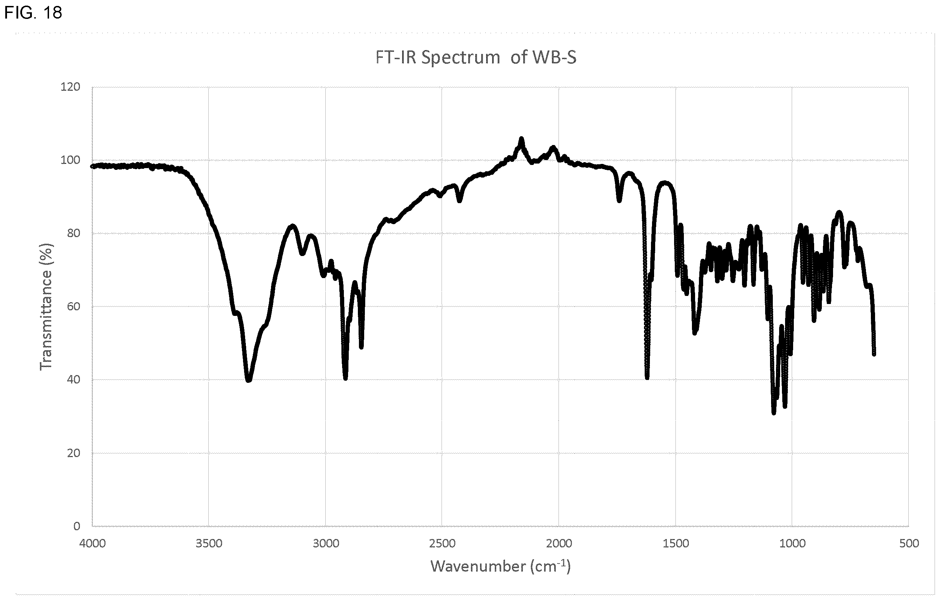

Figure 18. FT-IR spectrum of WB-S12 surfactant.

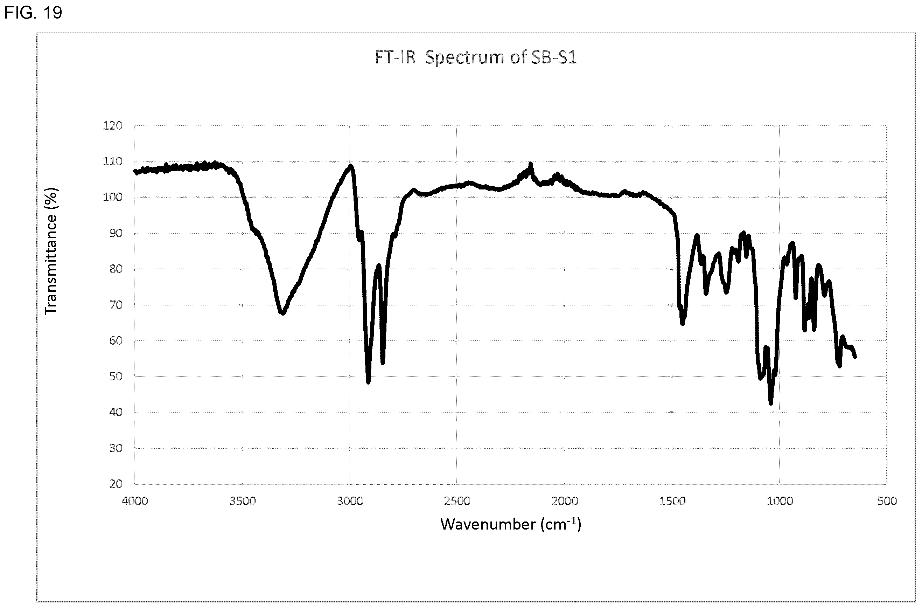

Figure 19. FT-IR spectrum of SB-S12 surfactant.

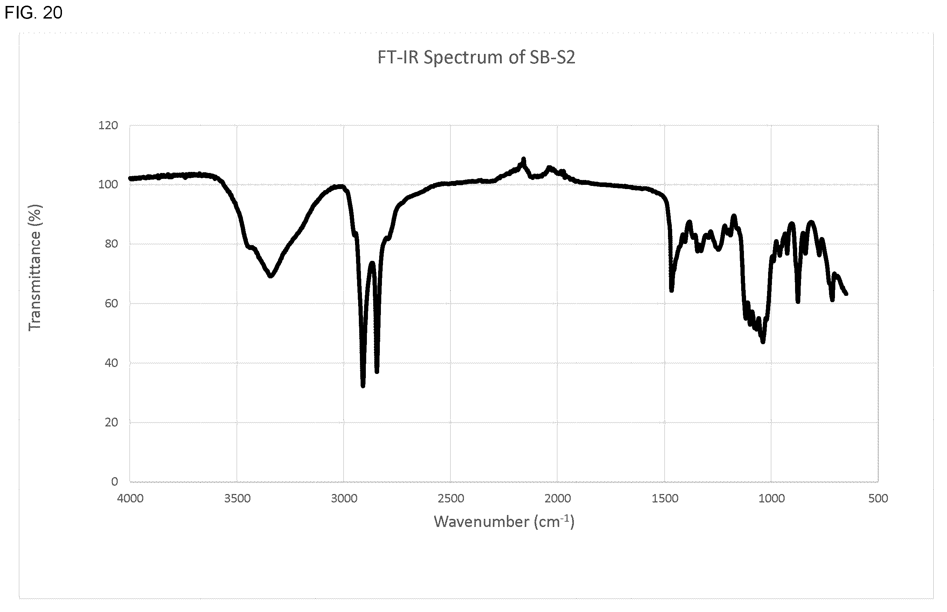

Figure 20. FT-IR spectrum of SB-S20 surfactant.

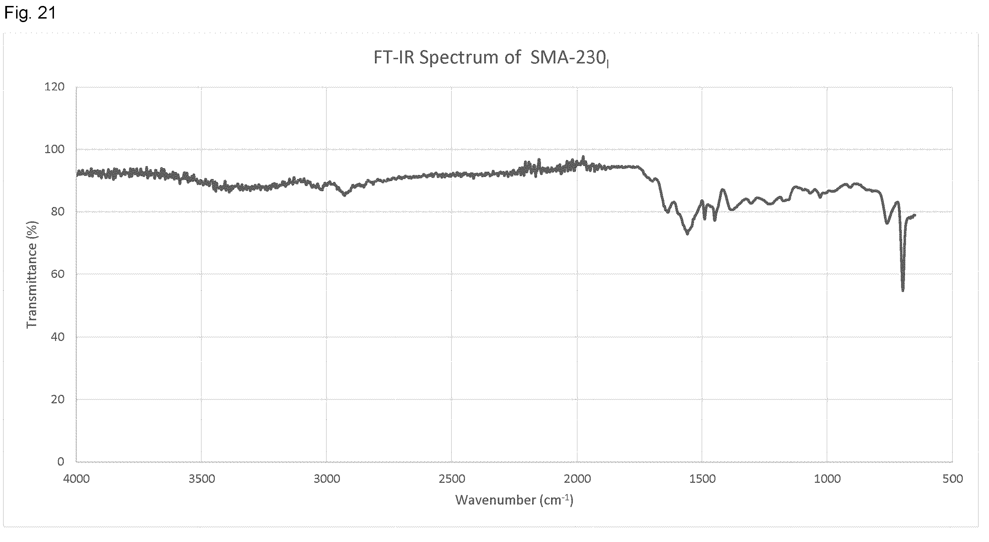

Figure 21. FT-IR spectrum of SMA230_{I} polymer.

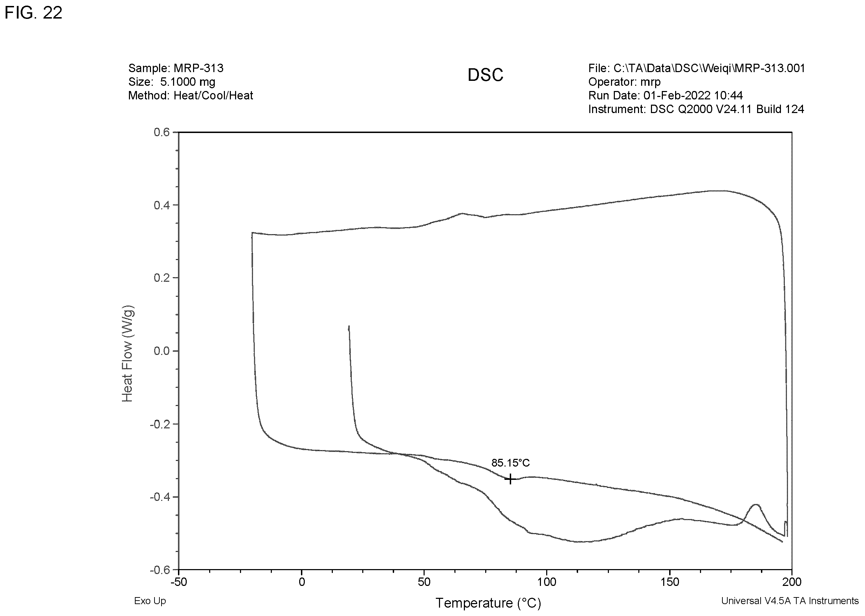

Figure 22. DSC of SMA230_{I} polymer.

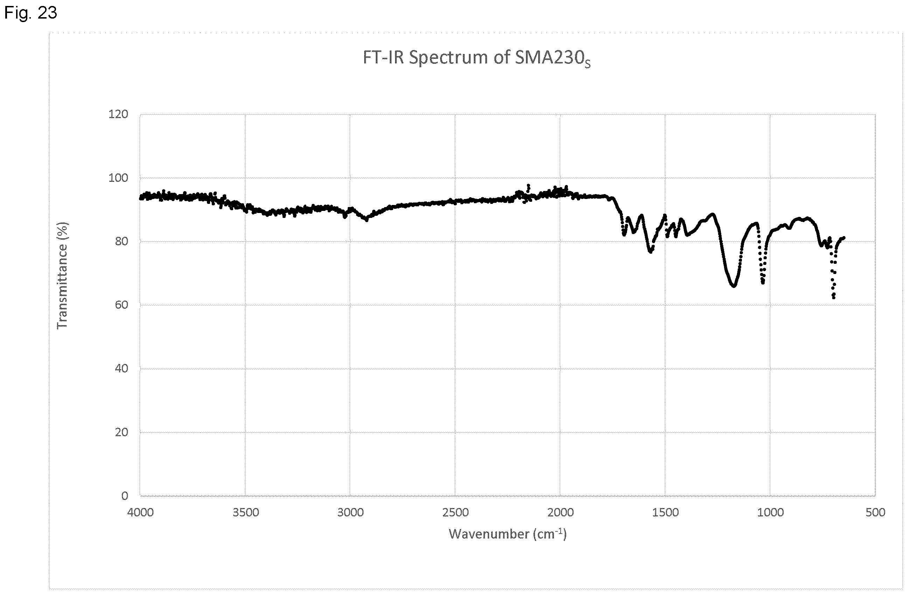

Figure 23. FT-IR spectrum of SMA230_{S} polymer.

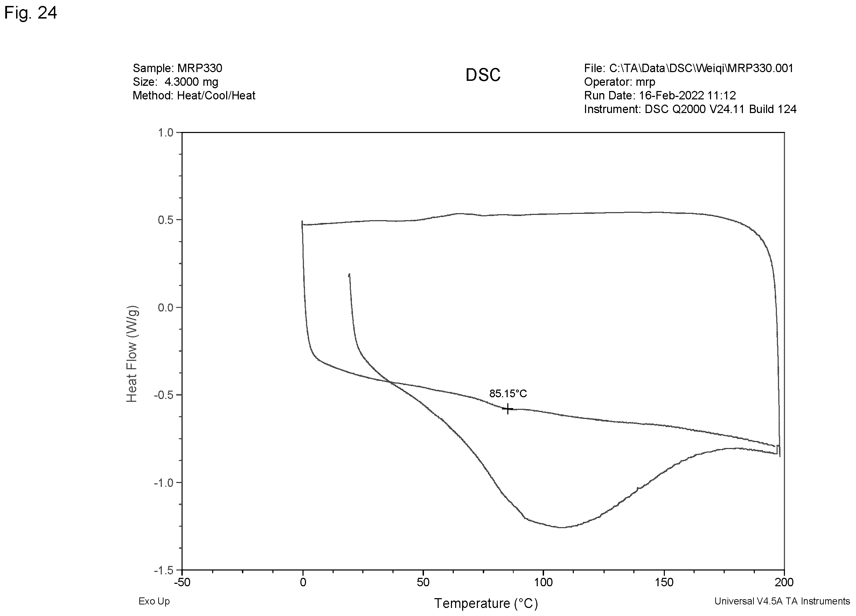

Figure 24. DSC of SMA230_{S} polymer.

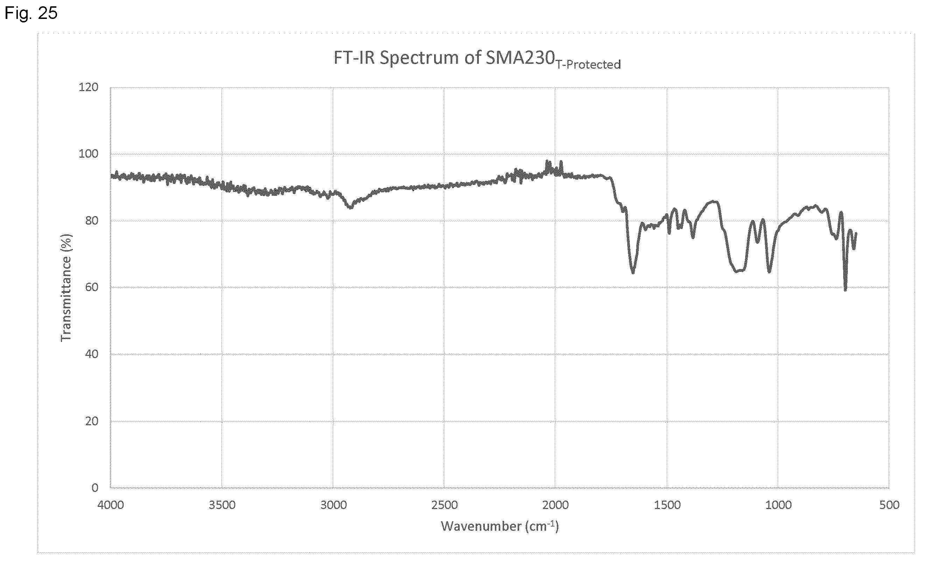

Figure 25. FT-IR spectrum of SMA230_{T-Protected} polymer.

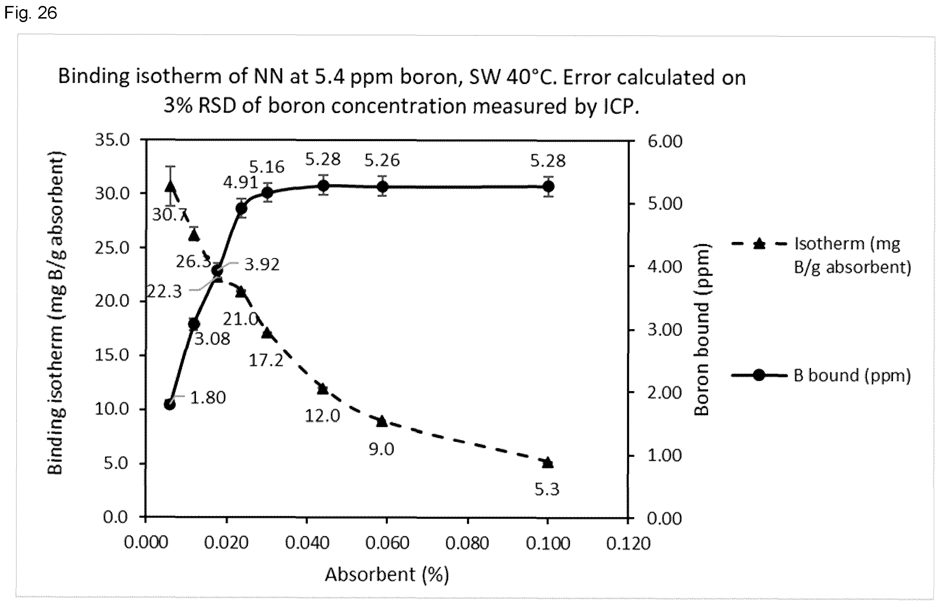

Figure 26: Binding isotherm of SMA230_{T}-SB-S12 in brine containing 5.4 ppm B. Binding isotherm (dashed line, black triangle) of SMA230_{T}-SB-S12 with 5.4 ppm boron in synthetic water. The bound boron concentration is shown in ppm (solid line, black circles). The binding experiment was performed at 40 °C.

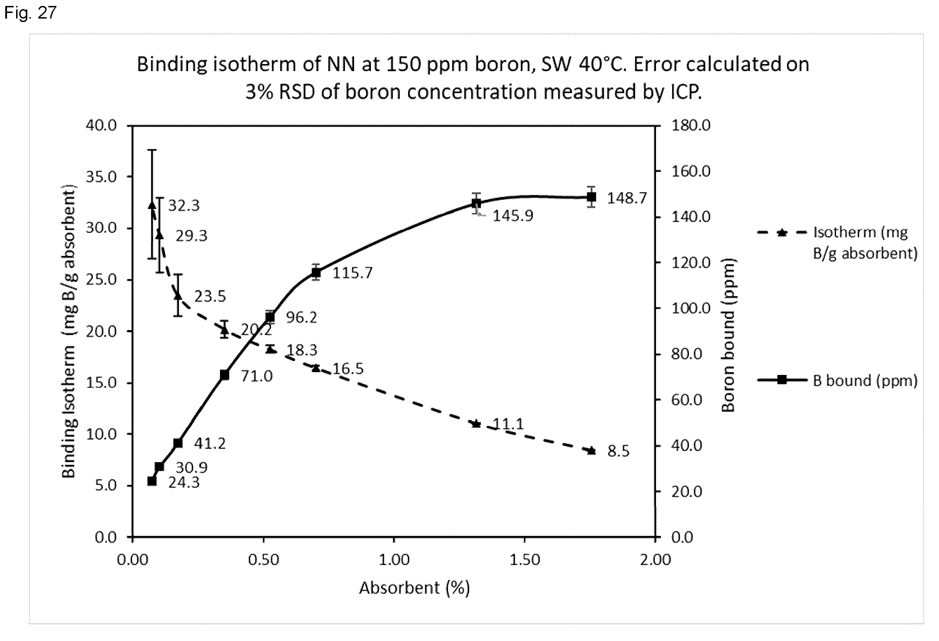

Figure 27: Binding isotherm (dashed line, black triangle) of SMA230_{T}-SB-S12 at 150 ppm boron in synthetic brine. The bound boron concentration is shown in ppm (solid line, black circles). The binding experiment was performed at 40 °C.

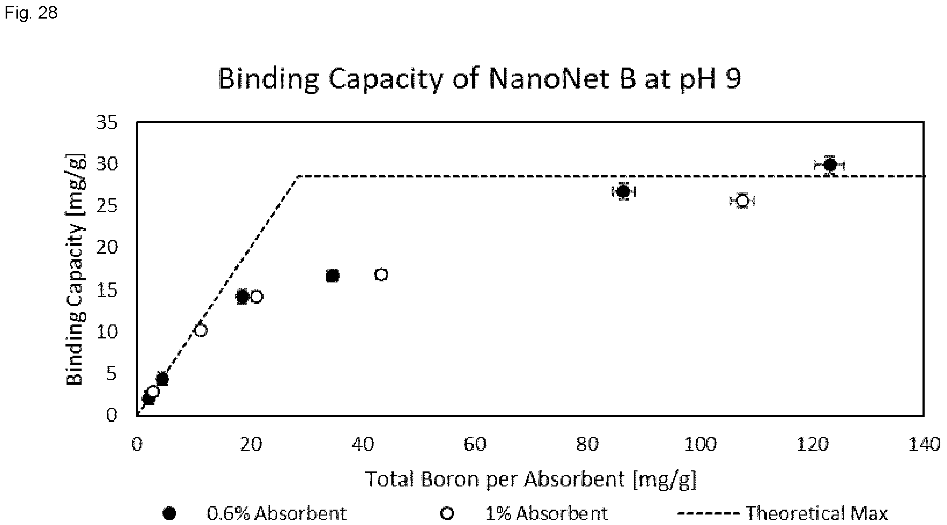

Figure 28: Binding capacity of SMA230_{T}-SB-S12 at pH 9 in brine solution with a) 0.6% adsorbent dosing and 100 ppm B (black circle, filled) and b) 1% adsorbent and 200ppm B (circle, unfilled). Dashed line represents theoretical maximal binding capacity of 28 mg B/g adsorbent.

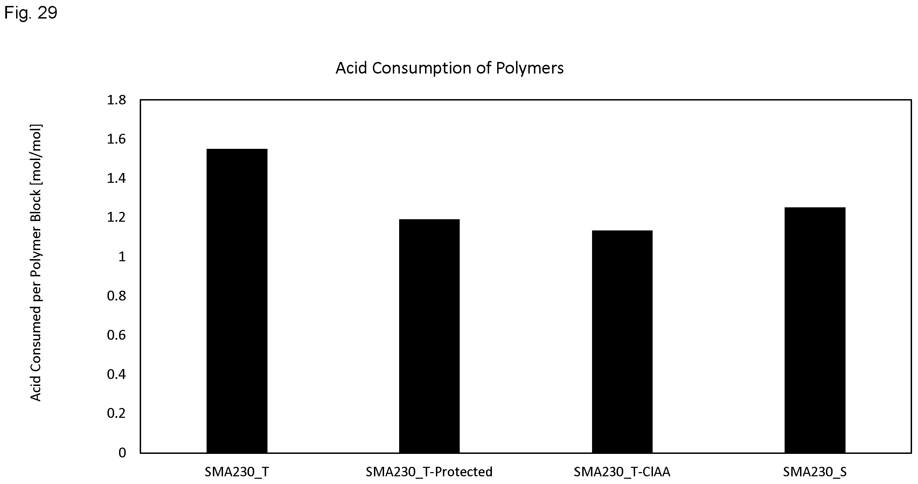

Figure 29: Acid consumption of polymers used in NanoNet^{™} formulations. From left to right: Polymer SMA230_{T}; polymer SMA230_{T-Protected}; polymer SMA230_{T-CIAA}), and polymer SMA230_{S}.
Figure 30: Binding capacity of NanoNet^{™} containing 1% SB-S12 and various polymers. Binding capacity of NanoNets^{™} formulated with SB-S12 and different polymers (from left to right: Polymer SMA230_{T}; polymer SMA230_{T-Protected}; polymer SMA230_{T-CIAA}), and polymer SMA230_{S}) at 100 ppm boron in deionized water samples. Binding experiments were performed at pH 9 and at ambient temperature.
Figure 31: Regeneration of SMA230_{T}-SB-S12 in water samples with 200ppm B over 5 cycles using a 4-step (black square, filled) and 3-step (black square, unfilled), respectively.
Figure 32: Scheme illustrating a general boron removal process with stacked filter membranes. In this scheme "NNB" refers to NanoNet^{™} with absorbed Boron. This process is beneficial for a broad range of boron concentration. The boron removal process is dependent on NanoNet^{™} concentration, concentration factor, flux, and membrane pore size during ultrafiltration.
Figure 33: Boron binding scaffold permeation through enhanced ultrafiltration. A) Concentration of NanoNet^{™} surfactant (unfilled square) and polymer (filled square) attrition through 30 kDa PES flat-sheet membrane in enhanced ultrafiltration system determined by TOC analysis. B) Surfactant stabilizing polymer concentration in permeate determined via HPLC analysis.

### DETAILED DESCRIPTION

As used herein, exemplary surfactants may be referred to using interchangeable terminology. In particular, the WB-S surfactants may be referred to as WB-S surfactants, WB-S-[number] surfactants or WB-S surfactants, which refers to weak base surfactants. Further, in some cases the phrase WB-S (WB-S [number]) refers to the specific surfactant having an alkyl chain of the number. Further SB-S12 refers to a C₁₂ epoxide surfactant and the term SB-S20 refers to a C₁₆ glycidyl ether surfactant.

As used herein, the term "moiety" refers to the radical of a molecule that is attached to another moiety. As used herein, the symbol 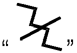 indicates the point at which the displayed moiety is attached to the remainder of the molecule. This is sometimes referred to as a point of attachment. For example, NH₂-(moiety), wherein moiety is 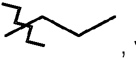 would mean NH₂-CH₂-CH₂-CH₃.

As used herein, the phrases "Cₓ to C_{y}", and/or "Cₓ-C_{y}" where x and y are integers refers to the number of carbon atoms in the main carbon chain (i.e. without regard to any substituent groups that may be present) of a particular moiety and means that the particular moiety has as few as x carbon atoms and as many as y carbon atoms. For example, the phrase "C₅ to C₂₀" refers to a moiety having as few as 5 carbon atoms and as many as 20 carbon atoms in its main carbon chain. The phrase encompasses all integers and ranges within the broad range as if each individual integer and range were explicitly recited. For example, the term "C₅ to C₂₀" explicitly teaches and describes moieties having 5, 6, 7, 8, 9, 10, 11, 12, 13, 14, 15, 16, 17, 18, 19, 20, 5-20, 5-19, 5-18, 5-17, 5-16, 5-15, 5-14, 5-13, 5-12, 5-11, 5-10, 5-9, 5-8, 5-7, 5-6, 6-20, 6-19, 6-18, 6-17, 6-16, 6-15, 6-14, 6-13, 6-12, 6-11, 6-10, 6-9, 6-8, 6-7, 7-20, 7-19, 7-18, 7-17, 7-16, 7-15, 7-14, 7-13, 7-12, 7-11, 7-10, 7-9, 7-8, 8-20, 8-19, 8-18, 8-17, 8-16, 8-15, 8-14, 8-13, 8-12, 8-11, 8-10, 8-9, 9-20, 9-19, 9-18, 9-17, 9-16, 9-15, 9-14, 9-13, 9-12, 9-11, 9-10, 10-20, 10-19, 10-18, 10-17, 10-16, 10-15, 10-14, 10-13, 10-12, 10-11, 11-20, 11-19, 11-18, 11-17, 11-16, 11-15, 11-14, 11-13, 11-12, 12-20, 12-19, 12-18, 12-17, 12-16, 12-15, 12-14, 12-13, 13-20, 13-19, 13-18, 13-17, 13-16, 13-15, 13-14, 14-20, 14-19, 14-18, 14-17, 14-16, 14-15, 15-20, 15-19, 15-18, 15-17, 15-16, 16-20, 16-19, 16-18, 16-17, 17-20, 17-19, 17-18, 18-20, 18-19, and 19-20 carbon atoms.

As used herein, the term "alkyl" by itself or as part of another substituent, means, unless otherwise stated, a straight or branched chain, or cyclic hydrocarbon radical, or combination thereof, which may be fully saturated, mono- or polyunsaturated and can include di- and multivalent radicals, having the number of carbon atoms designated (e.g. C₁-C₁₀ or 1- to 10-membered means one to ten carbons). Examples of saturated hydrocarbon radicals include, but are not limited to, groups such as methyl, ethyl, n-propyl, isopropyl, n-butyl, t-butyl, isobutyl, sec-butyl, cyclohexyl, (cyclohexyl)methyl, cyclopropylmethyl, homologs and isomers of, for example, n-pentyl, n-hexyl, n-heptyl, n-octyl, and the like. An unsaturated alkyl group is one having one or more double bonds or triple bonds. Examples of unsaturated alkyl groups include, but are not limited to, vinyl, 2-propenyl, crotyl, 2-isopentenyl, 2-(butadienyl), 2,4-pentadienyl, 3-(1,4-pentadienyl), ethynyl, 1- and 3-propynyl, 3-butynyl, and the higher homologs and isomers. The term "alkyl" is meant to include both substituted and unsubstituted forms of the indicated radical, unless otherwise clear from context. Preferred substituents are provided below.

As used herein, the term "substituted" refers to the replacement of a hydrogen atom on a compound with a substituent group. A substituent may be a non-hydrogen atom or multiple atoms of which at least one is a non-hydrogen atom and one or more may or may not be hydrogen atoms. For example, without limitation, substituted compounds may comprise one or more substituents selected from the group consisting of: R", OR", NR"R"', SR", halogen, SiR"R‴Rʺʺ, OC(O)R", C(O)R", CO₂R", CONR"R"', NR‴C(O)₂R", S(O)R", S(O)₂R", CN, PO₄R, and NO₂.

As used herein, each R", R‴, and Rʺʺ may be selected, independently, from the group consisting of: hydrogen, halogen, oxygen, substituted or unsubstituted heteroalkyl, substituted or unsubstituted aryl, substituted or unsubstituted alkyl, alkoxy or thioalkoxy groups, and arylalkyl groups.

As used herein the term "Nanonet^{™}" and/or "NanoNet^{™}" (used interchangeably) refers to a particle that is a formed by an association between a polymer and surfactant aggregate. The NanoNet^{™} self-assembles in an aqueous environment, is stable in aqueous solution, and is comprised of i) a polymer and ii) a surfactant aggregate. NanoNets^{™} remain associated at lower concentrations relative to surfactant aggregates in the absence of the polymer. The solution stability of NanoNets^{™} may be disrupted by the addition of a suitable destabilization material. Without being limited by theory, it is believed that NanoNets^{™} are the result of interactions between the alkyl chains of the surfactants and the alkyl chains of the hydrophobic portions of the polymer. Often, NanoNets^{™} are colloidal particles comprising amphipathic block co-polymers and surfactants. The amphipathic block co-polymers often comprise a hydrophilic functional group and a hydrophobic functional group.

As used herein, the term "aqueous solution" refers to a liquid environment in which water is a major component. Examples of aqueous solutions include, but are not limited to, wastewater, aqueous material recovered from a process, (such as sewage sludge, animal manure, food processing waste), oil and gas wastewater, used fracking fluid, industrial effluent, ground water, brine, and the like.

In illustrative embodiments, there is provided a composition comprising:
(a) compound of formula (I): 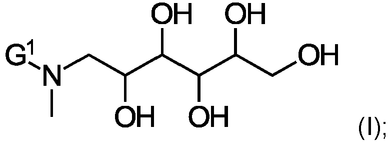 and
(b) a compound of formula (II):

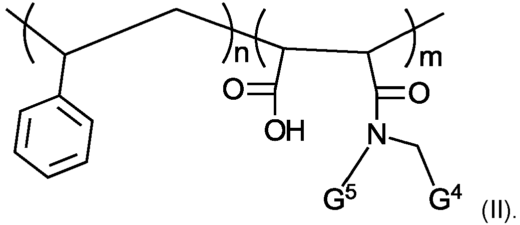

In formula (I), G¹ may be: 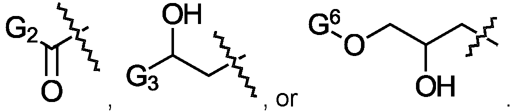 In some embodiments, G¹ is preferably 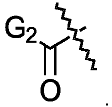 In other embodiments, G¹ is preferably 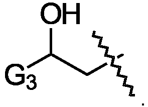 In other embodiments, G1 is preferably

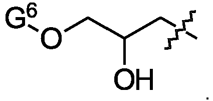

In formula (I) G², when present, may be a straight, saturated, unsubstituted C₅ to C₂₀ alkyl; a branched, saturated, unsubstituted C₅ to C₂₀ alkyl; a straight, saturated, substituted C₅ to C₂₀ alkyl; a branched, saturated, substituted C₅ to C₂₀ alkyl; a straight, unsaturated, unsubstituted C₅ to C₂₀ alkyl; a branched, unsaturated, unsubstituted C₅ to C₂₀ alkyl; a straight, unsaturated, substituted C₅ to C₂₀ alkyl; or a branched, unsaturated, substituted C₅ to C₂₀ alkyl. As set out above, the range of C₅ to C₂₀ encompasses all integers and ranges of integers, inclusively. In some preferred embodiments, G² is a C₅ to C₂₀ straight, saturated, unsubstituted alkyl; or a C₅ to C₂₀ straight, unsaturated, unsubstituted alkyl. In some other preferred embodiments, G² is a C₈ to C₁₈ straight, saturated, unsubstituted alkyl; or a C₈ to C₁₈ straight, unsaturated, unsubstituted alkyl. In other preferred embodiments, G² is a C₉ to C₁₂ straight, saturated, unsubstituted alkyl; or a C₉ to C₁₂ straight, unsaturated, unsubstituted alkyl. In other preferred embodiments, G² is a C₉ straight, saturated, unsubstituted alkyl; or a C₉ straight, unsaturated, unsubstituted alkyl. In other preferred embodiments, G² is a C₁₂ straight, saturated, unsubstituted alkyl; or a C₁₂ straight, unsaturated, unsubstituted alkyl. In some preferred embodiments, G² is a C₁₈ saturated or unsaturated alkyl.

In formula (I) G³, when present, may be a straight, saturated, unsubstituted C₅ to C₂₀ alkyl; a branched, saturated, unsubstituted C₅ to C₂₀ alkyl; a straight, saturated, substituted C₅ to C₂₀ alkyl; a branched, saturated, substituted C₅ to C₂₀ alkyl; a straight, unsaturated, unsubstituted C₅ to C₂₀ alkyl; a branched, unsaturated, unsubstituted C₅ to C₂₀ alkyl; a straight, unsaturated, substituted C₅ to C₂₀ alkyl; or a branched, unsaturated, substituted C₅ to C₂₀ alkyl. As set out above, the range of C₅ to C₂₀ encompasses all integers and ranges of integers, inclusively. In some preferred embodiments, G³ is a C₅ to C₂₀ straight, saturated, unsubstituted alkyl; or a C₅ to C₂₀ straight, unsaturated, unsubstituted alkyl. In some other preferred embodiments, G³ is a C₈ to C₁₈ straight, saturated, unsubstituted alkyl; or a C₈ to C₁₈ straight, unsaturated, unsubstituted alkyl. In some other preferred embodiments, G³ is a C₉ to C₁₂ straight, saturated, unsubstituted alkyl; or a C₉ to C₁₂ straight, unsaturated, unsubstituted alkyl. In some other preferred embodiments, G³ is a C₉ straight, saturated, unsubstituted alkyl; or a C₉ straight, unsaturated, unsubstituted alkyl. In some other preferred embodiments, G³ is a C₁₂ straight, saturated, unsubstituted alkyl; or a C₁₂ straight, unsaturated, unsubstituted alkyl.

In formula (I) G⁶, when present, may be a straight, saturated, unsubstituted C₅ to C₂₀ alkyl; a branched, saturated, unsubstituted C₅ to C₂₀ alkyl; a straight, saturated, substituted C₅ to C₂₀ alkyl; a branched, saturated, substituted C₅ to C₂₀ alkyl; a straight, unsaturated, unsubstituted C₅ to C₂₀ alkyl; a branched, unsaturated, unsubstituted C₅ to C₂₀ alkyl; a straight, unsaturated, substituted C₅ to C₂₀ alkyl; or a branched, unsaturated, substituted C₅ to C₂₀ alkyl. As set out above, the range of C₅ to C₂₀ encompasses all integers and ranges of integers, inclusively. In some preferred embodiments, G⁶ is a C₅ to C₂₀ straight, saturated, unsubstituted alkyl; or a C₅ to C₂₀ straight, unsaturated, unsubstituted alkyl. In some other preferred embodiments, G⁶ is a C₈ to C₁₈ straight, saturated, unsubstituted alkyl; or a C₈ to C₁₈ straight, unsaturated, unsubstituted alkyl. In some other preferred embodiments, G⁶ is a C₉ to C₁₂ straight, saturated, unsubstituted alkyl; or a C₉ to C₁₂ straight, unsaturated, unsubstituted alkyl. In some other preferred embodiments, G⁶ is a C₉ straight, saturated, unsubstituted alkyl; or a C₉ straight, unsaturated, unsubstituted alkyl. In some other preferred embodiments, G⁶ is a C₁₂ straight, saturated, unsubstituted alkyl; or a C₁₂ straight, unsaturated, unsubstituted alkyl. In some preferred embodiments, G⁶ is a C₁₆ alkyl.

In formula (II), G⁴ is 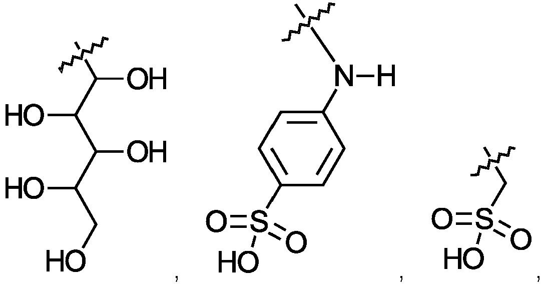 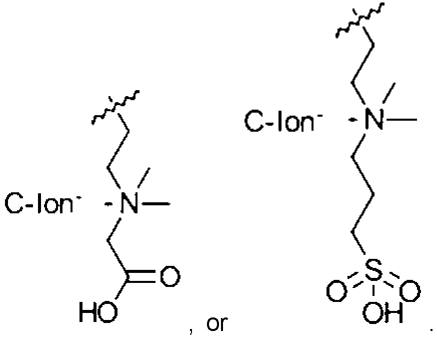 In some preferred embodiments, G⁴ is 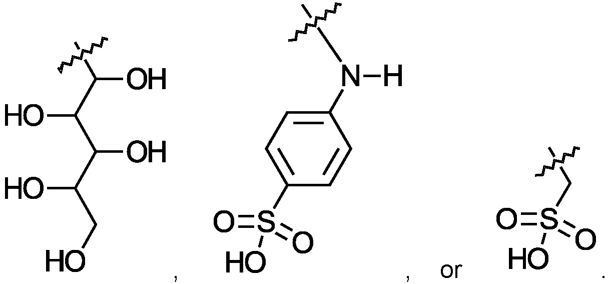 In some preferred embodiments, G⁴ is 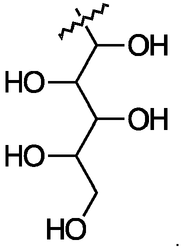 In some other preferred embodiments, G⁴ is 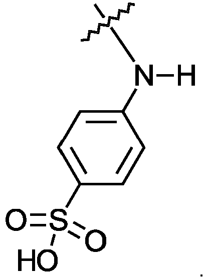 In some other preferred embodiments, G⁴ is 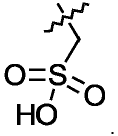 In some other preferred embodiments, G⁴ is 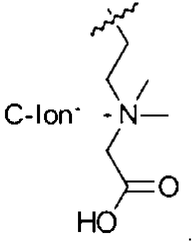 In some other preferred embodiments, G⁴ is

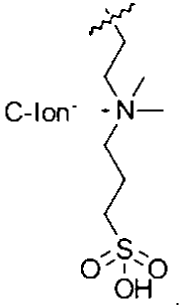

As used here, the term " C-Ion" refers to a counter ion. A counter ion is any suitable ion or ions that have the equal and opposite charge to the moiety to which it is associated. In some embodiments, the counter ion is a halogen. In some preferred embodiments, the counter ion is chloride.

In formula (II), G⁵ is H, a straight, saturated, unsubstituted C₁ to C₆ alkyl, or

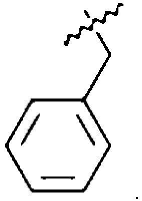

As set out above, the range of C₁ to C₆ encompasses all integers and ranges of integers, inclusively. In some preferred embodiments, G⁵ is H, or a straight, saturated, unsubstituted C₁ to C₆ alkyl. In some embodiments, G⁵ is preferably a C₁ or C₂ alkyl. In some other preferred embodiments, G⁵ is methyl (i.e. a C₁ alkyl). In some preferred embodiments G⁵ is H. In some preferred embodiments, G⁵ is

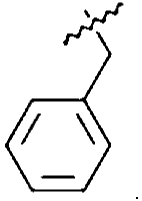

In Formula (II), n+m is a number that provides a polymer having an average molecular weight of from about 5 KDa to about 130 KDa. This means that n+m is in the range of from 20 to 600. In some preferred embodiments, n+m is in the range of from 100 to 600. In some other preferred embodiments n+m is in the range of from 200 to 600. In some other preferred embodiments, n+m is in the range of from 300 to 600. The ratio of n:m is in the range of from 1:1 to 3:1. Preferably, n:m is in a ratio of 1:1. More preferably, n:m is in the ratio of 2:1. More preferably, n:m is in the ratio of 3:1.

As is often the case with polymers, the composition of bulk polymer comprises individual polymers having different molecular weights and are often obtained and/or sold as an average molecular weight, meaning that some of the individual polymers within the bulk polymer may have above or below the average molecular weight and many of the individual polymers will have the average molecular weight. It is acceptable in embodiments of the present invention that bulk polymers having individual polymers with different molecular weights from each other are used. It is also acceptable in embodiments of the present invention that bulk polymers having only individual polymers with the same molecular weight as each other are used. A person of skill in the art of polymers will be familiar with this approach to average molecular weights of polymers and will readily be able to identify polymers, both bulk polymers and individual polymers that are suitable for use in compositions of the present invention based on this teaching.

Compositions of the present invention often have a wt% ratio of the compound of formula (I):the compound of formula (II) in the range of 0.5:1 to 2:1. In some preferred embodiments, the wt% ratio of the compound of formula (I):the compound of formula (II) is in the range of 1:1 to 2:1. In some other preferred embodiments, the wt% ratio of the compound of formula (I):the compound of formula (II) is 2:1. In some other preferred embodiments, the wt% ratio of the compound of formula (I):the compound of formula (II) is 1:1. In some other preferred embodiments, the wt% ratio of the compound of formula (I):the compound of formula (II) is 0.5:1.

Boron complexation as boric acid and borate ion has been demonstrated to occur with cis-diols. A common functional group utilized for boron complexation is N-methyl glucamine. Attachment of hydrocarbon chains of varying lengths to the nitrogen on the N-methylglucamine (NMG) was generally prepared using two separate approaches (scheme 1 and scheme 2 below). NanoNet^{™} formation requires an alkyl chain length of >6. Accordingly, NMG-based surfactants with varying alkyl chain lengths (see examples) were prepared via an epoxide (EPOX) and acyl chloride (WB-S) synthesis routes. To facilitate additional boron binding, the scaffold polymer (Styrene Maleic Anhydride) was reacted with additional NMG to form SMA-NMG (Figure 1, Scheme 3). WB-S surfactants were synthesized and characterized by NMR and FTIR, and purities ranged from 60 to 70%. Epoxide surfactant was synthesized at a purity in excess of 90%. Schemes 1 to 3 below provide for general synthetic approaches that may be used to prepare components of the present invention. A person of skill in the art will readily be able to adapt the schemes below to prepare more than the specific molecules exemplified in these schemes.

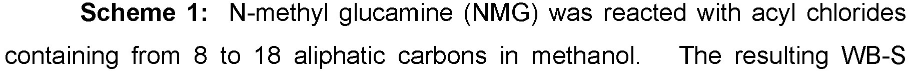

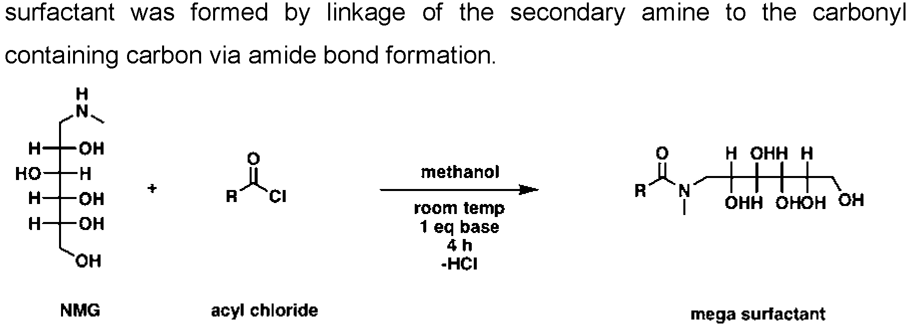

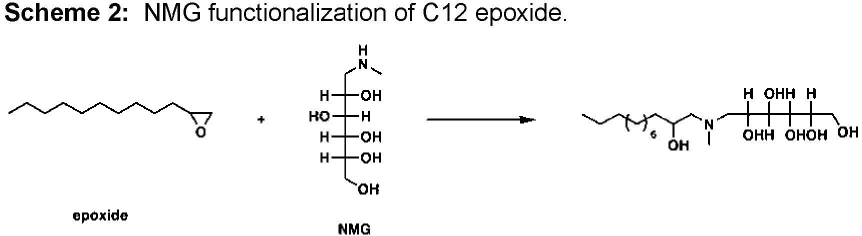

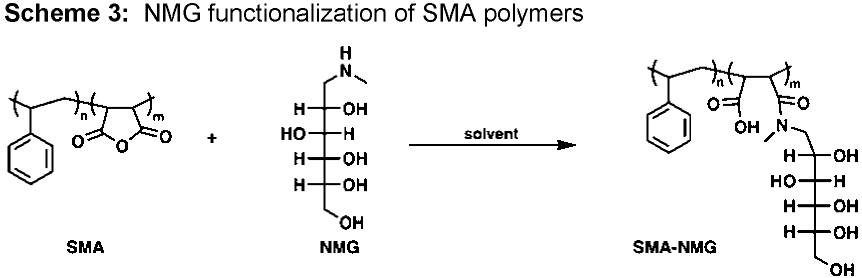

Specific examples of how to make specific compounds for use in the present invention are provided in the Examples section below. Once the compounds are made, they may be mixed together (where specific examples of such mixing are given in the Examples section below) and the compositions may be added to an aqueous solution for which boron treatment is desired. Specific examples of using the invention are provided in the Examples section below.

NanoNets^{™} according the present invention may be made by mixing, in an aqueous environment, a polymer and a surfactant, and then added to an aqueous solution for treatment. In illustrative embodiments, there is provided a method of treating an aqueous solution using NanoNets^{™} described herein. An example of such a method is injecting a solution of NanoNets^{™} into a liquid flow. The manner of injection may be through any method known to a person of skill in the art, and is often through a pump, such as a diaphragm pump. The NanoNet^{™} solution may be injected into the fluid flow alone, or concurrently with a gas or other water chemicals. The NanoNet^{™} solution may also be injected through an injection coil followed by a static mixer. In such a case it may be necessary to first dilute the NanoNet^{™} solution to facilitate mixing in a pipe.

Tables 3 and 4 below show some examples of some compounds suitable for use in compositions of the present invention.

**Table 3. Boron binding surfactants.**

| **CHEMICAL NAME** | **Alternative nomenclature** | **Structure** |
|---|---|---|
| *N*-methyl-*N*-(2,3,4,5,6-pentahydroxyhexyl)octanamide | Mega 8; or WB-S 8 | 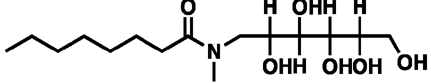 |
| *N*-methyl-*N*-(2,3,4,5,6-pentahydroxyhexyl)nonanamide | Mega 9; or WB-S 9 | 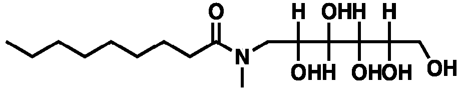 |
| *N*-methyl-*N*-(2,3,4,5,6-pentahydroxyhexyl)decanamide | Mega 10; or WB-S 10 | 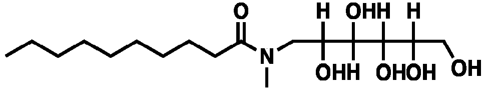 |
| *N*-methyl-*N*-(2,3,4,5,6-pentahydroxyhexyl)dodecanamide | Mega 12; or WB-S 12 | 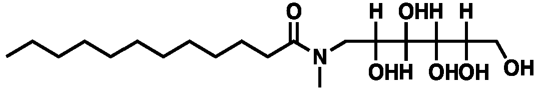 |
| *N*-methyl-*N*-(2,3,4,5,6-pentahydroxyhexyl)stearamide | Mega 18; or WB-S 18 | 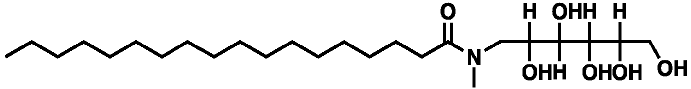 |
| 6-((2-hydroxydodecyl)(methyl)amino)hex ane-1,2,3,4,5-pentaol | C12-Epoxide; or SB-S12 | 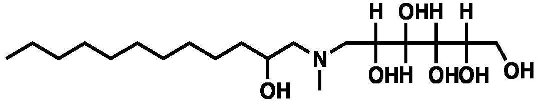 |
| 6-((3-(hexadecyloxy)-2-hydroxypropyl)(methyl)amino)hexa ne-1,2,3,4,5-pentaol | Glycidyl Ether; or SB-S20 | 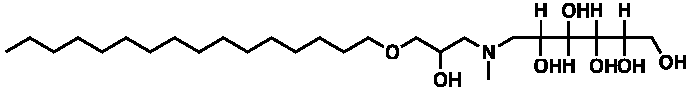 |

**Table 4. Surfactant solubilizing polymers.**

| **CHEMICAL NAME** | **Alternative nomenclature** | **Starting SMA polymer MW** | **Ratio n:m in polymer n = styrene m = hydrophilic functional group** | **Structure of repeating block** |
|---|---|---|---|---|
| Poly(styrene)-*co*-(4-oxo-4-((2-sulfoethyl)amino)but-2-enoic acid | | *M*ₙ = 3,540 | | 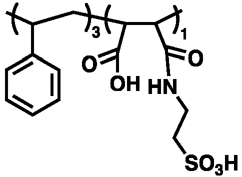 |
| | SMA125_{T} | *M*_{w} = 7,200 | 3:1 | |
| | | Ð = 2.04 | | |
| Poly(styrene)-*co*-(4-oxo-4-((2-sulfoethyl)amino)but-2-enoic acid | SMA130_{T} | *M*ₙ = 4,560 | 2:1 | 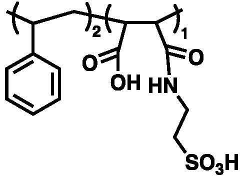 |
| | | *M*_{w} = 9,700 | | |
| | | Ð = 2.13 | | |
| Poly(styrene)-*co*-(4-oxo-4-((2-sulfoethyl)amino)but-2-enoic acid | SMA 230_{T} | *M*ₙ = 14,800 | 2:1 | 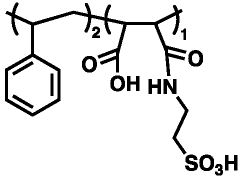 |
| | | *M*_{w} = 26,920 | | |
| | | Ð = 1.82 | | |
| Poly(styrene)-*co*-(4-(methyl(-2,3,4,5,6-pentahydroxyhexyl)amino)-4-oxobut-2-enoic acid) | SMA125_{NMG} | *M*ₙ = 3,540 | 3:1 | 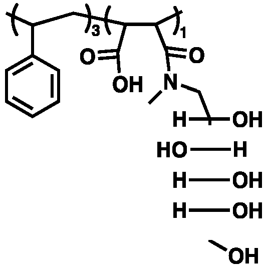 |
| | | *M*_{w} = 7,200 | | |
| | | Ð = 2.04 | | |
| Poly(styrene)-*co*-(4-(methyl(-2,3,4,5,6-pentahydroxyhexyl)amino)-4-oxobut-2-enoic acid) | SMA130_{NMG} | *M*ₙ = 4,560 | 2:1 | 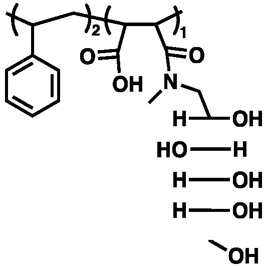 |
| | | *M*_{w} = 9,703 | | |
| | | Ð = 2.13 | | |
| Poly(styrene)-*co*-(4-(methyl(-2,3,4,5,6-pentahydroxyhexyl)amino)-4-oxobut-2-enoic acid) | SMA230_{NMG} | *M*ₙ = 14,800 | 2:1 | 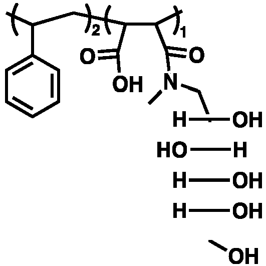 |
| | | *M*_{w} = 26,920 | | |
| | | Ð = 1.82 | | |
| Poly(styrene)-*co*-(-3-(3-carboxyacrylamido)-*N-*(carboxymethyl)-*N,N-*dimethylpropan-1-aminium chloride | (SMA230_{T-CIAA}) | *M*ₙ = 14,800 | 2:1 | 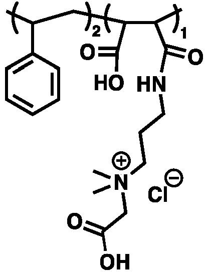 |
| | | *M*_{w} = 26,920 | | |
| | | Ð = 1.82 | | |
| Poly(styrene)-*co*-(((3-(3-carboxyacrylamido)propyl)(methyl)(3-sulfopropyl)-λ⁴-azaneyl)methylium | SMA230_{S} | *M*ₙ = 14,800 | 2:1 | 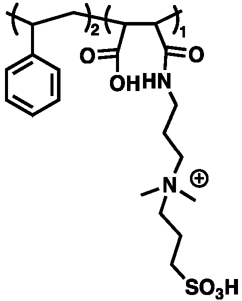 |
| | | *M*_{w} = 26,920 | | |
| | | Ð = 1.82 | | |
| Poly(styrene)-*co*-(-2-(4-(benzyloxy)-4-oxobut-2-enamido)ethane-1-sulfonic acid) | SMA230_{T-Protected} | *M*ₙ = 14,800 | | 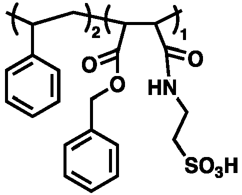 |
| | | *M*_{w} = 26,920 | 2:1 | |
| | | Ð = 1.82 | | |

### Examples

The following examples are illustrative of some of the embodiments of the invention described herein. These examples do not limit the spirit or scope of the invention in any way.

In the following examples, the following methods, reagents, equipment and protocols were used:

### Assessing stability of boron binding surfactants in presence and absence of SMA-polymers:

To probe the stability/solubility of the surfactants in the presence of SMA-Taurine polymers (SMA_{T}), boron binding surfactant SB-S12 (2% solutions, 0.02 g/mL) were combined with a various ratio of SMA-Taurine polymer (4% solutions, 0.04 g/mL). All components were mixed in a 200 microL centrifuge tube or a skirted 96-well PCR plate. The total tube volume was 200 microL, except when conditions at pH 2 were employed, in which case the total volume was 220 microL. The mixtures were sealed and heated in an Applied Biosystems Veriti 96 well Thermal cycler for 30 minutes at 90 °C, quickly cooled to 25 °C and held for 10 minutes. All samples were pipetted into a 96 well plate and absorbance at 540 nm was measured after desired times. Data points represent average values of replicate samples and error bars represent standard deviation values. It should be noted that when no error bars are present, one measurement was deemed an outlier and the highest turbidity measurement was kept.

### Equipment and Materials:

Poly(styrene-co-maleic acid) polymer, SMA130, SMA125, SMA230, and SMA150 were purchased from Jiaxing Huawen Chemical Co., Ltd. *N*-methyl-*D*-glucamine (CAS no. 6284-40-8), *N*-nonanoyl-*N*-methylglucamine (WB-S 9, CAS no. 85261-19-4), *N*-decanoyl-*N*-methylglucamine (WB-S 10, CAS no. 85261-20-7), octanoyl chloride (CAS no 111-64-8), lauroyl chloride (CAS no. 112-16-3), oleoyl chloride (CAS no. 112-77-6), hexadecyl glycidal ether (CAS no 15965-99-8), 1,2-epoxydodecane (CAS no 2855-19-8), 2-Aminoethanesulfonic acid (CAS no 107-35-7)were purchased from Sigma Aldrich^{™}. Amberlite IRA-743^{™} was purchased from DOW Chemicals^{™}. Methanol (BioShop, CAS no. 67-56-1, reagent grade) and acetonitrile (Fisher Scientific, CAS no. 75-05-8, HPLC grade 99.9%) were used as solvents. Polymers and surfactants were characterized by Fourier transform infrared (FT-IR) spectrometry. Vivaspin 500, Vivaspin 2 spin filters with MWCO of 5kDa, 10 kDa, 30 kDa, 50 kDa, 100 kDa were purchased from Sigma Aldrich^{™}. A Molecular Devices SpectraMax M2 microplate reader was used to measure absorbance of samples.

### Infra-red spectroscopy:

Fourier-transform infrared spectroscopy was performed on NMG functionalized poly(styrene-co-maleic acid) polymers, TAU functionalized poly(styrene-co-maleic acid) polymers, NMG based WB-S surfactants, and SB-S surfactants using an Agilent Technologies Cary 630 spectrometer equipped with a diamond ATR (attenuated total reflectance). Spectra were recorded in the range of 400-4000 cm⁻¹ with an average of 4 scans and a resolution of 1 cm⁻¹.

### Vivaspin Flux Procedure:

Flux as a function of concentration was found for WB-S, SMA130_{NMG} polymer and the NanoNet^{™} made up of these materials at a 1:1 weight ratio polymer to surfactant. Vivaspin filters of 5 kDa, 10 kDa, 50 kDa and 100 kDa MWCO were used. Before testing, all filters were treated with deionized water and spun for 10 minutes. Each filter was pre weight on an analytical balance. 400 microL of solution at the desired concentration was pipetted into the filter. The filter is centrifuged until sufficient volume has passed through the membrane (10-120 microL). The tube containing the filtrate was weighed on the analytical balance to determine the mass permeate. The filtrate was then pipetted back into the filter, and the process was repeated. Three readings were recorded for each process. The mass permeate was converted to volume under the presumption that the solution has the density of water. The flux was calculated by using the area of the membrane. See equation 1. $Flux = \frac{Volume}{Area \times time}$ (equation 1)

Flux between different filters of the same pore size was not always consistent, therefore all flux values were reported relative to the flux of water through that filter. Flux of other polymers and NanoNets^{™} at 10,000 ppm or 20,000 ppm (1% and 2%, respectively) were measured through 10 kDa, 50 kDa and 100 kDa filters following the same process.

### Boron removal assay in buffered solution at pH 8 and in brine solution 1 at pH 5: Preparation of stock solutions:

WB-S and SB-S12 surfactants were prepared as 2.5% (w/v) solutions in deionized water and sonicated at 50 °C with frequent vortexing until solutions were clear (approximately 1 hour). To the warm SB-S12 solution was added dropwise 6 M HCl until neutral pH was attained and the solution was soluble at ambient temperature. The 2.5% WB-S suspension at ambient temperature was prepared in deionized water at pH 6 with no pH adjustment.

A boron stock solution was prepared using 99.9% boric acid (Factory Direct Chemicals) at 45,760 ppm (8,000 ppm total boron) in deionized water. Working stock solutions were prepared by further diluting to the appropriate concentrations needed for spiked solutions.

The synthetic water was centrifuged at 4,000 rpm for 4 minutes to pelletize any undissolved calcium carbonate and decanted for experimental use. Vivaspin 2 PES filters with a 30 kDa molecular weight cut-off (GE Healthcare) were pre-treated with deionized water for 60 minutes and centrifuged prior use. Synthetic water at pH 5 was prepared following salt concentrations listed in Table 1.

**Table 1. Synthetic water composition at pH 5.**

| **Salt** | **Concentration (mg/L)** |
|---|---|
| NaCl | 3746.9 |
| KCl | 95.3 |
| CaCl₂ 2H₂O | 73.3 |
| MgCl₂ | 176.3 |
| LiCl | 8184.8 |
| CaSO₄ 2H₂O | 65.4 |
| CaCO₃ | 275 |

### Boron removal assay with varying boron concentration from 0 ppm-400 ppm: Sample preparation:

For both assays at pH 8 and pH 5, respectively, 550 microL of 1M Tris HCl buffer pH 8 and 550 microL of synthetic water were added to 1.5 mL Eppendorf centrifuge tubes. Following the buffer, 50 microL of boric acid solution at a suitable concentration was added (i.e. 200 ppm boron binding: 50 microL of 4,000 ppm boron stock solution was added into 1000 microL total binding solution). Finally, 400 microL of 2.5% adsorbent at ambient temperature was added to achieve 1% adsorbent in binding solution, and vortexed before placing on an Eppendorf Thermomixer at 600 rpm mixing speed for 30 minutes. The pH of the binding solutions was verified to ensure neither the adsorbent nor boric acid effected the final pH.

Amberlite^{™} 743 beads were hydrated overnight at pH 5 and pH 8, respectively. 10 mg wet Amberlite^{™} 743 beads were weighed into 1.5 mL Eppendorf centrifuge tubes. Following the beads, 110 microL of pH 8 Tris HCl buffer pH 8 or pH 5 synthetic water was added into their respective centrifuge tubes. To each tube, was added 80 microL of deionized water and 10 microL of boric acid solution at a suitable concentration and mixed for 30 minutes. A pH 10 Amberlite^{™} 743 resin control sample was set for binding overnight (approximately 17 hours). The sample was prepared by adding 10 mg of pH 10 hydrated beads, 183 microL deionized water, 7 microL 0.5 M KOH, and 10 microL of a suitable concentration of boric acid.

After 30 minutes mixing at ambient temperature, the binding solutions of the soluble adsorbents were transferred into Vivaspin 2 PES filter and centrifuged for 10 minutes at 4,000 rpm. 150 microL filtrate was collected for each sample. Filtrates containing unbound boron were diluted where necessary to attain concentrations between 0.5 ppm and 35.0 ppm that are within the linear region of the carminic acid assay. Amberlite^{™} 743 binding solutions were diluted directly without centrifuging. A total of 50 microL of each filtrate was analyzed using the carminic acid assay. Centrifuge filters were reused where possible by washing profusely with distilled water after use, centrifuging through with deionized water multiple times, and storing at 4 °C overnight.

### Calibration curve:

Separate calibration curves at pH 5 and pH 8 were prepared and analyzed for all different spiked boron concentrations. Control stock solutions were prepared in a similar way to the samples by adding 550 microL of 1M Tris HCl buffer pH 8 or synthetic water, 50 microL of the appropriate concentration of boric acid solution, and 400 microL of distilled water. The stock solution was diluted to achieve concentrations appropriate for the solution being analyzed (between 0.5 ppm and 35.0 ppm).

### Carminic acid assay:

The carminic acid assay was applied to determine boron concentration in aqueous solution. The following method was adapted from the reference: Floquet, C. F. A.; Sieben, V. J., MacKay, B. A., Mostowfi, F., Talanta, 2016, 150, 240-252 (https://doi.org/10.1016/j.talanta.2015.12.010).

In a 2 mL microcentrifuge tube was added 5 microL of 4M HCl solution and 50 microL supernatant from the sorption experiment followed by the slow addition of 250 microL of sulphuric acid (99.99%). After 5 minutes, 250 microL of 0.1% carminic acid solution was added. The mixture was vortexed for 10 seconds. After 30 minutes at ambient temperature, the samples were transferred into a 96-well plate and absorbance was measured at 610 nm.

### Boron removal assay with boron concentration at 9 ppm and 200 ppm at varying time points:

Separate calibration curves at 9 ppm and 200 ppm boron at pH 8 were prepared and analyzed. Binding experiments were performed with 10,000 ppm SB-S12, a 20,000 ppm complex of SB-S12 and SMA150_{T} (SMA150_{T}-SB-S1), and 20,000 ppm Amberlite^{™} 743. Binding tests were performed with PES filters with 30 kDa molecular weight cut-off. Each time point (1 minute, 3 minute, 5 minute, 10 minute, 15 minute, 20 minute, 25 minute, and 30 minute) represents a seperate binding experiment.

### Regeneration Protocol:

Vivaspin 2 PES filters with a MWCO of 5 kDa were pre-treated with 200 microL of 10,000 ppm SB-S12 and 20,000 ppm SMA150_{T}-SB-S 1 solution, respectively. The samples were centrifuged for 45 min at 4,000 rpm to a final volume of 50 microL. To the retentate was added 1 mL deionized water and the sample was centrifuged for 30 min at 4,000 rpm. The wash cycle was repeated.

### Binding experiment with 52 ppm total boron concentration:

In one instance 160 microL of 1.25% surfactant solution was added to a Vivaspin 2 filter along with 10 microL 0.6% boric acid and 30 microL 1M Tris HCl buffer pH 8. In another instance, 80 microL of 5% SMA150_{T}-SB-S 1 solution was added to a filter along with 80 microL deionized water, 10 microL 0.6% boric acid, and 30 microL 1M Tris HCl buffer pH 8. The samples were vortexed for 10 seconds to form a clear solution and placed on an Eppendorf Thermomixer R mixer shaker for 5minutes at 400 rpm. The samples were centrifuged for 45 min at 4,000 rpm until a final volume of 50 microL retentate remained. 50 microL of the filtrate was used for the carminic acid assay for quantification of unbound boron.

### Procedure for boron elution experiments:

To the 50 microL retentate was added 145 microL of deionized water and 5 microL 4 M HCl. After 5 min contact time of surfactant and NanoNet^{™} solution with 0.1 M HCl, respectively, the solutions were centrifuged to a final retentate volume of 50 microL. To each filter was added 150 microL deionized water and the samples were centrifuged. In each step, 50 microL filtrate was collected to perform the carminic acid assay.

### Boron elution from Amberlite^{™} IRA-743^{™} particles:

10 mg of pre-soaked Amberlite^{™} 743 beads at pH 10 were added to a mixture of 190 microL Tris HCl buffer pH 8 and 10 microL 0.6% boric acid. This sample represents an Amberlite^{™} 743 resin concentration of 20,000 ppm and 52 ppm total boron concentration. The mixture was vortexed for 17 hours and 50 microL of this solution was collected for determining the boron content via carminic acid assay. The remaining 150 microL solution was discarded and 175 microL deionized water and 25 microL 4M HCl were added to the resin beads to prepare a 0.5M HCl solution to elute boron from Amberlite^{™} 743. The samples were vortexed for 10 seconds and placed on an Eppendorf Thermomixer R mixer shaker for 60 minutes at 400 rpm. After an hour elution time, 50 microL supernatant was collected to perform the carminic acid assay to quantify unbound boron. The remaining solution was discarded and 150 microL of 1M NaOH was added to the beads and the mixture was vortexed for one hour. Finally, the solution was replaced with 190 microL Tris HCl buffer pH 8 and 10 microL 0.6% boric acid in preparation to start another binding cycle.

### Example 1: Boron removal by enhanced ultrafiltration of boron binding surfactants and polymers:

To assess efficacy of the synthesized boron binding surfactants, a boron solution containing 8.72 ppm boron was incubated at room temperature with varying concentrations of each surfactant. Boron binding of the surfactants occurred for 2 hours at a solution pH of 8. After equilibration of the boron-binding surfactant, the formed surfactant-boron complex was subsequently removed from solution by ultrafiltration with a pore-size of 5 kDa. After ultrafiltration, any unbound or non-complexed boron remained in the filtrate, while surfactant-boron complex remained in the retentate. The binding capacity was also measured for a solid-phase ion exchange resin (Amberlite^{™}-743) after equilibriating for 24 hours at pH 10 in the boron containing solutions. The total boron concentration of the filtrate was subsequently measured by carminic acid assay, and the total boron removal per gram of added surfactant calculated (Figure 1A). Boron binding capacity at 8.72 ppm boron loading concentrations was found to be higher for the WB-S surfactants than the Amberlite^{™}-743 binding control, and maximal binding uptake occurred with the WB-S surfactants. Binding capacity increased at lower concentrations of WB-S surfactants (from 0.5 mg/g to 1.5-2 mg/g at 20,000 ppm WB-S and 2,000 ppm WB-S, respectively) whereas the binding capacity stayed relatively constant for the Amberlite^{™}-743 resins at all loading values tested. At equivalent ion-exchange media loading (4000ppm), the WB-S surfactants displayed 12 fold higher boron binding capacity. The experiment was then repeated with a fixed concentration of surfactant (10,000 ppm of WB-S 9, or WB-S 12) with boron solutions containing 8.72, 50, or 200 ppm total boron (Figure 1B). Boron binding capacity of the WB-S surfactants followed the same general trend: WB-S9 > WB-S12 > Amberlite^{™} 743. From these results, the binding capacity of boron binding surfactants is clearly higher than an industry standard ion exchange resin. Interestingly, the boron binding capacity increased at lower concentrations of the surfactants, whereas the loading capacity of the resins stayed constant at different loading rates. This is possibly due to the solid-phase nature of the ion exchange resin; as the boron binding functional groups of the resin are fixed on the surface of the resin, the effective concentration of the binding groups is also fixed in the interior, porous matrix of the polymer where the bulk of binding occurs. Perhaps counterintuitively, the WB-S surfactants demonstrated increased boron binding capacity at lower concentrations. This could be due to varying affinities for both species of boron, as at the lower concentrations of surfactant (2000 ppm) only half of the total boron is removed. Alternatively, at higher concentrations of surfactant boron complexation may occur between two NMG groups through cis-diol complexation. It is known that boron is able to form complexes with two independent cis-diol groups at the same time. At higher concentrations of NMG to boron, this effect may become more pronounced and give a lower overall binding capacity. From these results, the boron-surfactant ratio may be an important factor in the overall efficiency of the system.

### Example 2: Elution of boron from boron binding surfactants by acidification:

To assess the ion exchange capability of the boron binding surfactants, WB-S9 and WB-S12 and Amberlite^{™}-743 resins preloaded with boron at varying concentrations were treated with acidic elution solutions. After addition of acid, the mixtures were allowed to incubate for 30 minutes to facilitate release of boron from the NMG groups, and eluted boron separated from the surfactant solutions by ultrafiltration. Each binding media was treated with propionic, hydrochloric, or phosphoric acids at 1M concentrations, and the eluted boron quantified relative to the starting binding media mass loading (Figure 2). Interestingly, the Amberlite^{™}-743 and WB-S surfactants demonstrated comparable elution efficiencies in both of the inorganic acids (Figures 2B and C), while the WB-S surfactants demonstrated up to 8 fold higher elution of boron in propionic acid (Figure 2A, 200 ppm boron loading). These results demonstrate that WB-S surfactants can be utilized as ion exchange platforms for boron binding and elution that is equal to or better than conventional ion exchange resins.

### Example 3: Effect of pH on boron binding capacity:

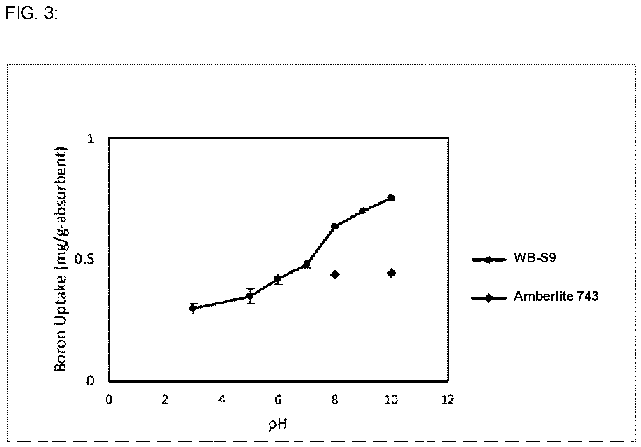

Cis-diol complexation with boron is known to occur more favourably with the Borate anion than boric acid. As a result, ion exchange processes with Amberlite^{™}-743 resins typically occur at pH 9-10 for maximal binding efficiency. To measure the effect of pH on the WB-S9 surfactant boron binding, 10,000 ppm solutions of WB-S9 was added to solutions containing 8.72 ppm boron at varying pH and the boron binding capacity measured. Consistent with a cis-diol mechanism of boron complexation, boron uptake was maximal at pH 10 (Figure 3). Interestingly, the WB-S9 surfactant retained 50% of its binding capacity at pH 6 and 30% of its binding capacity at pH 3, suggesting that the WB-S9 surfactants can also remove boric acid from solution, although at lower rates than Borate. In contrast to an Amberlite^{™}-743 resin, the WB-S9 surfactants also demonstrated equivalent boron removal capacities at reduced pH (pH of 6 for WB-S9 and pH of 8 for Amberlite^{™}-743).

### Example 4: Effect of NaCl and CaCl₂ on boron binding capacity:

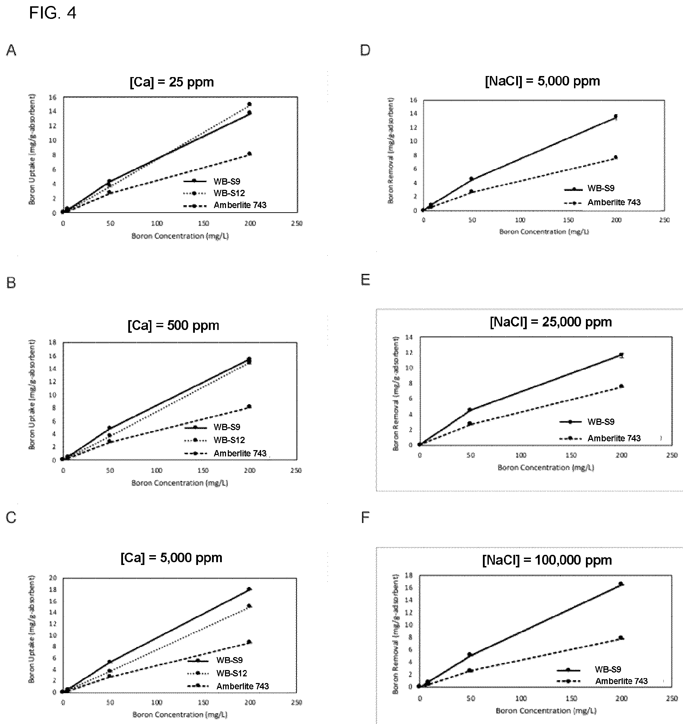

In boron treatment applications, boron is rarely the only ion present in solution. However, competition with other ions on the binding media can result severe decreases in binding efficiency for ion exchange processes. To investigate the effect of alternative ions in solution for Boron binding capacity, boron removal experiments were conducted with WB-S 9 and Amberlite^{™}-743 with increasing concentrations of either NaCl or CaCl₂ (Figure 4). Boron binding capacity remained relatively constant (18-12 mg/g and 6-7 mg/g for WB-S-9 and Amberlite^{™}-743, respectively) from 25-4,000 ppm CaCl₂ and 100 to 100,000 ppm NaCl. This result is consistent with the selective removal of boron through cis-diol complexation by the NMG groups present on the WB-S surfactants and Amberlite^{™} 743.

### Example 5: Kinetics of boron removal by WB-S surfactants:

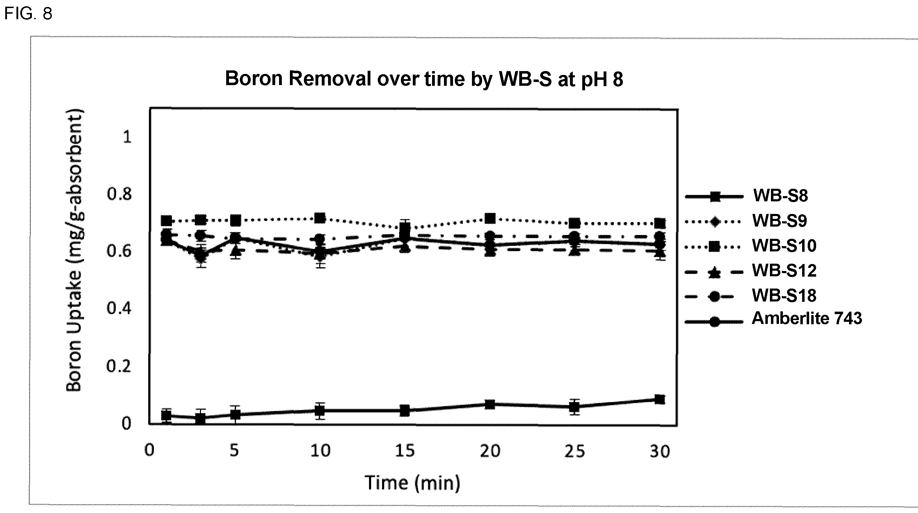

A limiting factor for solid phase extraction media are the rate of complexation of the ligand to the functional group, and diffusion of the ligand onto the surface of the ion exchange resin. As the WB-S surfactants behave as soluble colloids when associated as micelles, boron removal should theoretically not be governed by liquid-solid diffusion kinetics. Therefore the rate of boron complexation was measured for both WB-S surfactants and Amberlite^{™}-743 resin from a solution containing 8.72 ppm boron at pH 8. Interestingly, the boron complexation rate of the WB-S surfactant was faster than the assay could measure, with 100% of complexation occurring in under 1 minute of contact time (Figure 8). In contrast, the Amberlite^{™}-743 resin demonstrated significantly lower binding capacity (0.05mg/g versus 0.6-0.7 mg/g), and was unable to achieve equilibrium after 30 minutes of contact in the boron solution. This result demonstrates the enhanced binding kinetics offered by a soluble boron binding solution, which can translate to significantly reduced storage volumes in high flow treatment systems.

### Example 6: Formation of NanoNet^{™} improves surfactant aggregate stability in solution:

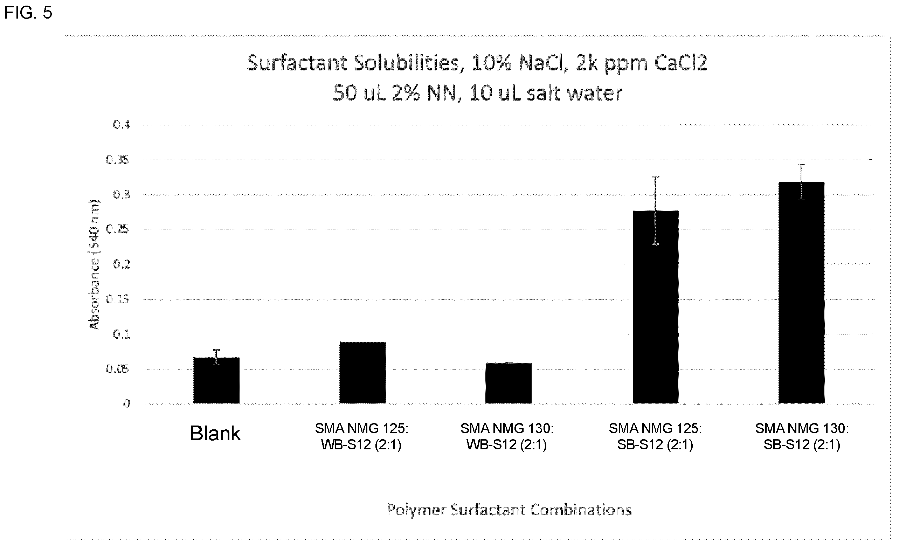

To improve boron binding surfactant stability in solution, the surfactants were formulated into NanoNets^{™}. WB-S12 and SB-S12 were resuspended in solution and mixed with varying ratios of SMA-NMG derivitaves to form NanoNets^{™}. After mixture, the solutions were heated at 60, 70, 80 or 90 °C to allow for solubilization of the aggregates and self-assembly into NanoNets^{™} or individual micelles, followed by cooling to 4 °C (Figure 5). The stability of the particles was measured by light scattering induced absorbance at 540nm. Immediately after cooling, the WB-S12 and SB-S12 were both visibly turbid, and displayed absorbance levels higher than the pure water control (Table 2). Conversely, all polymer-surfactant formulations were completely clear (Table 2). To track stability, the formulations were remeasured after 1 hour of incubation at ambient temperature (21 °C). After 1 hour, the 1:1 polymer to surfactant mass ratio formulations of the SB-S12 surfactant began to increase in turbidity, indicating the formed NanoNet^{™} was not stable (Table 1). However, the WB-S formulations at 1:1 and 2:1 and the SB-S12 surfactant at 2:1 polymer to surfactant ratio were completely stable in solution after 1 hour. From these results, it was understood that the SB-S12 surfactant required a higher polymer-surfactant ratio to form a stable NanoNet^{™}, likely due to its more hydrophobic linkage between the alkyl chain and the NMG group (amide bond versus tertiary amine). To measure salt stability of the formed complexes, the experiments were repeated with the stable NanoNet^{™} formulations at 90 degrees after addition of 1.5% NaCl and 0.3% CaCl₂ (Figure 5). After addition of salt, only the WB-S12 formulations were found to resist aggregation and maintain stability (Figure 5).

**Table 2: Effect of polymer scaffold on surfactant stability in aqueous solution.**

| **Polymer** | **Surfactant** | **Ratio Polymer to Surfactant (wt t%/wt %)** | **Aqueous solution composition** | **Stability after1 hour at 4 °C** |
|---|---|---|---|---|
| SMA 130 NMG | | 2:0 | 50 mM Tris HCl, pH 8 | No aggregation |
| SMA 125 NMG | | 2:0 | 50 mM Tris HCl, pH 8 | No aggregation |
| | WBS-12 | 0:2 | 50 mM Tris HCl, pH 8 | Aggregation |
| | SBS-12 | 0:2 | 50 mM Tris HCl, pH 8 | Aggregation |
| SMA 130 NMG | WBS-12 | 1:1 | 50 mM Tris HCl, pH 8 | No aggregation |
| SMA 125 NMG | WBS-12 | 1:1 | 50 mM Tris HCl, pH 8 | No aggregation |
| SMA 130 NMG | WBS-12 | 2:1 | 50 mM Tris HCl, pH 8 | No aggregation |
| SMA 125 NMG | WBS-12 | 2:1 | 50 mM Tris HCl, pH 8 | No aggregation |
| SMA 130 NMG | SBS-12 | 1:1 | 50 mM Tris HCl, pH 8 | Aggregation |
| SMA 125 NMG | SBS-12 | 1:1 | 50 mM Tris HCl, pH 8 | Aggregation |
| SMA 130 NMG | SBS-12 | 2:1 | 50 mM Tris HCl, pH 8 | No aggregation |
| SMA 125 NMG | SBS-12 | 2:1 | 50 mM Tris HCl, pH 8 | No aggregation |

### Example 7: Formation of NanoNet^{™} improves filterability of WB-S12:

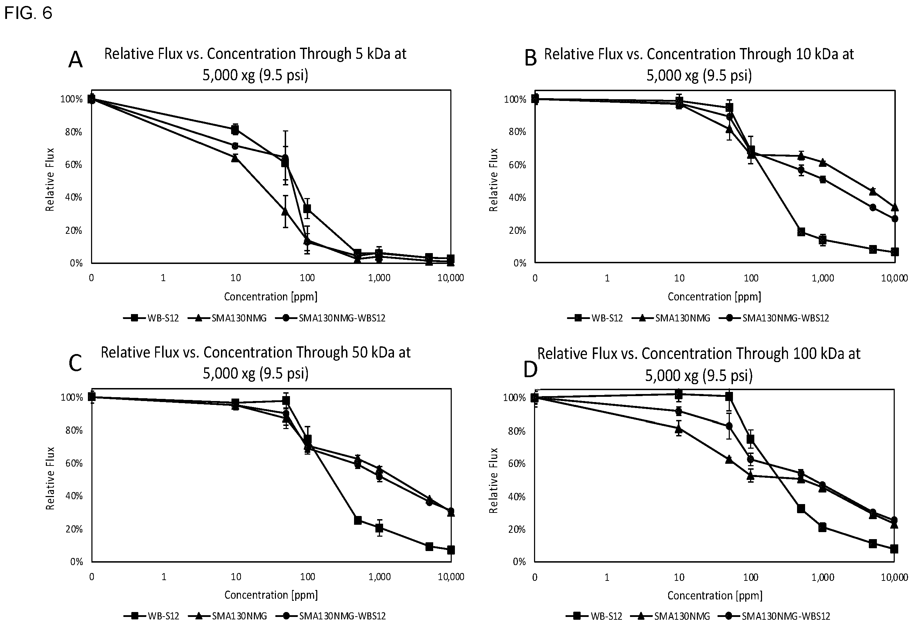

To apply surfactant enhanced ultrafiltration, the surfactant aggregates present must be filterable while maintaining low attrition. NanoNet^{™} formation stabilizes the surfactant in solution into mixed-polymer surfactant micelles. Often, these micelles should be retained in an ultrafiltration apparatus without significant fouling occurring. To measure the effect of NanoNet^{™} formation on filterability, varying concentrations of 1:1 wt% SMA130_{NMG} and WB-S12 were filtered at low applied pressure (10 PSI) on PES membranes with MWCO of 5 kDa, 10 kDa, 50 kDa, and 100 kDa and compared to flux rates of equivalent concentrations of polymer alone and surfactant alone (Figure 6). Interestingly, in all membranes tested the flux rates were significantly higher in the NanoNet^{™} formulation compared to the WB-S12 surfactant alone (Figure 6). This is may be due to the increased stability and smaller effective size of the NanoNets^{™} than the WB-S12 surfactant aggregates preventing cake-layer formation on the membrane surface. As expected, flux rates were highest with the 100 kDa membrane and lowest with the 5 kDa membrane. Due to the style of membrane utilized (spin column, Vivaspin), flux rates with the WB-S12 surfactant alone are likely higher than would be experienced in a standard dead-end filtration system. The WB-S12 surfactant could be visually seen to concentrate as a precipitate in the bottom of the spin column, leaving surfactant depleted media to penetrate the top, unblinded section of the filter. This observation likely explains the sharp drop off in flux from 3000 to 10,000 ppm of WB-S12. The insoluble surfactant aggregate was in low enough quantities that it was immediately removed from the solution during the initial stages of the filtration cycle.

### Example 8: Attrition of NanoNet^{™} B through various pore size cut-offs:

To form a cost-effective enhanced ultrafiltration process, the ion exchange media must be retained during the ultrafiltration step. Those skilled in the art will recognize that larger pore sizes can allow higher flux rates, however the loss of the binding media through the pores can quickly eliminate any economic gains of higher flow rates and less filter washing cycles by chemical replacement costs. Therefore, the attrition of a 10,000 ppm solution of SMA130_{NMG}-WB-S12 was measured through a 100 kDa membranes at an applied pressure of 10 PSI (Figure 7). After filtration, it was determined that approximately 3% of the added SMA130_{NMG}-SB-S12 remained in the permeate, while 97% of the added NanoNet^{™} B remained in the retentate. This result was encouraging, as the standard ultrafiltration pore-size cutoff is 100 kDa, while most other enhanced ultrafiltration experiments are forced to utilize 5 kDa membrane cut-offs, significantly reducing their effective flow. To measure whether the attrition was due to a sub-population of stable sub 100 kDa NanoNets^{™}, the permeate was refiltered and SMA130_{NMG}-WB-S12 content measured again (Figure 7B). Interestingly, the SMA130_{NMG}-WB-S12 in the permeate was stable in solution; 77% of particles that passed through the filter on cycle 1 remained in the permeate in cycle 2. Correspondingly, dilution and refiltration of the retentate showed a decreased concentration of SMA130_{NMG}-WB-S12 in the permeate in cycle 2 versus cycle 1 (Figure 7C). These results suggest that SMA130_{NMG}-WB-S12 is a partially heterogenouos mixture, with some smaller populations of NanoNets^{™} that must be removed from solution during the initial filtration cycles. These smaller NanoNets^{™} may be due to 1) heterogeneity in the polymer preparation, 2) impurities in the WB-S surfactant preparations, 3) are a sub-population of monomeric polymer or surfactant in equilibrium with the bound NanoNets^{™}. Attrition experiments completed with smaller pore-size cut-offs show decreased attrition rates, but 100% retention is never observed. It is likely that some equilibrium between monomeric surfactant and NanoNet^{™} is taking place and that a sub population of undersized NanoNets^{™} is formed by small polymer fragments. One option for managing the attrition rate is through pore size selection (50 kDa versus 100 kDa) and optimization of the NanoNet^{™} scaffold (for example, increasing the 6kDa scaffold to 21 kDa or 130 kDa). Increasing the NanoNet^{™} scaffold length may improve monomeric scaffold retention and may increase NanoNet^{™} effective molecular weight.

### Example 9: Physical characterization of synthesized surfactants:

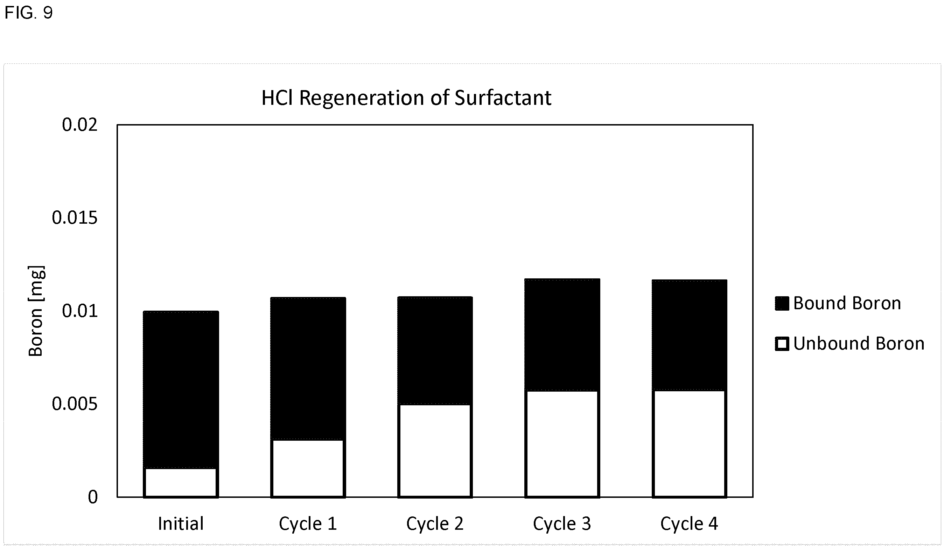

After synthesis of the WB-S, SB-S, and SMA-NMG variants and confirmation of their purities performance for boron removal was measured. The results are depicted graphically in Figures 8 and 9.

### Example 10: Boron removal capacity of boron-binding surfactants in enhanced ultrafiltration:

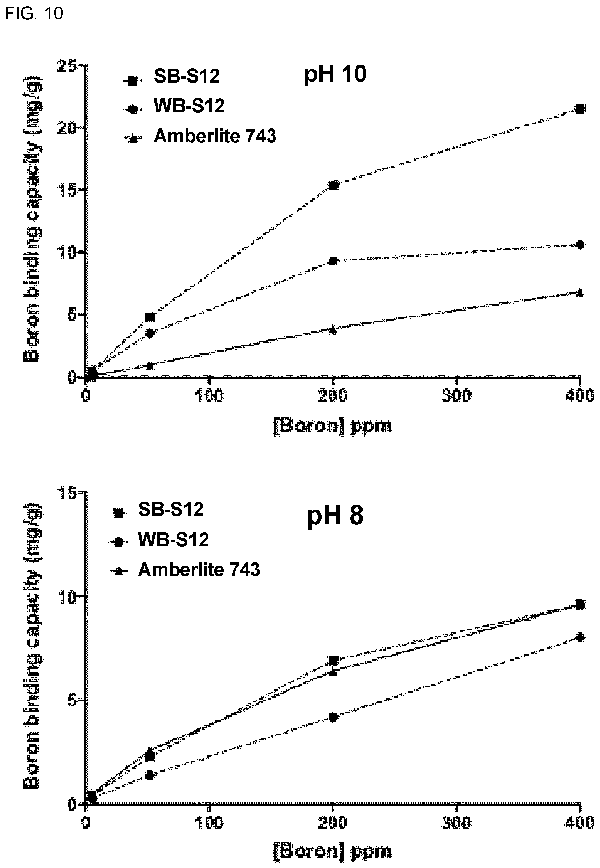

To assess the potential for micelle enhanced removal of boron from aqueous solutions, boron binding isotherms were generated with two candidate surfactants and compared to a gold-standard ion exchange resin control (Figure 10). It was found that the surfactant with higher basicity, strong-base surfactant (SB-S12), had higher boron binding capacity at all concentrations of boron tested (Figure 10A). boron binding capacity for SB-S12 at saturating boron concentrations was approximately 15 mg/g and 20 mg/g at boron concentrations of 200 ppm, and 400ppm (Figure 10A, black squares), in a solution of 50mM Tris-HCl, pH 8. In contrast, the boron binding capacity at saturating boron concentrations of the weak-base surfactant (WB-S12) was approximately 9.6 and 10.5 mg/g at 200 ppm and 400 ppm B, respectively. In contrast, the Amberlite^{™} 743 resin demonstrated boron binding capacities of 3.9 and 6.8 mg/g in solutions containing 200 ppm and 400 ppm boron, respectively. Next, the experiment was repeated in a synthetic brine at pH 5 (Figure 10B). In contrast to the higher pH experiments, boron removal was markedly decreased in the surfactants, but improved in the Amberlite^{™} 743 resin. Boron binding capacities at elevated boron levels (200 ppm B), were 6.9 mg/g, 4.2 mg/g, and 6.2 mg/g for SB-S12, WB-S12, and Amberlite^{™} 743, respectively. From these results, the strong base surfactant outperformed the Amberlite^{™} 743 control in all conditions, while the weak base surfactant only outperformed the ion exchange resin in fresh water conditions.

### Example 11: Effect of polymer complexation on Boron binding surfactant stability in aqueous solution:

To improve the solution stability of the selected boron binding surfactants, complexation with amphipathic block co-polymers was measured. Derivatization of SMA150 and SMA130 with Taurine through amide formation of the maleic anhydride block on the polymers was utilized to create salt and acid stable polymers SMA150_{T} and SMA130_{T}, respectively. The polymers were then mixed with SB-S12 at varying ratios, heated to 90 degrees to facilitate dissolution and cooled to 25 °C to facilitate complexation. The polymer-surfactant complexes were then monitored for 90 hours for destabilization and aggregation, which occurred as a white precipitate that could be quantitatively measured by light scattering induced absorbance at 540nm (Figure 11). From the results, it was observed that SB-S12 was unstable and rapidly aggregated in under 1 hour in both synthetic brine at pH 5 and salt-free buffer at pH 8 and (black circles, Figure 11A and 2B, respectively). Aggregation is unfavourable for boron removal, as it can prevent boron from interacting with the aggregated surfactant due to buried functional groups. Aggregation and will also promote cake-layer formation during filtration, leading to membrane fouling and decreased flux. At low pH values (pH 2), solutions containing SB-S12 remained free of aggregates (Figure 11B and 11C, black circles). This is likely due to protonation of the tertiary amine linking the cis-diol boron binding moiety to the alkyl chain of the surfactant, increasing solubility of the monomer. This marked increase in solubility may also be disfavoured, as it will substantially increase the critical micelle concentration of the surfactant, leading to surfactant attrition during the boron elution step of the filtration process. Addition of SMA150_{T} and SMA130_{T} to SB-S12 in a 2:1 polymer:surfactant ratio (g/g) inhibited aggregation of SB-S12 in a 50mM Tris-HCl, pH 8 solution (Figure 11B, black triangles and black squares). However, only solutions containing SMA130_{T} remained stable throughout the experiment (Figure 11B, black squares). SMA130_{T} also decreased aggregation of SB-S12 in saline solutions (Figure 11A, black squares). However, SMA150_{T} was unable to prevent destabilization of SB-S12, which fully destabilized after 15 hours in the representative brine solution (Figure 11A, black triangles). In low pH solution (pH = 2), SMA130_{T} displayed increased turbidity relative to SMA130_{T} and SB-S12 alone. However, the turbidity increase was minor and no precipitation was observed. This increase in turbidity may have occurred due to SMA130_{T} forming larger micellar aggregates with SB-S12 at lower pH than those formed with SMA-150_{T}.

### Example 12: Effect of polymer complexation on retention of boron binding surfactant in ultrafiltration:

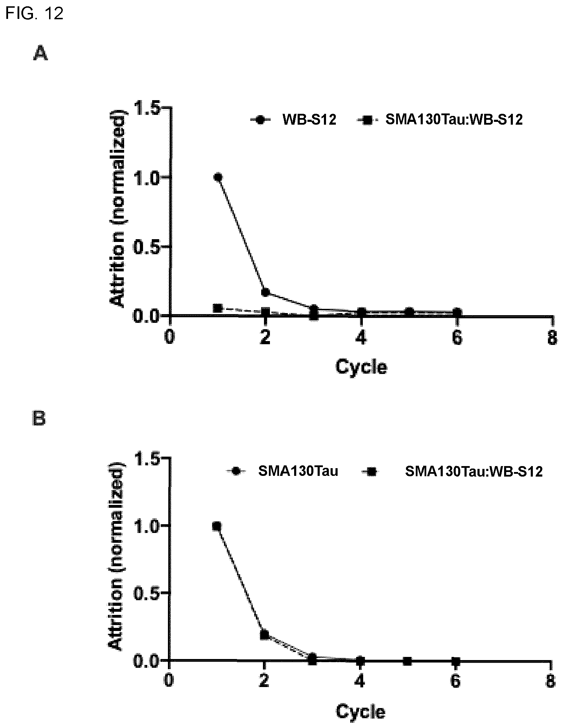

Micelle enhanced ultrafiltration is a promising approach for water treatment, but carries significant barriers to adoption. A primary barrier is attrition of the surfactant; micelle formation is governed by the critical micelle concentration of the surfactant. Below this concentration, surfactants exist as free monomers and will permeate and ultrafiltration membrane. Polymer surfactant complexes described here form at substantially lower concentrations than surfactant micelles alone. By substantially decreasing the aggregation concentration of the micelle, less monomer will be available to permeate the membrane. To investigate this property, surfactant WB-S12 was concentrated through a 100 kDa MWCO PES membrane filter, subsequently re-diluted and filtered again. This process was repeated 5 times and the concentration of WB-S12 in the filtrate determined (Figure 12A). The first and second cycles were found to demonstrate significant attrition of WB-S12, after which attrition to nominal amount (Figure 12A, black circles). In contrast, the polymer stabilized surfactant demonstrated nominal attrition immediately in cycle 1 (Figure 12A, black squares). From this result, formation of polymer surfactant complexes can be utilized to prevent attrition in micelle enhanced ultrafiltration. The experiment was subsequently repeated, but the concentrations of stabilizing polymer were examined in the filtrate (Figure 12B). It was found that a constant amount of polymer was able to permeate the membrane upon cycle 1 regardless of presence of surfactant (Figure 12B). It is likely this initial loss of polymer is due to heterogeneity of the polymer sample and represents a polymer population that does associate with the surfactant. It is therefore prudent to pre-filter a polymer-surfactant sample to avoid downstream attrition of the non-participating polymer population.

### Example 13:

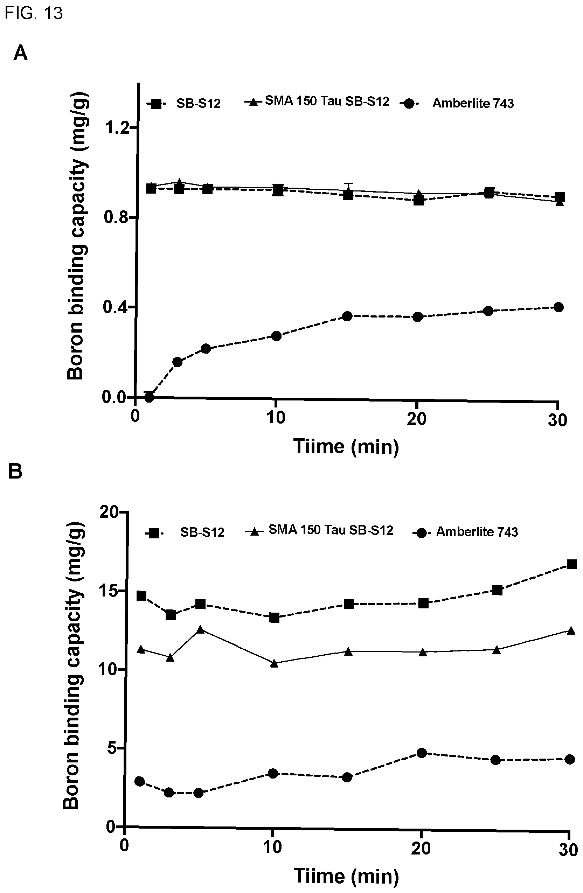

A limiting factor of ion exchange resins is they are kinetically limited; soluble contaminants must diffuse within the porous matrix of the ion exchange resin and contact the functional groups to be removed from solution. This often necessitates larger bed volumes at higher flow rates, dramatically increasing regeneration costs, infrastructure, and initial set-up cost. To compare the kinetic limitations of the boron binding surfactants, boron binding capacity over time at low boron concentrations (10 ppm), and high boron concentrations (200 ppm), was measured (Figure 13A and B). At low boron concentrations, full boron removal occurred below the time resolution of the experiment (<1 minute) for both the surfactant and the polymer complexed WB-S (Figure 13A, SB-S12, black squares and NN150T-SB-S12, black triangles). In contrast, the kinetic limitations of the solid phase ion exchange resin were apparent, as full boron removal did not occur until nearly 30 minutes. This boron removal is consistent with stated literature, which generally recommends a 10 minute contact time of the fluid on the resin bed. At 10 minutes, approximately 80% of the boron was removed from the solution. The kinetic limitations of Amberlite^{™}-743 were less apparent at high boron loading concentrations (Figure 13B), but still noticeable. Within 1 minute, approximately 60% of boron was bound in the Amberlite^{™}-743 resins (2.9 mg/g), and still required the full 30 minutes to bind up to 4.6 mg/g of boron (Figure 13B, Amberlite^{™} 743, black circles). In contrast, within 1 minute 86% and 88% of the total boron binding capacity was reached with SB-S12 and the polymer complexed SB-S12, respectively. (Figure 13B, SB-S12, black circles; SMA150_{T}-SB-S12, black triangles).

### Example 14: Effect of NanoNet^{™} on regeneration potential of boron binding surfactant:

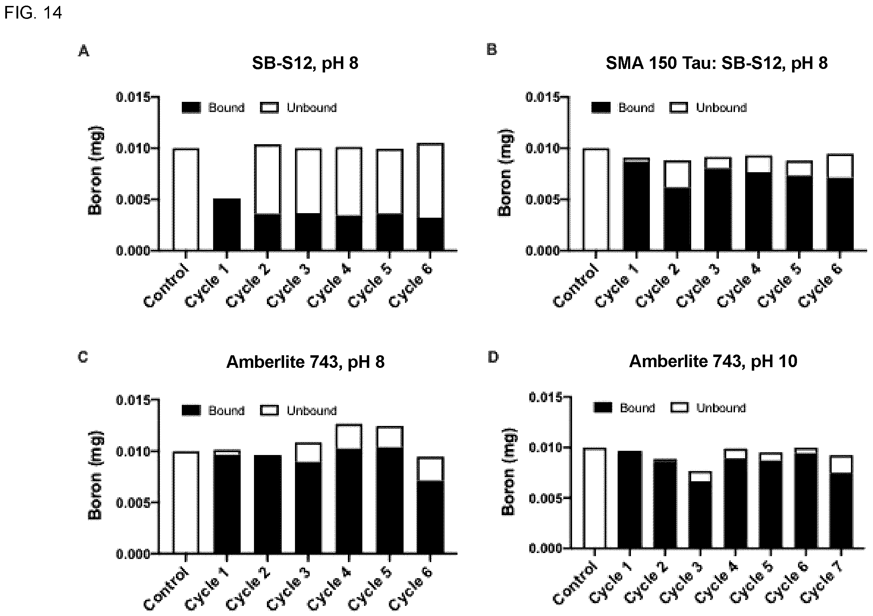

To function as an effective ion exchange method, stable regeneration is required. To test the efficacy of regeneration, surfactant SB-S12 was measured for boron binding removal after multiple cycles of acid elution in the presence and absence of stabilizing polymer (Figure 14). It was found that after the first cycle, the surfactant alone was able to remove all the boron from solution, but only 50% of the added boron could be eluted from the resin (Figure 14A). Upon adding more boron, the regenerated surfactant was only able to bind 30% of the available boron in cycle 2 (Figure 14A). After the initial drop in efficiency, the boron removal rate stayed constant at 30% (Figure 14A). In contrast, the solid phase Amberlite^{™} 743 resin control was able to maintain 90-95% removal over the first 3 cycles, and > 80% removal in cycles 3, 4 and 5 (Figure 14C). Addition of the stabilizing polymer SMA150_{T} substantially improved regeneration capabilities of the boron binding surfactant SB-S12 (Figure 14B). Cycle 2 only demonstrated a 26% loss in boron binding from cycle 1, and boron binding recovered in cycle 3 and 4, exhibiting boron pass-through 11 and 16%. Cycle 5 exhibited increased boron pass-through of 34%. In summary, the average boron removal after regeneration for SB-S12 was 34% with very low acid regeneration conditions (0.1M HCl). This removal rate increased to 76% in the presence of stabilizing polymer SMA150_{T} when regenerated with very low concentrations of acid (0.1M HCl). The Amberlite^{™} 743 sample averaged 88% at equivalent pH in low acid conditions (0.5M HCl), and 92% at pH 10 and high acid regeneration conditions (1M HCl). Although removal does decrease after the first cycle with SB-S12, addition of a stabilizing polymer can substantially improve regeneration capabilities across multiple boron removal cycles. The degree of loss in binding appears similar to that experienced after multiple cycles of the solid phase binding resin after cycle 3, and can be accomplished at relatively low acid regeneration conditions (0.1M HCl). The acid consumption is the primary operational cost component of a boron exchange resin, therefore the polymer-surfactant complex SMA_{150T}-SB-S1may produce comparable results compared to a solid phase ion exchange resin, but with 5 fold lower regeneration costs.

### Example 15: Functionalization of SMA150 with a block-co polymer ratio of [Sty]:[MA] of [1]:[1] with Taurine:

To a 250 ml round bottom flask was added taurine (3 g, 0.024 mol), 5 M NaOH (4.8 mL, 0.024 mol), 15 mL deionized water, and 45 mL acetone. The reaction mixture was stirred until the taurine completely dissolved. To the resulting clear solution was added SMA150 (4.85 g, 0.024 mol) at ambient temperature. The yellow suspension was refluxed for 3 hours. After the allotted reaction time a viscous precipitate was isolated. The reaction solution was decanted, reduced by ca. 80% volume, and the desired product was precipitated out using methanol. Both precipitates were combined and dried *in vacuo.* The isolated polymer was washed with methanol (2x10 mL), collected via centrifugation for 5 min at 4,000 rpm, and dried *in vacuo at* 50 °C. Yield: 3.22 g, 41%. FT-IR (SMA-Taurine 150, ATR, cm⁻¹): 3382, 2924, 2850, 1695, 1636, 1558, 1492, 1450, 1399, 1185, 1044, 737, 698.

### Example 16: Functionalization of SMA130 with a block-co polymer ratio of [Sty]:[MA] of [2]:[1] with Taurine:

To a 500 ml round bottom flask was added taurine (7 g, 0.056 mol), 5 M NaOH (11.2 ml, 0.056 mol), 50 ml deionized water, and 150 mL acetone. The reaction mixture was stirred until the taurine completely dissolved. To the resulting clear solution was added SMA130 (17.14 g, 0.056 mol) at ambient temperature. The yellow suspension was refluxed for 3 hours. After the allotted reaction time a viscous precipitate was isolated. The reaction solution was decanted, reduced by ca. 80% volume, and the desired product was precipitated out using methanol (30mL). Both precipitates were combined and dried *in vacuo.* The isolated polymer was washed with methanol (2x10 mL), collected via centrifugation for 5 min at 4,000 rpm, and dried *in vacuo at* 50 °C. Yield: SMA-130: 20.21 g, 83%; SMA-230: 18.49 g, 77%. FT-IR (SMA-Taurine 130, ATR, cm⁻¹): 3386, 3022, 2925, 1698, 1653, 1570, 1526, 1491, 1451, 1387, 1175, 1042, 960, 736, 698. FT-IR (SMA-Taurine 230, ATR, cm⁻¹): 3364, 3026, 2927, 1651, 1557, 1492, 1450, 1398, 1317, 1194, 1045, 842, 744, 697.

### Example 17: Functionalization of SMA130 with a block-co polymer ratio of [Sty]:[MA] of [2]:[1] with n-methyl-D-glucamine:

To a 250 ml round bottom flask was added *N,N'*-dimethylformamide (100 mL) and SMA-130 (10 g, 0.033 mol) and refluxed until the polymer dissolved, resulting in a yellow solution. To the warm solution was added n-methyl-D-glucamine (9.55 g, 0.049 mol, 1.48 equiv. relative to maleic anhydride) and refluxed for 4 hours. The reaction mixture was concentrated to approximately half the volume and stirred overnight at ambient temperature. The product was precipitated out by slow addition of 100 mL 1M HCl and filtered. The crude product was dried *in vacuo* at 50 °C. The resulting colourless, viscous material was transferred to a 50 ml centrifuge tube to which methanol was added (2x20mL) and centrifuged for 5 minutes at 4,000 rpm. The supernatant was decanted, and the isolated product was dried *in vacuo* at 50 °C. Yield:12.68 g, 86%. FT-IR (SMA-NMG-130, ATR, cm⁻¹): 3025, 2925, 1777, 1717, 1652, 1646, 1580, 1492, 1451, 1386, 1251, 1153, 1090, 1027, 758, 698, 658.

### Example 18: Synthesis of WB-S:

To a stirring suspension of N-methyl-D-glucamine (100.0 g, 0.51 mol) in methanol (1000 mL) was added DIPEA (1 eq, 89 mL). Lauroyl chloride (1 eq, 118 mL) was added slowly over 5 minutes. Upon addition, the mixture became a clear and colourless solution and HCl gas was observed. The mixture was stirred, uncovered, overnight. After the allotted reaction time, the mixture was transferred to pre-weighed 50 mL falcon tubes and centrifuged for a minimum of 12 minutes at 2500 rpm. The liquid was decanted, and the colourless solid washed repeatedly with acetonitrile and dried *via* centrifugation. The isolated product was dried overnight in a vacuum oven at 50 °C. Yield: 136 g, 70%. ¹H (400 MHz, DMSO-*d₆*) NMR spectrum: 8.50 (br s, 1H), 5.35-427 (m, 1H), 4.73-4.27 (m, 4H), 3.85-3.16 (m, 8H), 2.95-2.76 (m, 3H), 2.33-2.19 (m, 2H), 1.41 (br s, 2H), 1.19 (m, 16H), 0.81 (t, 3H). ¹³C (75 MHz, DMSO-*d₆*) NMR spectrum: δ 172.66, 172.49, 72.58, 71.66, 71.52, 71.45, 71.39, 71.35, 70.90, 70.35, 70.26, 69.88, 69.37, 68.41, 63.37, 63.35, 63.32, 51.94, 50.95, 50.86, 36.72, 33.57, 33.00, 32.74, 32.23, 31.36, 29.12, 29.09, 29.06, 29.03, 28.98, 28.88, 28.78, 25.00, 24.65, 22.15, 13.98.
FT-IR (cm⁻¹): 3395, 3327, 3101, 3010, 2916, 2848, 1742, 1623, 1493, 1413, 1376, 1322, 1301, 1256, 1230, 1206, 1167, 1105, 1079, 1067, 1031, 1008, 954, 931, 907, 884, 866, 844, 769, 680.

### Example 19: Synthesis of SB-S12 surfactant:

To a 250 mL round-bottom flask was added n-methyl-D-glucamine (10.0 g, 51.2 mmol) and 1,2-epoxydodecane (1 eq, 51.2 mmol, 9.4 g, 11.2 mL). Methanol (150 mL) was added and the reaction mixture was refluxed for 20 h. After the allotted time, the reaction mixture was cooled in a freezer and a colourless solid precipitated out. The solid was isolated by filtration, washed with cold methanol and dried *in vacuo.* Subsequent crystallizations of the filtrate were performed, the isolated solids were combined, washed with cold methanol, and dried *in vacuo.* Yield: 14.5 g, 80% Alternatively, the reaction mixture can be concentrated on a rotary evaporator to reveal a colourless product in quantitative yield.
¹H (400 MHz, DMSO-*d₆*) NMR spectrum: 4.50-4.23 (m, 5H), 3.62-3.29 (m, 8H), 2.46-2.15 (overlapped m, 8H), 1.38-1.15 (m, 17H), 0.81 (t, 3H). ¹³C (75 MHz, DMSO-*d₆*) NMR spectrum: 72.05, 71.97, 71.45, 71.40, 70.60, 70.26, 70.19, 70.01, 67.25, 67.14, 64.98, 64.46, 63.52, 63.47, 61.19, 60.54, 43.58, 42.91, 40.43, 35.05, 34.96, 31.32, 29.29, 29.12, 29.07, 29.04, 28.74, 25.25, 25.23, 22.11, 13.96. FT-IR (ATR, cm⁻¹): 3460, 3322, 2956, 2915, 2847, 1454, 1366, 1341, 1251, 1191, 1157, 1133, 1092, 1082, 1040, 9645, 925, 862, 839, 792, 721.

### Example 20: Synthesis of SB-S20 surfactant:

To a 250 mL round-bottom flask was added n-methyl-D-glucamine (10.0 g, 51.2 mmol) and hexadecyl glycidal ether (1 eq, 51.2 mmol, 15.3 g). Methanol (150 mL) was added, and the mixture refluxed for 5 h. After the allotted time, the flask was cooled in a freezer to precipitate out a colourless solid. The solid was isolated by filtration, washed with cold methanol and dried *in vacuo.* Yield: 14.0 g, 55%. Increased yields can be obtained upon successive crystallizations of the filtrate or reducing all volatiles on a rotary evaporator.
¹H (400 MHz, DMSO-*d₆*) NMR spectrum: 4.42 (br s, 5H), 3.60-3.25 (m, 12H), 2.51-2.21 (m, 7H) 1.46 (m, 2H), 1.23 (m, 26H), 0.85 (t, 3H). ¹³C (75 MHz, DMSO-*d₆*) NMR spectrum: 73.55, 73.48, 72.19, 72.08, 71.45, 71.40, 70.59, 70.49, 70.23, 70.17, 70.13, 67.10, 67.05, 63.53, 63.50, 61.70, 61.33, 61.17, 60.65, 43.61, 43.09, 31.35, 29.26, 29.12, 29.09, 29.08, 28.97, 28.78, 25.70, 22.13, 13.91. FT-IR (ATR, cm⁻¹): 3442, 3272, 2912, 2847, 1469, 1347, 1249, 1121, 1100, 1040, 1023, 927, 876, 841, 776, 715.

### Example 21: Polymer synthesis:

### Synthesis of intermediate SMA230ₗ

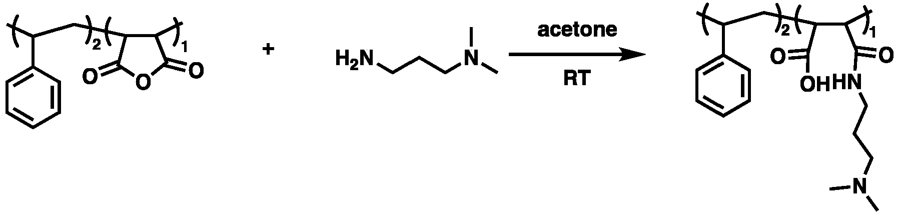

A 1L Erlenmeyer flask was charged with SMA 230 (2:1. 50 g) and acetone (500 mL). The mixture was heated gently using a hot plate and stirred using a magnetic stirrer until a colourless or light-yellow solution was observed. The heating was stopped, and the mixture was allowed to cool to ambient temperature. While stirring, 3-(dimethylamino)-1-propylamine (1.1 eq relative to maleic anhydride, 18.4 g, 22.6 mL) was added dropwise *via* pipette causing a white solid to precipitate. The mixture was allowed to stir for 3 hours before collecting the solid *via* gravity filtration. The white product was washed repeatedly with cold acetone (3 x 25 mL) and dried in a vacuum oven under reduced pressure at 60 °C yielding 62.5 g of product (94%). Characterization by IR spectroscopy shows conversion of the SMA starting material maleic anhydride carbonyl (1770 cm⁻¹) to the desired ring-opened product with carbonyl resonances at 1630 cm⁻¹ and 1552 cm⁻¹.
IR (ATR, cm⁻¹): 3306, 2929, 1699, 1638, 1582, 1560, 1490, 1451, 1379, 1300, 1221, 1155,1028, 760, 697.

### Synthesis of Polymer SMA230_{T-CIAA}

### Chloroacetic Acid-Derivatized Polymers (SMA230_{T-CIAA})

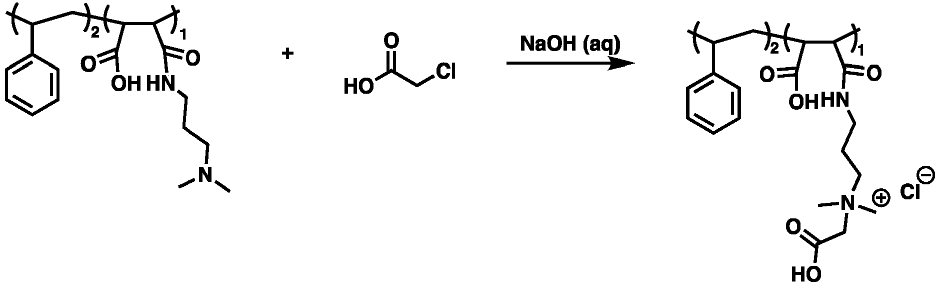

Synthesis of the following product was carried out using a procedure modified from the literature (Tzong-Liu Wang, Hung-Ming Lee, Ping-Lin Kuo, Journal of Applied Polymer Science, Vol 78, 592-602 (2000)).

A 500 mL Erlenmeyer flask was charged with ring-opened SMA-230I (25.0 g) and 100 mL 1M NaOH to bring the pH to ca. 11. The suspension was stirred at ambient temperature using a magnetic stir bar for 1 hour before chloroacetic acid (8.5 g) was added in one portion. The mixture was allowed to stir overnight at room temperature. The next morning, a clear colourless solution was observed. The reaction mixture was frozen and dried using a lyophilizer for 3 days revealing a solid, white product, 20.0 g (74.6%). Reactions conducted at elevated temperatures in organic solvent led to ring-closure, so ensuring low to moderate temperatures and aqueous conditions were used to discourage maleimide formation.
IR (ATR, cm⁻¹): = 3322, 2920, 1666, 1621, 1558, 1450, 1405, 1394, 1152, 895, 710, 699. *T*_{g} = 85.15 °C.

### Synthesis of Polymer SMA230_{S}

### Sultone-Derivitized Polymer (SMA230_{S})

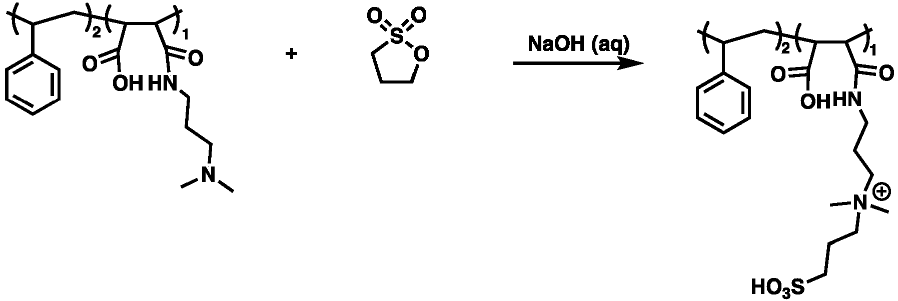

Synthesis of sultone-derivitized amine polymers were conducted using a method modified from the following literature procedure: Chunhau Wang, Chunfeng Ma, Changdao Mu, and Wei Lin, Langmuir, 2014, 30, 12860-12867.

A 500 mL Erlenmeyer flask was charged with intermediate SMA-230I polymer (10 g) and 100 mL DI H₂O. The pH was adjusted to ca. 11 using 1M NaOH to give a total volume of 175 mL. The mixture was let stir for 1 h after which time the majority of polymer dissolved to form a light-yellow suspension. 1,3-propanesultone (1 eq. relative to maleic anhydride comonomer, 4.4 g) was added in one portion and the mixture allowed to stir for 4 days. All polymer dissolved and a light-yellow solution was observed. After the allotted time, the reaction mixture was purified by dialysis using 3,500 g/mol snakeskin dialysis bags over 2 days. The contents of the dialysis bags were frozen and lyophilized to reveal a white solid, 7.8 g, 54%.
IR (ATR, cm⁻¹): 3356, 2922, 1696, 1646, 1569, 1491, 1450, 1394, 1172, 1034, 699.
*T*_{g} = 85.15 °C.

### Synthesis of Polymer SMA230_{T-Protected}

### Protected SMA Polymer (SMA230_{T-Protected})

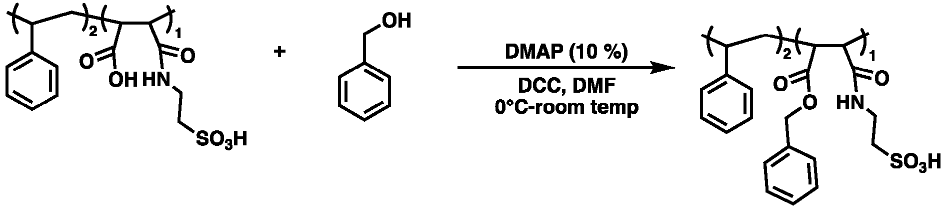

In a 500 mL Erlenmeyer flask, SMA230_{T} (9.8g) was dissolved in 200 mL of hot DMF while stirring using a magnetic stir bar. The light-yellow solution was allowed to cool to ambient temperature and further to 0 °C in an ice bath. 4-Dimethylaminopyridine (10 mol%, 0.30 g) was added to the mixture in one portion and the mixture allowed to stir for 5 minutes. Benzyl alcohol (4 eq relative to functionalized maleic anhydride comonomer, 10.6 g) was added in one portion. The mixture was allowed to stir for 5 minutes before DCC (1 eq, 5.06 g) was added in one portion. The ice bath was removed, and the mixture was stirred overnight at room temperature. The next morning, a white precipitate (DCU) was observed in the flask and removed via vacuum filtration using a medium porosity, glass fritted funnel. The filtrate was added dropwise to a vortex of cold diethyl ether (150 mL) causing a gel-like precipitate to form. This precipitate was isolated *via* gravity filtration and was redissolved in a minimum amount of hot DMF (60 mL) before being re-precipitated using cold diethyl ether (150 mL). The colourless precipitate was stirred vigorously for 1 hour and the white solid precipitate was collected *via* gravity filtration and dried *in vacuo,* 8.3, 67%.
IR (ATR, cm⁻¹): 2924, 1867, 1491, 1437, 1385, 1161, 1053, 1040, 740, 699.

### Example 22: Boron binding and binding isotherm

The binding capacity of a SMA230_{T}-SB-S12 was determined by combining a known amount of NanoNet^{™} solution and boron at pH 9, followed by a filtration of the solution through a Vivaspin centrifuge PES membrane with a 30 kDa MWCO. The boron concentration in the filtrate was measured by an Inductively Coupled Plasma Optical Emission Spectroscopy (ICP-OES). Any boron in the filtrate is considered as unbound boron. Equation 1 is used to calculate the bound boron in the sample. Equation 2 is used to determine mass of boron and Equation 3 is used to determine mass of adsorbent, respectively. With the mass of bound boron and mass of adsorbent, equation 4 is used to calculate the binding capacity. Equation 5 is used to calculate the ratio of total boron to adsorbent in the sample. $Bound Boron \left[ppm\right] = Total Boron \left[ppm\right] - Unbound Boron \left[ppm\right]$ eq. 1 ${m}_{Boron} \left[mg\right] = {C}_{Boron} \left[ppm\right] \times {V}_{Sample} \left[L\right]$ eq. 2 ${m}_{Absorbent \left[g\right]} = {C}_{Absorbent} \left[%\right] \times 10$ eq. 3 $Binding Capacity \left[\frac{mg}{g}\right] = \frac{{m}_{bound boron} \left[mg\right]}{{m}_{Absorbent} \left[g\right]}$ eq. 4 $B : Absorbent Ratio \left[\frac{mg}{g}\right] = \frac{{m}_{total boron} \left[mg\right]}{{m}_{Absorbent} \left[g\right]}$ eq. 5

Utilizing these equations, binding curves were developed. These curves typically fit a logarithmic regression and allow the prediction of the binding capacity at any given boron to adsorbent ratio. Binding capacity may depend on pH, temperature, and salinity of a sample.

Binding isotherms of the NanoNets^{™} were generated in synthetic water matrices and deionized waters containing high (>150 ppm) and low (5 ppm) boron concentrations.

To access the boron removal efficacy of NanoNet^{™} with boron binding surfactant SB-S12, a boron solution containing 5.4 ppm boron was incubated with varying concentrations of adsorbent at 40°C. Boron binding occurred for 5 minutes at pH 9. After equilibration of boron-binding surfactant, the surfactant-boron complex was subsequently removed from solution by ultrafiltration with a PES filter with a pore-size of 30,000 Da. After ultrafiltration any unbound or non-complexed boron remained in the filtrate. The total boron concentration was measured by ICP-OES analysis and the total boron removal per gram of added surfactant (adsorbent) was calculated.

The maximal boron uptake occurred at lower surfactant dosing (0.01% surfactant with high loading capacity of 30.7mg B/g adsorbent). The loading capacity decreased at higher adsorbent concentration. A full boron removal was achieved at highest surfactant dosing (5.28 ppm boron removal at 0.1% surfactant concentration).
The synthetic brine composition was:

| **Salt** | **Amount (mg/L)** |
|---|---|
| NaCl | 2,500 |
| NaHCO₃ | 400 |
| Na₂CO₃ | 400 |
| MgSO₄ | 10 |
| KCl | 70 |
| CaSO₄ 2H₂O | 50 |

### Example 23: Binding isotherm of SMA230_{T}-SB-S12 in brine containing 150 ppm B

To access the boron removal efficacy of NanoNet^{™} with boron binding surfactant SB-S12 a boron solution containing 150 ppm boron was incubated with varying concentrations of adsorbent at 40°C. Boron binding occurred for 5 minutes at pH 9. After equilibration of boron-binding surfactant, the surfactant-boron complex was subsequently removed from solution by ultrafiltration with a PES filter with a pore-size of 30 kDa. After ultrafiltration any unbound or non-complexed boron remained in the filtrate. The total boron concentration was measured by ICP-OES analysis and the total boron removal per gram of added surfactant (adsorbent) was calculated. The theoretical maximum binding isotherm is 28 mgB/g adsorbent.

The maximal boron uptake occurred at lower surfactant dosing (0.08% adsorbent with a binding isotherm of 32.3 mg B/g adsorbent; 0.18% surfactant with high loading capacity of 23.5 mg B/g adsorbent). Larger error bars were due to low volume dosing of adsorbent. The loading capacity decreased at higher adsorbent concentration. Full boron removal was achieved at highest surfactant dosing (148.7 ppm boron removal at 1.76% surfactant concentration).

### Example 24: Binding capacity with different boron to adsorbent ratios

Boron binding occurred for 5 minutes at pH 9 at ambient temperature. After equilibration of boron-binding surfactant, the surfactant-boron complex was subsequently removed from solution by ultrafiltration with a PES filter with 30 kDa MWCO. After ultrafiltration any unbound or non-complexed boron remained in the filtrate. The total boron concentration was measured by ICP-OES analysis and the total boron removal per gram of added surfactant (adsorbent) was calculated. From the binding capacity results, it can be concluded that with increasing boron to adsorbent ratio the binding capacity increases reaching near theoretical maximum binding capacity.

### Example 25: Acid consumption of different polymers

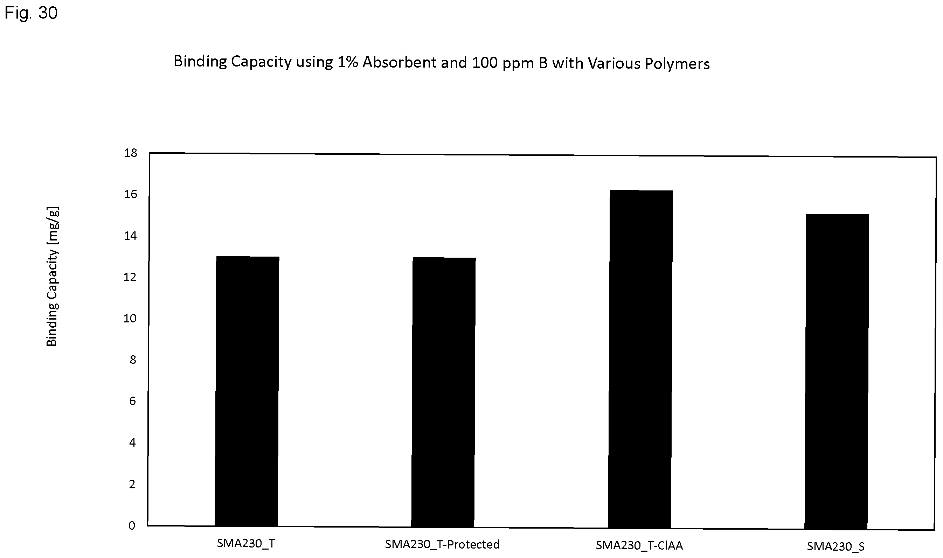

To decrease chemical consumption during the elution and regeneration step, various polymers used in NanoNet^{™} formulation were tested for acid consumption. Figure 30 displays the acid amount consumed by various polymers. A total of 50 microL of 1M HCl solution was titrated into 40 microL of a 0.5% polymer solution until a pH of 2.5 was reached. The pH was determined using a pH probe and a molar ratio of acid consumed per mole of polymer block was calculated. Polymer SMA230s consumed less amount of acid per polymer block (1.25 mol/mol) in comparison to polymer SMA230_{T} (1.55mol/mol). Polymers SMA230 and polymer SMA230_{T-Protected} consumed similar amounts of acid (1.13 mol/mol and 1.19 mol/mol, respectively). This is significant as these polymers require less acid to precipitate out during the elution step and hence reduce chemical consumption during regeneration step, and demonstrate favourable economics.

### Example 26:

To enhance the binding capacity, boron binding surfactant SB-S12 was complexed with different polymers. A boron solution containing 100 ppm boron was incubated with a NanoNet^{™} solution containing 1% adsorbent. Boron binding occurred for 5 minutes at pH 9 at ambient temperature. After equilibration of boron-binding surfactant, the surfactant-boron complex was subsequently removed from solution by ultrafiltration with a 30 kDa PES MWCO filter. After ultrafiltration any unbound or non-complexed boron remained in the filtrate. The total boron concentration was measured by ICP-OES analysis and the total boron removal per gram of added surfactant (adsorbent) was calculated. The theoretical maximum binding isotherm is 28 mg B/g adsorbent.

The maximal boron uptake occurred with NanoNet SMA230_{CIAA}-SB-S12 with a binding capacity of 16.3mg B/g adsorbent, followed by SMA230_{S}-SB-S12 (binding capacity of 15.2mgB/g), SMA230_{T-Protected}-SB-S12 (binding capacity of 13 mg B/g), and SMA230_{T}-SB-S12 (binding capacity of 13 mg B/g).

### Example 27: Bench Scale Regeneration of NanoNets^{™} - Multi-step regeneration process with NN_{230T}-SB-S12.

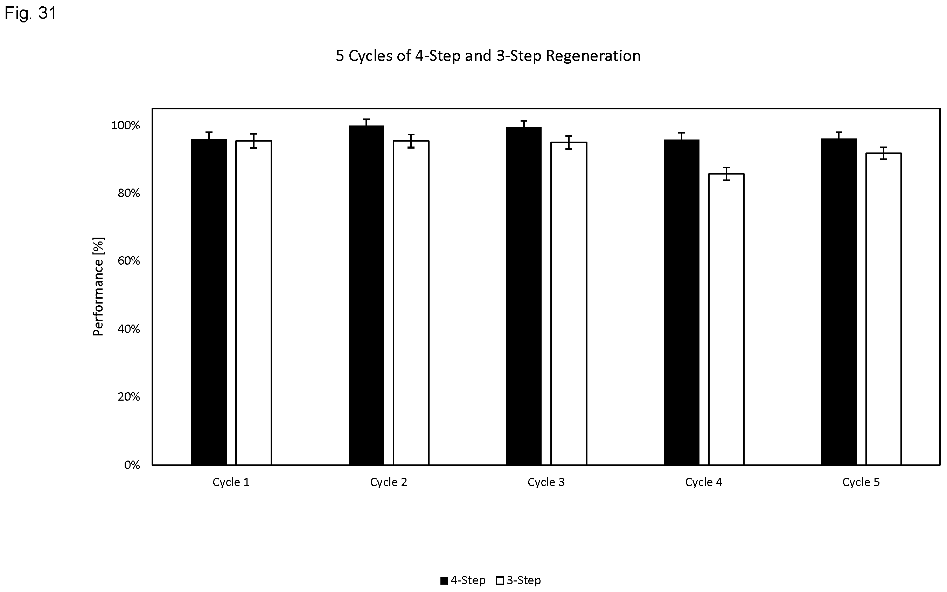

The 3 step-and 4-Step regeneration processes were developed as a method to regenerate a NanoNet^{™} while minimizing NanoNet^{™} chemical loss during bench scale filtration. This process takes advantage of rapid self-assembly of micelles through boron binding surfactant SB-S12 and polymer SMA230_{T} complexation. The 4 steps refer to (i) precipitation of the NanoNet^{™} during elution, (ii) neutralization of the supernatant, (iii) NanoNet^{™} addition to the supernatant and (iv) filtration of the supernatant. To test the efficacy of regeneration and reduce chemical attrition and acid consumption during the regeneration process, surfactant SB-S12 was measured for boron binding removal after multiple cycles of acid elution in the presence of stabilizing polymer (Figure 31) over 5 regeneration cycles. This regeneration procedure was performed with SMA230_{T}-SB-S12 in water samples containing 200 ppm boron. The NanoNet SMA230_{T}-SB-S12 was precipitated by addition of 0.1M HCl during the elution step. The acidic supernatant was decanted, and the precipitate was rinsed with dilute HCl solution to elute residual boron. The acidic solution from the elution and rinse cycles were combined and an aliquot was used for boron concentration analysis via ICP-OES. The acidic solution was neutralized with 1M NaOH solution. To the clear solution a calculated volume of SMA230_{T}-SB-S12 was added and filtered through a Vivaspin filter with a 5 kDa PES MWCO.

It was found that after the first cycle, the surfactant polymer complex was able to remove 95% of the boron from solution equally for the 3-step and 4-step regeneration process and was able to maintain 100-99% removal over the first 3 cycles, and 96% boron removal in cycles 4 and 5 during the 4-step regeneration. The 3 step regeneration process demonstrated a 95% boron removal for the first 3 cycles and >85% boron removal for cycles 4 and 5. (Figure 31).

### Example 28: Enhanced Ultrafiltration Process - Simplified boron binding process with two stacked filters.

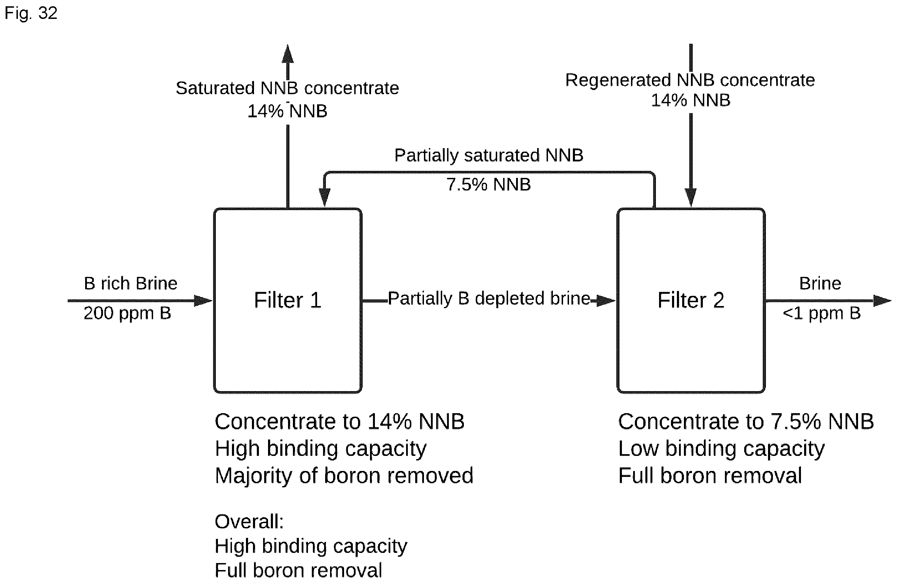

Isotherms may be used to maximize binding of element of interest in a batch mode with 1 filter and stacked filters of 2, 3, 4, 5, 6, 7, 8, 9, or 10 filters, respectively. An example of two stacked filters is illustrated in the Figure 32 to optimize the effective binding capacity and demonstrate high (>99%) boron removal.

In the first binding event, boron-containing influent and partially saturated NanoNet^{™} solution are combined and filtered through filter 1. Filter 1 contains a flat-sheet membrane with a large membrane pore size. The membrane pore size can range from 50 kDa to 100 kDa MWCO. The NanoNet^{™} is concentrated by a concentration factor of 14. Filtration step 1 demonstrates a high boron to adsorbent ratio and a high binding capacity. The partially depleted boron-containing water from the first binding event along with regenerated NanoNet^{™} pass-through a second filter. This event results in a lower binding capacity. Filter 2 has a tight pore size of 10 kDa MWCO to 30 kDa MWCO. The NanoNet^{™} solution is further concentrated by a concentration factor of 7.5. By stacking filters with different membrane pore size attrition of polymer-surfactant complex will become negligible.

The filtrate from the second binding step is depleted of boron, while the retentate containing partially saturated NanoNet^{™} is combined with incoming boron-rich influent.

The first few cycles of the process involve certain boron accumulation. To determine the NanoNet^{™} dosing requirements for a given influent, a binding curve is used to model the cycles until the system reaches steady state. The NanoNet^{™} dosing is adjusted until the model shows that the filtrate of the second binding event contains <1 ppm boron.

The concentrated NanoNet^{™} solution is then regenerated. The *in-situ* regeneration of the NanoNet^{™} chemical leads to a minimal waste stream of 9%-11.5%. The waste stream is neutralized with caustic and becomes non-hazardous waste in comparison to IEX that generates an acidic waste stream of >25%.

### Example 29: Attrition During Bench Scale Ultrafiltration - Effect of attrition on retention of NanoNet^{™} scaffold in enhanced ultrafiltration:

Micellar and polymer enhanced ultrafiltration are current methods used in water treatment. However, these methods are prone to attrition of surfactant and polymer components. The surfactant micelle formation is directed by the critical micelle concentration of the surfactant. Below this concentration, surfactants exist as free monomers and will permeate through an ultrafiltration membrane. Polymer surfactant complexes described here form at lower concentrations than surfactant micelles alone. By substantially decreasing the aggregation concentration of the surfactant micelle, less monomer will be available to permeate the membrane. To investigate the attrition of NanoNet^{™} surfactant and polymer components in enhanced ultrafiltration, the polymer attrition was measured by HPLC. Total organic carbon (TOC) analysis was utilized to measure the total concentration of NanoNet^{™} chemical.

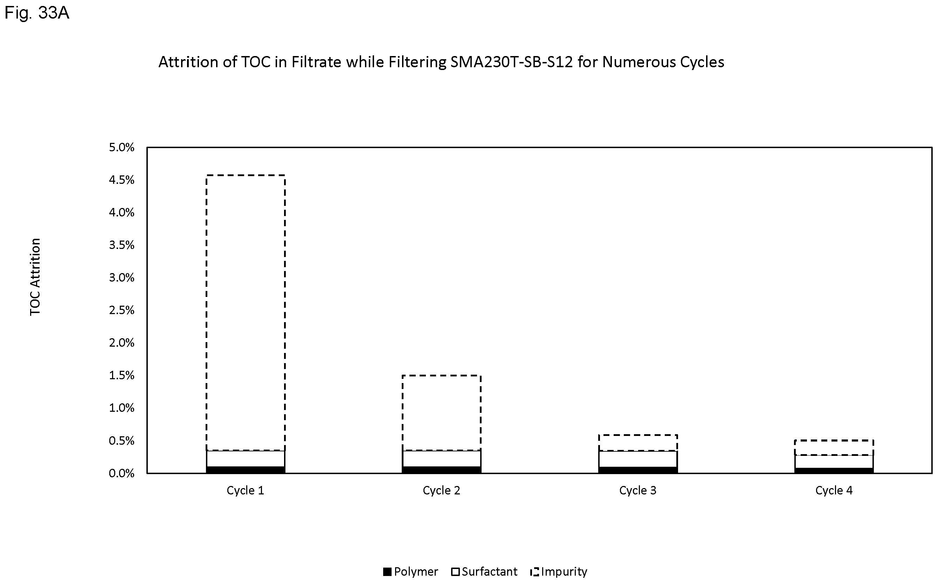

A NanoNet solution containing 5% SB-S12 and 7.5% SMA130_{T} solution was prepared and concentrated to 10% and 15%, respectively, through a 30 kDa MWCO PES membrane filter at 60 PSI. The retentate was subsequently re-diluted to the initial concentration and filtered again. This process was repeated 4 times and the concentration of SB-S12 in the filtrate determined (Figure 33A, unfilled square). The first and second filtration cycles were found to demonstrate significant attrition of an impurity found in the NanoNet^{™} scaffold, after which attrition decreased to nominal amount (Figure 33A, dashed line). In contrast, the polymer and surfactant components of NanoNet^{™} demonstrated nominal attrition immediately in cycle 1 (Figure 33A, filled black square, polymer; unfilled black square, surfactant). From this result it suggests that formation of polymer surfactant complexes may be utilized to prevent attrition in micellar enhanced ultrafiltration.

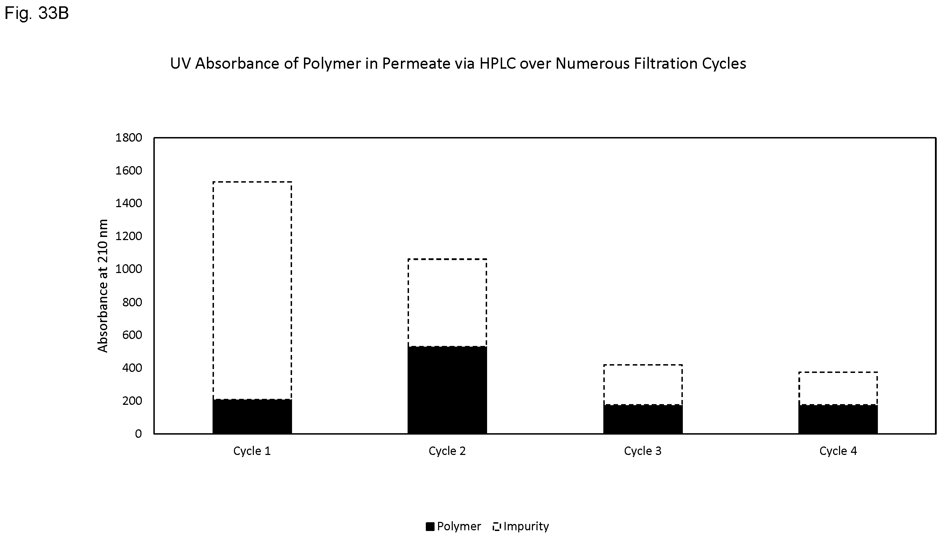

The experiment was repeated with polymer alone, and the concentrations of stabilizing polymer were examined in the filtrate (Figure 33B). It was found that a constant amount of polymer was able to permeate the membrane upon cycle 1 (Figure 34B). However, the polymer concentration in the permeate decreased with subsequent filtration cycles.

Although various embodiments of the invention are disclosed herein, many adaptations and modifications may be made within the scope of the invention in accordance with the common general knowledge of those skilled in this art. Such modifications include the substitution of known equivalents for any aspect of the invention to achieve the same result in substantially the same way. Numeric ranges are inclusive of the numbers defining the range. Furthermore, numeric ranges are provided so that the range of values is recited in addition to the individual values within the recited range being specifically recited in the absence of the range. The word "comprising" is used herein as an open-ended term, substantially equivalent to the phrase "including, but not limited to", and the word "comprises" has a corresponding meaning. As used herein, the singular forms "a", "an" and "the" include plural references unless the context clearly dictates otherwise. Thus, for example, reference to "a thing" includes more than one such thing. Citation of references herein is not an admission that such references are prior art to the present invention. Furthermore, material appearing in the background section of the specification is not an admission that such material is prior art to the invention. Any priority document(s) are incorporated herein by reference as if each individual priority document were specifically and individually indicated to be incorporated by reference herein and as though fully set forth herein. The invention includes all embodiments and variations substantially as hereinbefore described and with reference to the examples and drawings.

## Claims

1. A composition comprising:
(a) compound of formula (I): 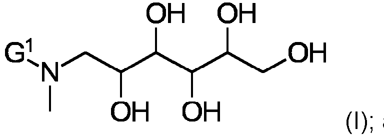 and
(b) a compound of formula (II): 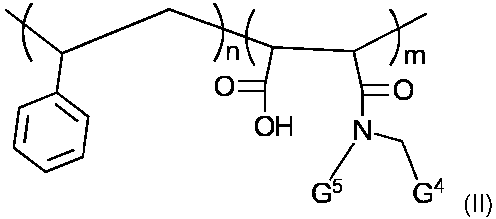
wherein
G¹ is: 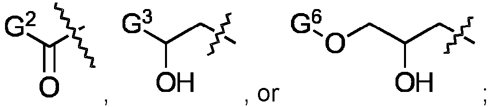
G², G³, and G⁶are each independently a straight, saturated, unsubstituted C₅ to C₂₀ alkyl; a branched, saturated, unsubstituted C₅ to C₂₀ alkyl; a straight, saturated, substituted C₅ to C₂₀ alkyl; a branched, saturated, substituted C₅ to C₂₀ alkyl; a straight, unsaturated, unsubstituted C₅ to C₂₀ alkyl; a branched, unsaturated, unsubstituted C₅ to C₂₀ alkyl; a straight, unsaturated, substituted C₅ to C₂₀ alkyl; or a branched, unsaturated, substituted C₅ to C₂₀ alkyl;
G⁴ is 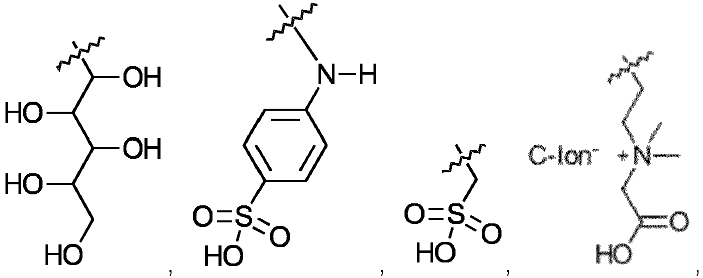 or 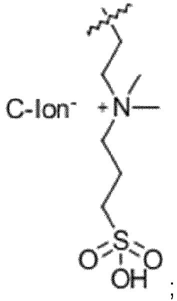
G⁵ is H, a straight, saturated, unsubstituted C₁ to C₆ alkyl, or 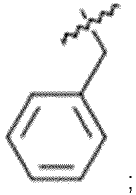 and
n+m is in the range of from 20 to 600 and the ratio of n:m is in the range of from 1:1 to 3:1.

2. The composition of claim 1 wherein G⁵ is H or a straight, saturated, unsubstituted C₁ to C₆ alkyl.

3. The composition of claim 1 or 2 wherein G⁴ is

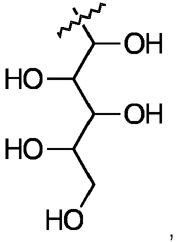

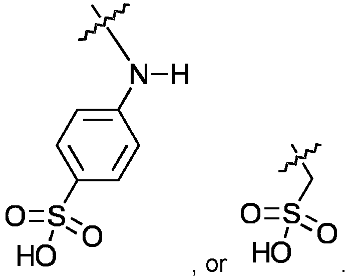

4. The composition of any one of claims 1 to 3 wherein G¹ is

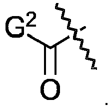

5. The composition of claim 4 wherein G² is a C₅ to C₂₀ straight, saturated, unsubstituted alkyl, or a C₅ to C₂₀ straight, unsaturated, unsubstituted alkyl; optionally wherein G² is a C₈ to C₁₈ straight, saturated, unsubstituted alkyl, or a C₈ to C₁₈ straight, unsaturated, unsubstituted alkyl; optionally wherein G² is a C₉ to C₁₂ straight, saturated, unsubstituted alkyl, or a C₉ to C₁₂ straight, unsaturated, unsubstituted alkyl; optionally wherein G² is a C₉ straight, saturated, unsubstituted alkyl, or a C₉ straight, unsaturated, unsubstituted alkyl; optionally wherein G² is a C₁₂ straight, saturated, unsubstituted alkyl, or a C₁₂ straight, unsaturated, unsubstituted alkyl.

6. The composition of any one of claims 1 to 3 wherein G¹ is

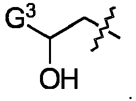

7. The composition of claim 6 wherein G³ is a C₅ to C₂₀ straight, saturated, unsubstituted alkyl, or a C₅ to C₂₀ straight, unsaturated, unsubstituted alkyl; optionally wherein G³ is a C₈ to C₁₈ straight, saturated, unsubstituted alkyl, or a C₈ to C₁₈ straight, unsaturated, unsubstituted alkyl; optionally wherein G³ is a C₉ to C₁₂ straight, saturated, unsubstituted alkyl, or a C₉ to C₁₂ straight, unsaturated, unsubstituted alkyl; optionally wherein G³ is a C₉ straight, saturated, unsubstituted alkyl, or a C₉ straight, unsaturated, unsubstituted alkyl; optionally wherein G³ is a C₁₂ straight, saturated, unsubstituted alkyl, or a C₁₂ straight, unsaturated, unsubstituted alkyl.

8. The composition of any one of claims 1 to 3 wherein G¹ is

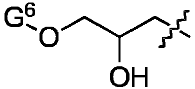

9. The composition of claim 8 wherein G⁶ is a C₅ to C₂₀ straight, saturated, unsubstituted alkyl, or a C₅ to C₂₀ straight, unsaturated, unsubstituted alkyl; optionally wherein G⁶ is a C₈ to C₁₈ straight, saturated, unsubstituted alkyl, or a C₈ to C₁₈ straight, unsaturated, unsubstituted alkyl; optionally wherein G⁶ is a C₉ to C₁₂ straight, saturated, unsubstituted alkyl, or a C₉ to C₁₆ straight, unsaturated, unsubstituted alkyl; optionally wherein G⁶ is a C₁₆ straight, saturated, unsubstituted alkyl, or a C₁₆ straight, unsaturated, unsubstituted alkyl; optionally wherein G⁶ is a C₁₂ straight, saturated, unsubstituted alkyl, or a C₁₂ straight, unsaturated, unsubstituted alkyl.

10. The composition of any one of claims 1 to 9 wherein G⁴ is

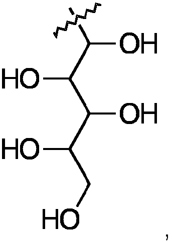

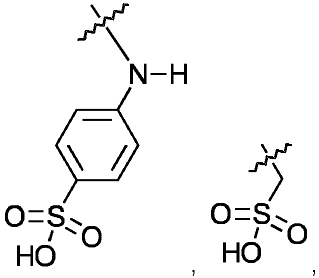

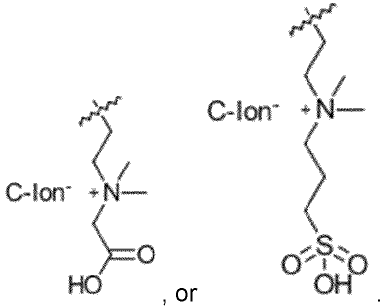

11. The composition of claim 10 wherein G⁴ is 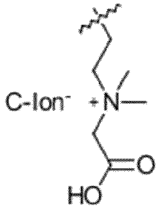 or 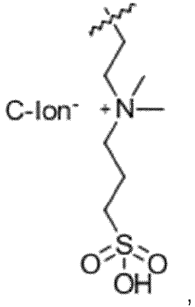 wherein the counter ion is a halogen; optionally wherein the counter ion is chloride.

12. The composition of any one of claims 1 to 11 wherein G⁵ is H, or a straight, saturated, unsubstituted C₁ to C₆ alkyl; optionally wherein G⁵ is CH₃, or

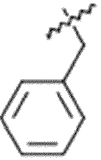

13. The composition of any one of claims 1 to 12 wherein n+m is in the range of from 100 to 600; optionally wherein n+m is in the range of from 200 to 600; optionally wherein n+m is in the range of from 300 to 600.

14. The composition of any one of claims 1 to 13 wherein the ratio of n:m is 1:1, 2:1, or 3:1.

15. The composition of any one of claims 1 to 14, wherein the wt% ratio of the compound of formula (I):the compound of formula (II) is in the range of 0.5:1 to 2:1, is 0.5:1, is 1:1, or is 2:1.

16. A composition comprising:
a) 6-((2-hydroxydodecyl)(methyl)amino)hexane-1,2,3,4,5-pentanol; and
b) Poly(styrene)-*co*-(4-oxo-4-((2-sulfoethyl)amino)but-2-enoic acid,
in a wt% ratio of 1.5:1.

## Patentansprüche

1. Eine Zusammensetzung, umfassend:
(a) eine Verbindung der Formel (I): 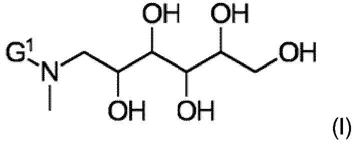 und
(b) eine Verbindung der Formel (II): 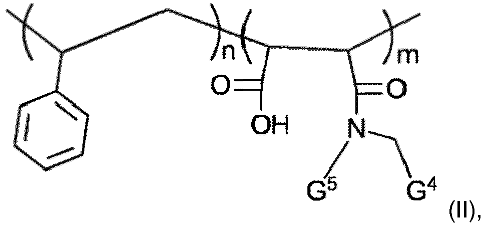
wobei
G¹ ist: 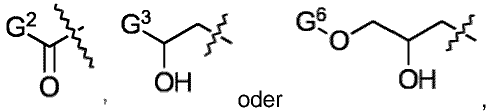
G², G³ und G⁶ jeweils unabhängig ein gerades, gesättigtes, unsubstituiertes C₅- bis C₂₀-Alkyl; ein verzweigtes, gesättigtes, unsubstituiertes C₅- bis C₂₀-Alkyl; ein gerades, gesättigtes, substituiertes C₅- bis C₂₀-Alkyl; ein verzweigtes, gesättigtes, substituiertes C₅- bis C₂₀-Alkyl; ein gerades, ungesättigtes, unsubstituiertes C₅- bis C₂₀-Alkyl; ein verzweigtes, ungesättigtes, unsubstituiertes C₅- bis C₂₀-Alkyl; ein gerades, ungesättigtes, substituiertes C₅- bis C₂₀-Alkyl; oder ein verzweigtes, ungesättigtes, substituiertes C₅- bis C₂₀-Alkyl sind;
G⁴ 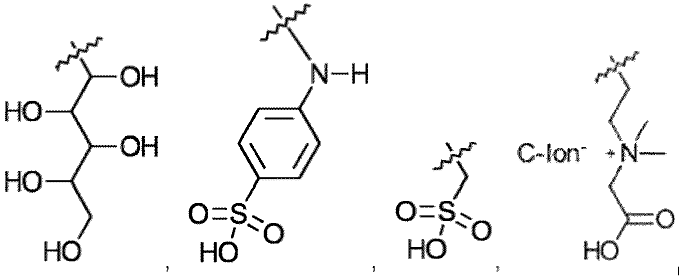 oder 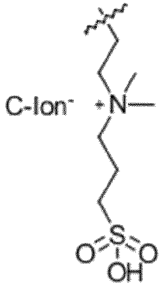 ist,
G⁵ H, ein gerades, gesättigtes, unsubstituiertes C₁- bis C₆-Alkyl, oder 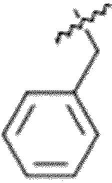 ist, und
n+m im Bereich von 20 bis 600 liegt und das Verhältnis von n:m im Bereich von 1:1 bis 3:1 liegt.

2. Die Zusammensetzung nach Anspruch 1, wobei G⁵ H oder ein gerades, gesättigtes, unsubstituiertes C₁- bis C₆-Alkyl ist.

3. Die Zusammensetzung nach Anspruch 1 oder 2, wobei G⁴ 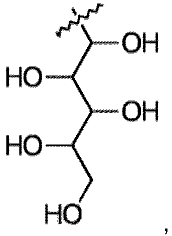 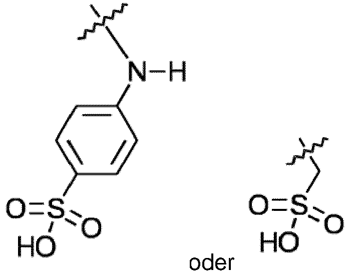 ist.

4. Die Zusammensetzung nach einem der Ansprüche 1 bis 3, wobei G¹ 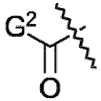 ist.

5. Die Zusammensetzung nach Anspruch 4, wobei G² ein gerades, gesättigtes, unsubstituiertes C₅- bis C₂₀-Alkyl oder ein gerades, ungesättigtes, unsubstituiertes C₅- bis C₂₀-Alkyl ist, gegebenenfalls wobei G² ein gerades, gesättigtes, unsubstituiertes C₈- bis C₁₈-Alkyl oder ein gerades, ungesättigtes, unsubstituiertes C₈- bis C₁₈-Alkyl ist, gegebenenfalls wobei G² ein gerades, gesättigtes, unsubstituiertes C₉- bis C₁₂- Alkyl oder ein gerades, ungesättigtes, unsubstituiertes C₉- bis C₁₂-Alkyl ist, gegebenenfalls wobei G² ein gerades, gesättigtes, unsubstituiertes C₉-Alkyl oder ein gerades, ungesättigtes, unsubstituiertes C₉-Alkyl ist, gegebenenfalls wobei G² ein gerades, gesättigtes, unsubstituiertes C₁₂-Alkyl oder ein gerades, ungesättigtes, unsubstituiertes C₁₂-Alkyl ist.

6. Die Zusammensetzung nach einem der Ansprüche 1 bis 3, wobei G¹ 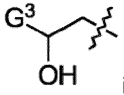 ist.

7. Die Zusammensetzung nach Anspruch 6, wobei G³ ein gerades, gesättigtes, unsubstituiertes C₅- bis C₂₀-Alkyl oder ein gerades, ungesättigtes, unsubstituiertes C₅- bis C₂₀-Alkyl ist, gegebenenfalls wobei G³ ein gerades, gesättigtes, unsubstituiertes C₈- bis C₁₈-Alkyl oder ein gerades, ungesättigtes, unsubstituiertes C₈- bis C₁₈-Alkyl ist, gegebenenfalls wobei G³ ein gerades, gesättigtes, unsubstituiertes C₉- bis C₁₂- Alkyl oder ein gerades, ungesättigtes, unsubstituiertes C₉- bis C₁₂-Alkyl ist, gegebenenfalls wobei G³ ein gerades, gesättigtes, unsubstituiertes C₉-Alkyl oder ein gerades, ungesättigtes, unsubstituiertes C₉-Alkyl ist, gegebenenfalls wobei G³ ein gerades, gesättigtes, unsubstituiertes C₁₂-Alkyl oder ein gerades, ungesättigtes, unsubstituiertes C₁₂-Alkyl ist.

8. Die Zusammensetzung nach einem der Ansprüche 1 bis 3, wobei G¹ 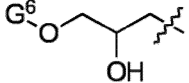 ist.

9. Die Zusammensetzung nach Anspruch 8, wobei G⁶ ein gerades, gesättigtes, unsubstituiertes C₅- bis C₂₀-Alkyl oder ein gerades, ungesättigtes, unsubstituiertes C₅- bis C₂₀-Alkyl ist, gegebenenfalls wobei G⁶ ein gerades, gesättigtes, unsubstituiertes C₈- bis C₁₈-Alkyl oder ein gerades, ungesättigtes, unsubstituiertes C₈- bis C₁₈-Alkyl ist, gegebenenfalls wobei G⁶ ein gerades, gesättigtes, unsubstituiertes C₉- bis C₁₂- Alkyl oder ein gerades, ungesättigtes, unsubstituiertes C₉- bis C₁₆-Alkyl ist, gegebenenfalls wobei G⁶ ein gerades, gesättigtes, unsubstituiertes C₁₆-Alkyl oder ein gerades, ungesättigtes, unsubstituiertes C₁₆-Alkyl ist, gegebenenfalls wobei G⁶ ein gerades, gesättigtes, unsubstituiertes C₁₂-Alkyl oder ein gerades, ungesättigtes, unsubstituiertes C₁₂-Alkyl ist.

10. Die Zusammensetzung nach einem der Ansprüche 1 bis 9, wobei G⁴ 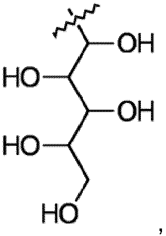 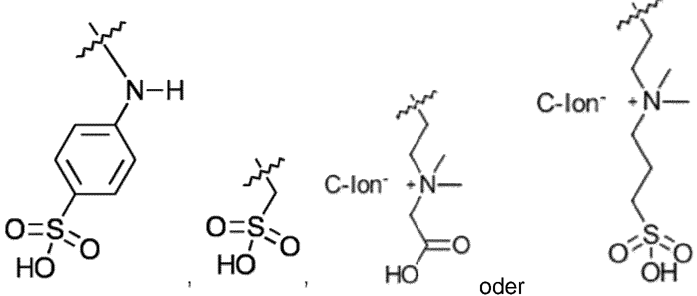 ist.

11. Die Zusammensetzung nach Anspruch 10, wobei G⁴ 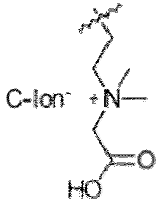 oder 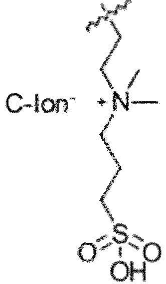 ist, wobei das Gegenion ein Halogen ist, gegebenenfalls wobei das Gegenion Chlorid ist.

12. Die Zusammensetzung nach einem der Ansprüche 1 bis 11, wobei G⁵ H oder ein gerades, gesättigtes, unsubstituiertes C₁- bis C₆-Alkyl ist, gegebenenfalls wobei G⁵ CH₃ oder 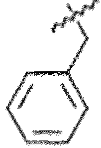 ist.

13. Die Zusammensetzung nach einem der Ansprüche 1 bis 12, wobei n+m im Bereich von 100 bis 600 liegt, gegebenenfalls wobei n+m im Bereich von 200 bis 600 liegt, gegebenenfalls wobei n+m im Bereich von 300 bis 600 liegt.

14. Die Zusammensetzung nach einem der Ansprüche 1 bis 13, wobei das Verhältnis von n:m 1:1, 2:1 oder 3:1 beträgt.

15. Die Zusammensetzung nach einem der Ansprüche 1 bis 14, wobei das Gew.-%-Verhältnis der Verbindung der Formel (I) zu der Verbindung der Formel (II) im Bereich von 0,5:1 bis 2:1 liegt, 0,5:1 beträgt, 1:1 beträgt oder 2:1 beträgt.

16. Eine Zusammensetzung, umfassend:
a) 6-((2-Hydroxydodecyl)(methyl)amino)hexan-1,2,3,4,5-pentanol und
b) Poly(styrol)-*co*-(4-Oxo-4-((2-sulfoethyl)amino)but-2-ensäure in einem Gew.-%-Verhältnis von 1,5:1.

## Revendications

1. Composition, comprenant :
(a) un composé de formule (I) : 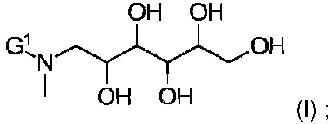 et
(b) un composé de formule (II) : 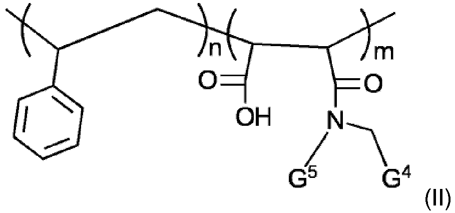
dans laquelle
G¹ représente : 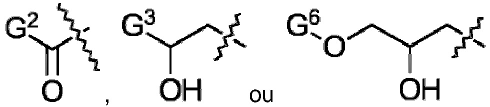
G², G³ et G⁶ représentent chacun, indépendamment, un alkyle en C₅ à C₂₀ linéaire, saturé et non substitué ; un alkyle en C₅ à C₂₀ ramifié, saturé et non substitué ; un alkyle en C₅ à C₂₀ linéaire, saturé et substitué ; un alkyle en C₅ à C₂₀ ramifié, saturé et substitué ; un alkyle en C₅ à C₂₀ linéaire, insaturé et non substitué ; un alkyle en C₅ à C₂₀ ramifié, insaturé et non substitué ; un alkyle en C₅ à C₂₀ linéaire, insaturé et substitué ; ou un alkyle en C₅ à C₂₀ ramifié, insaturé et substitué ;
G⁴ représente 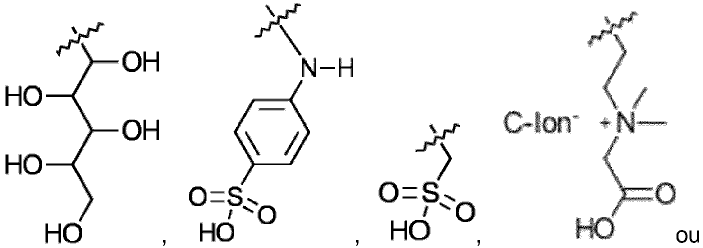 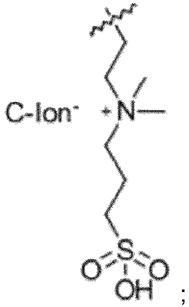
G⁵ représente H, un alkyle en C₁ à C₆ linéaire, saturé et non substitué ou 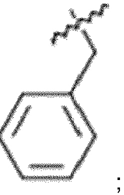 et
m+n est dans la plage allant de 20 à 600, et le rapport n:m est dans la plage allant de 1:1 à 3:1.

2. Composition selon la revendication 1, dans laquelle G⁵ représente H ou un alkyle en C₁ à C₆ linéaire, saturé et non substitué.

3. Composition selon la revendication 1 ou 2, dans laquelle G⁴ représente

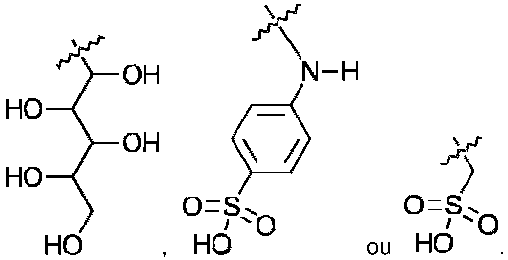

4. Composition selon l'une quelconque des revendications 1 à 3, dans laquelle G¹ représente

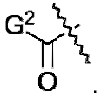

5. Composition selon la revendication 4, dans laquelle G² représente un alkyle en C₅ à C₂ linéaire, saturé et non substitué ou un alkyle en C₅ à C₂₀ linéaire, insaturé et non substitué ; facultativement, dans laquelle G² représente un alkyle en C₈ à C₁₈ linéaire, saturé et non substitué ou un alkyle en C₈ à C₁₈ linéaire, insaturé et non substitué ; facultativement, dans laquelle G² représente un alkyle en C₉ à C₁₂ linéaire, saturé et non substitué ou un alkyle en C₉ à C₁₂ linéaire, insaturé et non substitué ; facultativement, dans laquelle G² représente un alkyle en C₉ linéaire, saturé et non substitué ou un alkyle en C₉ linéaire, insaturé et non substitué ; facultativement, dans laquelle G² représente un alkyle en C₁₂ linéaire, saturé et non substitué ou un alkyle en C₁₂ linéaire, insaturé et non substitué.

6. Composition selon l'une quelconque des revendications 1 à 3, dans laquelle G¹ représente

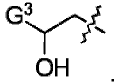

7. Composition selon la revendication 6, dans laquelle G³ représente un alkyle en C₅ à C₂₀ linéaire, saturé et non substitué ou un alkyle en C₅ à C₂₀ linéaire, insaturé et non substitué ; facultativement, dans laquelle G³ représente un alkyle en C₈ à C₁₈ linéaire, saturé et non substitué ou un alkyle en C₈ à C₁₈ linéaire, insaturé et non substitué ; facultativement, dans laquelle G³ représente un alkyle en C₉ à C₁₂ linéaire, saturé et non substitué ou un alkyle en C₉ à C₁₂ linéaire, insaturé et non substitué ; facultativement, dans laquelle G³ représente un alkyle en C₉ linéaire, saturé et non substitué ou un alkyle en C₉ linéaire, insaturé et non substitué ; facultativement, dans laquelle G³ représente un alkyle en C₁₂ linéaire, saturé et non substitué ou un alkyle en C₁₂ linéaire, insaturé et non substitué.

8. Composition selon l'une quelconque des revendications 1 à 3, dans laquelle G¹ représente

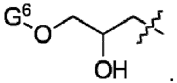

9. Composition selon la revendication 8, dans laquelle G⁶ représente un alkyle en C₅ à C₂₀ linéaire, saturé et non substitué ou un alkyle en C₅ à C₂₀ linéaire, insaturé et non substitué ; facultativement, dans laquelle G⁶ représente un alkyle en C₈ à C₁₈ linéaire, saturé et non substitué ou un alkyle en C₈ à C₁₈ linéaire, insaturé et non substitué ; facultativement, dans laquelle G⁶ représente un alkyle en C₉ à C₁₂ linéaire, saturé et non substitué ou un alkyle en C₉ à C₁₂ linéaire, insaturé et non substitué ; facultativement, dans laquelle G⁶ représente un alkyle en C₁₆ linéaire, saturé et non substitué ou un alkyle en C₁₆ linéaire, insaturé et non substitué ; facultativement, dans laquelle G⁶ représente un alkyle en C₁₂ linéaire, saturé et non substitué ou un alkyle en C₁₂ linéaire, insaturé et non substitué.

10. Composition selon l'une quelconque des revendications 1 à 9, dans laquelle G⁴ représente 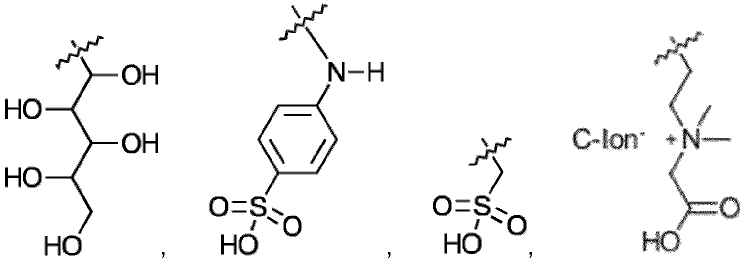 ou

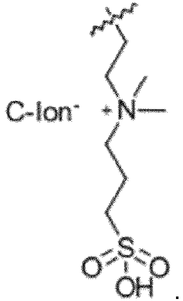

11. Composition selon la revendication 10, dans laquelle G⁴ représente 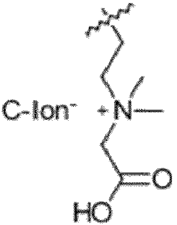 ou 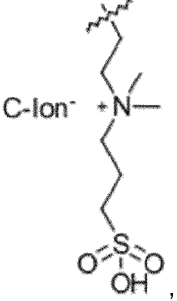 le contre-ion étant un halogène ; facultativement, le contre-ion étant un chlorure.

12. Composition selon l'une quelconque des revendications 1 à 11, dans laquelle G⁵ représente H ou un alkyle en C₁ à C₆ linéaire, saturé et non substitué ; facultativement, dans laquelle G⁵ représente CH₃ ou

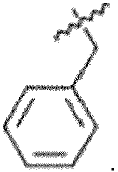

13. Composition selon l'une quelconque des revendications 1 à 12, dans laquelle m+n est dans la plage allant de 100 à 600 ; facultativement, dans laquelle m+n est dans la plage allant de 200 à 600 ; facultativement, dans laquelle m+n est dans la plage allant de 300 à 600.

14. Composition selon l'une quelconque des revendications 1 à 13, dans laquelle le rapport n:m est égal à 1:1, 2:1 ou 3:1.

15. Composition selon l'une quelconque des revendications 1 à 14, dans laquelle le rapport en % en poids du composé de formule (I) au composé de formule (II) est dans la plage allant de 0,5:1 à 2:1, est égal à 0,5:1, est égal à 1:1 ou est égal à 2:1.

16. Composition, comprenant :
(a) du 6-((2-hydroxydodécyl)(méthyl)amino)hexane-1,2,3,4,5-pentanol ; et
(b) de l'acide poly(styrène)-*co*-(4-oxo-4-((2-sulfoéthyl)amino)but-2-énoïque,
en un rapport en % en poids de 1,5:1.
